# EUROPEAN PATENT APPLICATION

(11) **EP 4 835 823 A1**
(43) Date of publication of application: **04.11.2026**
(21) Application number: 24912773.9
(22) Date of filing: 24.12.2024
(51) Int. Cl.: G06T 9/40

(54) **ENCODING METHOD, DECODING METHOD, ENCODING DEVICE, AND DECODING DEVICE**

(30) Priority: 27.12.2023 US 202363615046 P
(71) Applicant: Panasonic Intellectual Property Corporation of America, Torrance, CA 90504 (US)
(72) Inventor: SUGIO, Toshiyasu, Kadoma-shi, Osaka 571-0057 (JP); IGUCHI, Noritaka, Kadoma-shi, Osaka 571-0057 (JP); NISHI, Takahiro, Kadoma-shi, Osaka 571-0057 (JP); ITO, Atsushi, Kadoma-shi, Osaka 571-0057 (JP); LIM, Chong Soon, Singapore 469332 (SG); WU, Zheng, Singapore 469332 (SG); TEO, Han Boon, Singapore 469332 (SG); LOI, Keng Liang, Singapore 469332 (SG); DUMANOV, Farman, Singapore 469332 (SG); YADAV, Praveen Kumar, Singapore 469332 (SG)
(74) Representative: Grünecker Patent- und Rechtsanwälte PartG mbB
(86) International application number: PCT/JP2024/045580
(87) International publication number: WO 2025/142886

(57) **Abstract**

An encoding method includes: encoding a displacement vector as a sample of a rectangular region in a picture (S1351); and generating a bitstream including the sample encoded and a location information item indicating a location of the rectangular region in the picture (S1352). The location information item is associated with a layer corresponding to the rectangular region.

## Description

### [Technical Field]

The present disclosure relates to, for example, an encoding method.

### [Background Art]

Patent Literature (PTL) 1 proposes a method and a device for encoding and decoding three-dimensional mesh data.

### [Citation List]

### [Patent Literature]

[PTL 1] Japanese Unexamined Patent Application Publication No. 2006-187015

### [Summary of Invention]

### [Technical Problem]

There is a demand for further improvement in an encoding or decoding process related to displacement vectors. An object of the present disclosure is to improve the encoding or decoding process related to displacement vectors.

### [Solution to Problem]

An encoding method according to one aspect of the present disclosure is an encoding method that is performed by an encoding device. The encoding method includes: encoding a displacement vector as a sample of a rectangular region in a picture; and generating a bitstream including the sample encoded and a location information item indicating a location of the rectangular region in the picture, in which the location information item is associated with a layer corresponding to the rectangular region.

A decoding method according to one aspect of the present disclosure is a decoding method that is performed by a decoding device. The decoding method includes: obtaining a bitstream; obtaining, from the bitstream, a location information item indicating a location of a rectangular region in a picture; and decoding a displacement vector represented by a sample of the rectangular region located by the location information item in the picture, in which the location information item is associated with a layer corresponding to the rectangular region.

Note that these general or specific aspects may be implemented using a system, a device, an integrated circuit, a computer program, or a computer-readable recording medium such as a CD-ROM, or any combination of systems, devices, integrated circuits, computer programs, and recording media.

### [Advantageous Effects of Invention]

The present disclosure can contribute toward improving encoding processing related to displacement vectors and the like.

### [Brief Description of Drawings]

[FIG. 1]

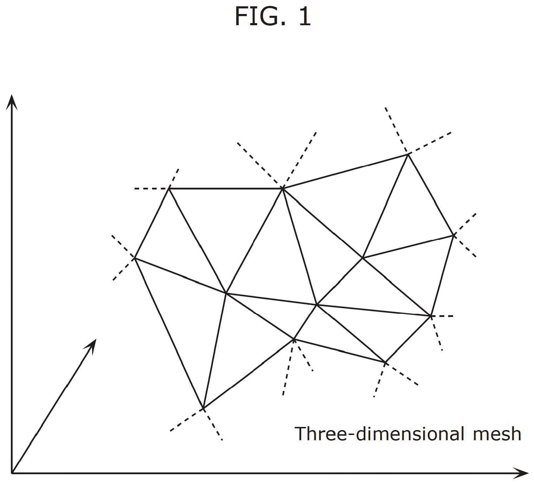

   FIG. 1 is a conceptual diagram illustrating a three-dimensional mesh according to an embodiment.
[FIG. 2]

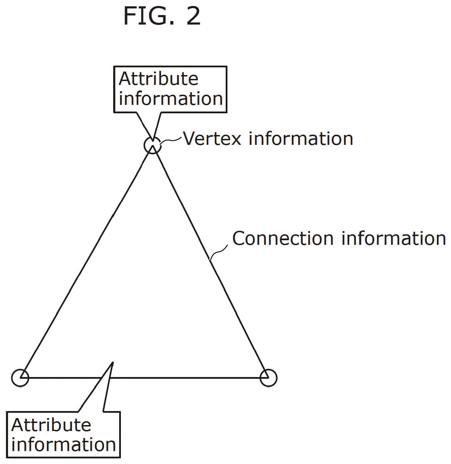

   FIG. 2 is a conceptual diagram illustrating basic elements of a three-dimensional mesh according to the embodiment.
[FIG. 3]

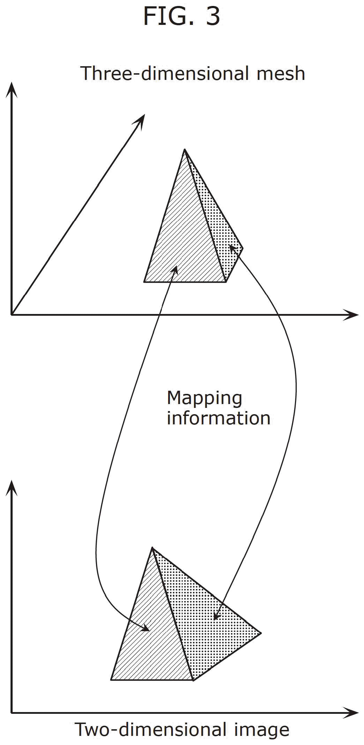

   FIG. 3 is a conceptual diagram illustrating mapping according to the embodiment.
[FIG. 4]

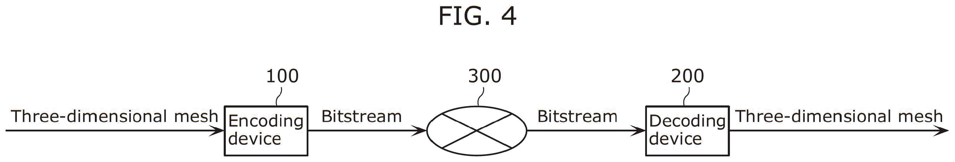

   FIG. 4 is a block diagram illustrating a configuration example of the encoding/decoding system according to the embodiment.
[FIG. 5]

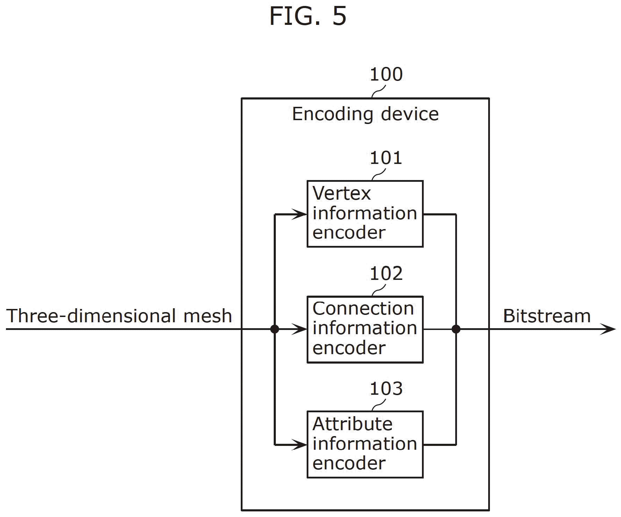

   FIG. 5 is a block diagram illustrating a configuration example of the encoding device according to the embodiment.
[FIG. 6]

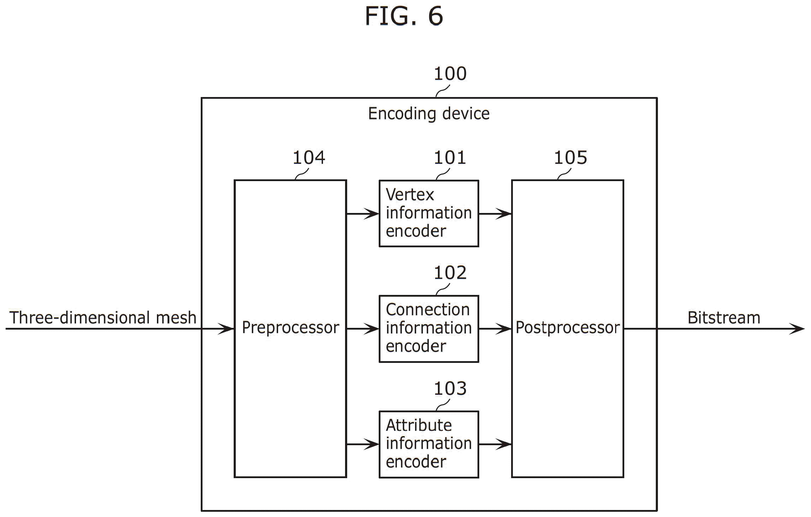

   FIG. 6 is a block diagram illustrating another configuration example of the encoding device according to the embodiment.
[FIG. 7]

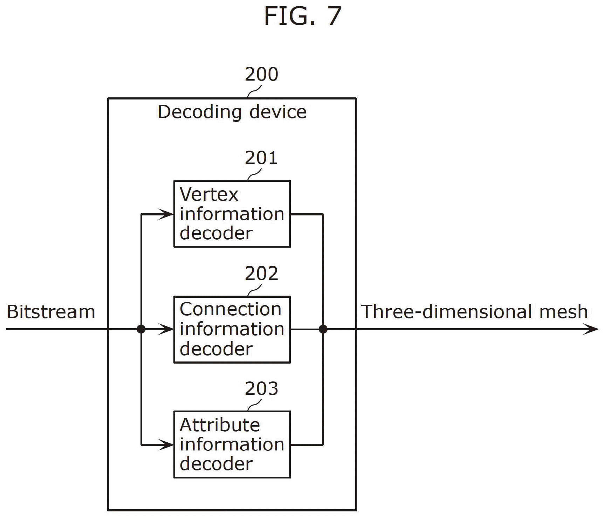

   FIG. 7 is a block diagram illustrating a configuration example of the decoding device according to the embodiment.
[FIG. 8]

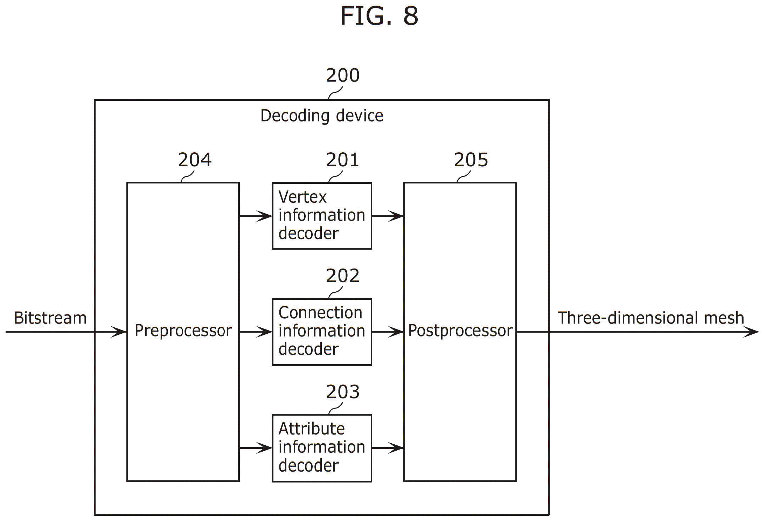

   FIG. 8 is a block diagram illustrating another configuration example of the decoding device according to the embodiment.
[FIG. 9]

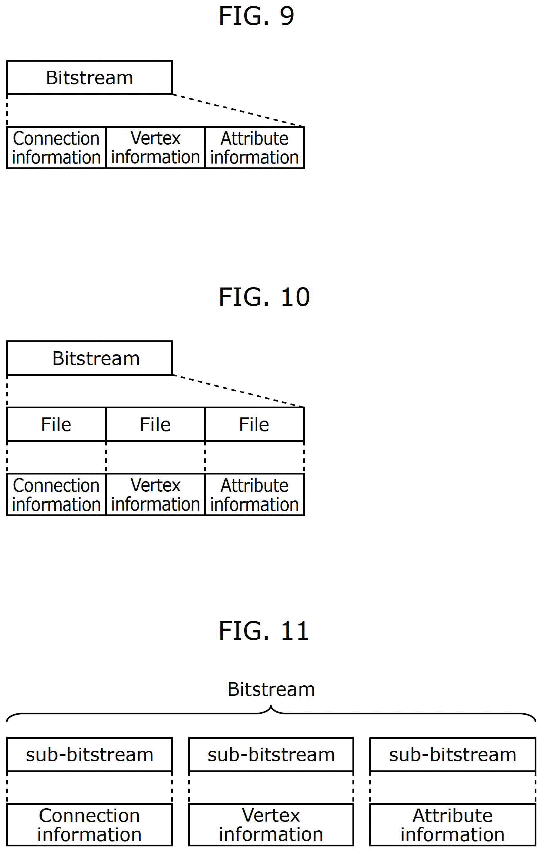

   FIG. 9 is a conceptual diagram illustrating a configuration example of a bitstream according to the embodiment.
[FIG. 10]
   FIG. 10 is a conceptual diagram illustrating another configuration example of a bitstream according to the embodiment.
[FIG. 11]
   FIG. 11 is a conceptual diagram illustrating yet another configuration example of a bitstream according to the embodiment.
[FIG. 12]

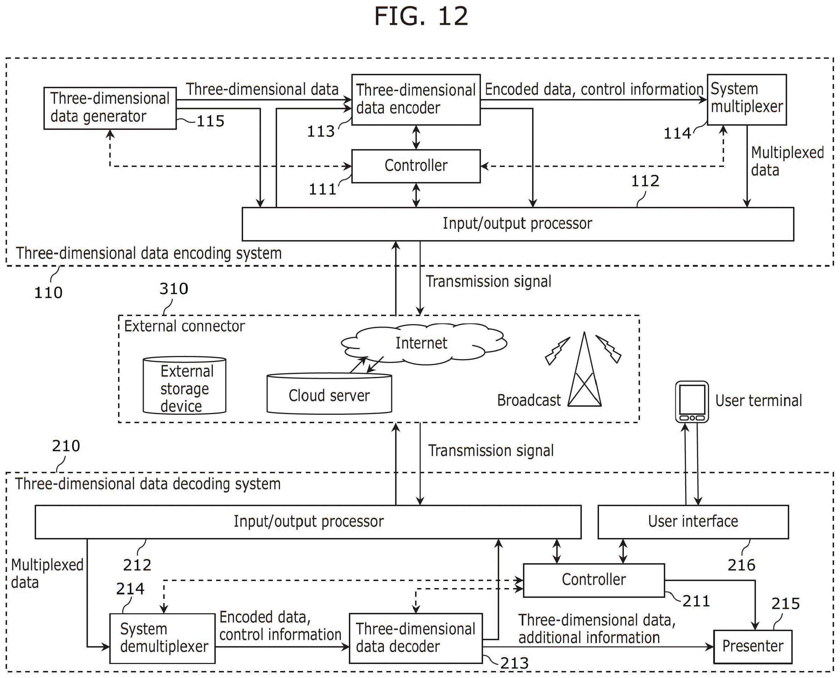

   FIG. 12 is a block diagram illustrating a specific example of the encoding/decoding system according to the embodiment.
[FIG. 13]

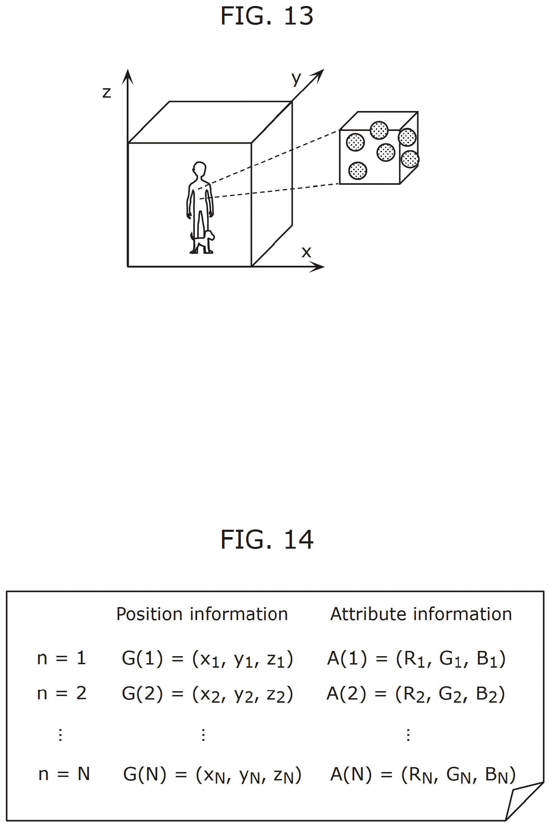

   FIG. 13 is a conceptual diagram illustrating a configuration example of point cloud data according to the embodiment.
[FIG. 14]
   FIG. 14 is a conceptual diagram illustrating a data file example of the point cloud data according to the embodiment.
[FIG. 15]

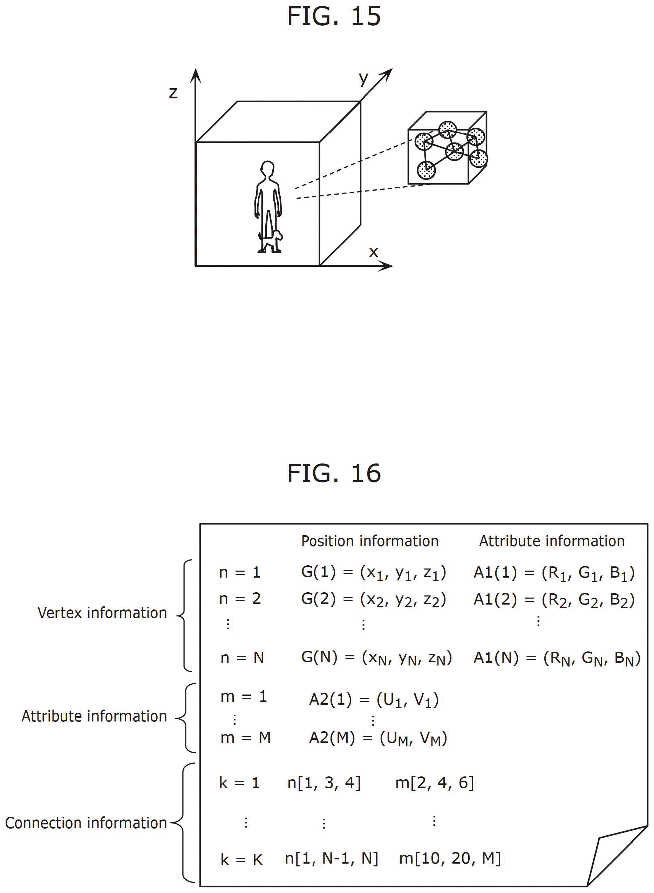

   FIG. 15 is a conceptual diagram illustrating a configuration example of mesh data according to the embodiment.
[FIG. 16]
   FIG. 16 is a conceptual diagram illustrating a data file example of the mesh data according to the embodiment.
[FIG. 17]

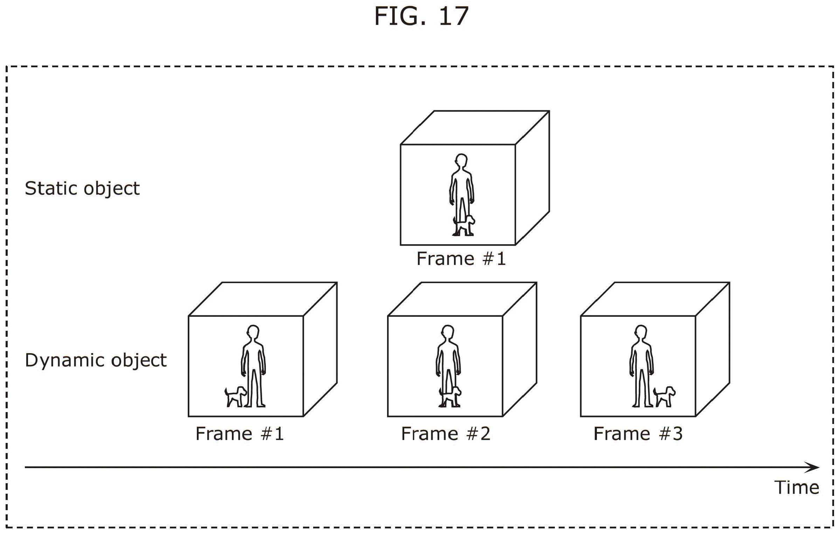

   FIG. 17 is a conceptual diagram illustrating a type of three-dimensional data according to the embodiment.
[FIG. 18]

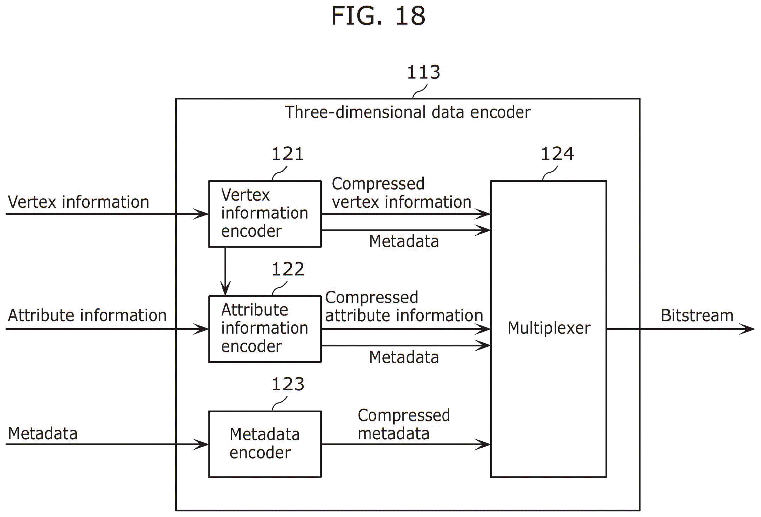

   FIG. 18 is a block diagram illustrating a configuration example of the three-dimensional data encoder according to the embodiment.
[FIG. 19]

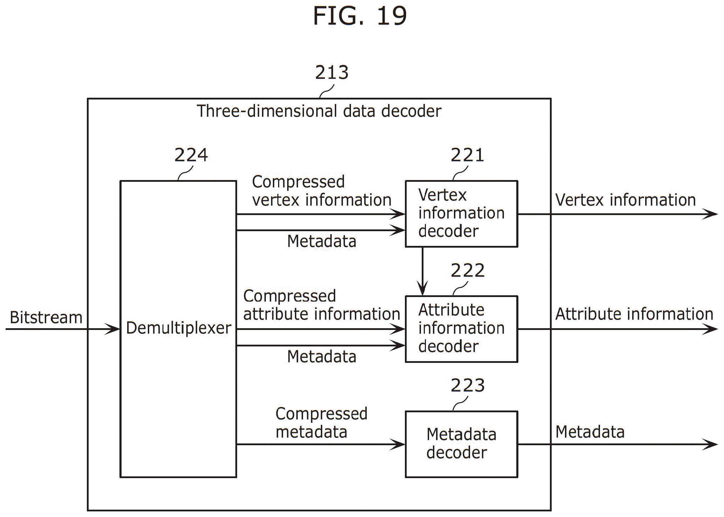

   FIG. 19 is a block diagram illustrating a configuration example of the three-dimensional data decoder according to the embodiment.
[FIG. 20]

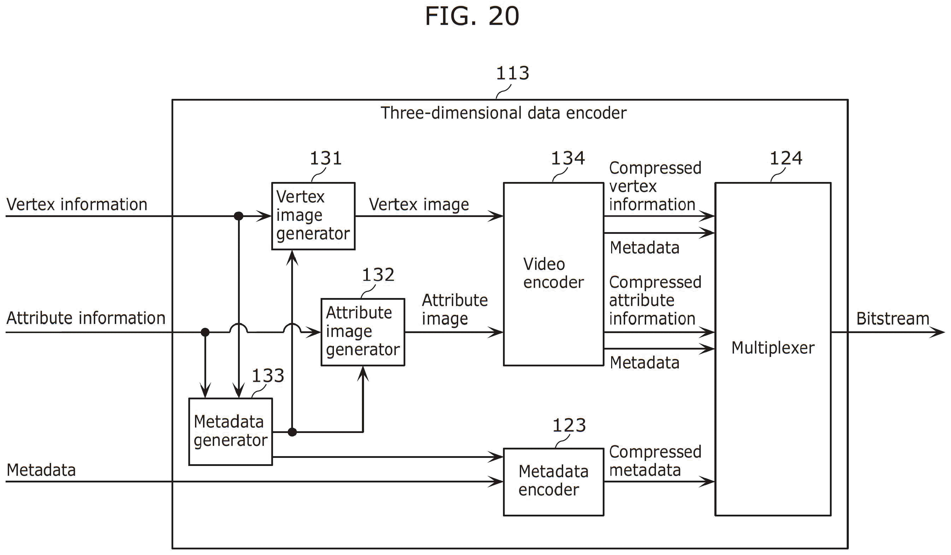

   FIG. 20 is a block diagram illustrating another configuration example of the three-dimensional data encoder according to the embodiment.
[FIG. 21]

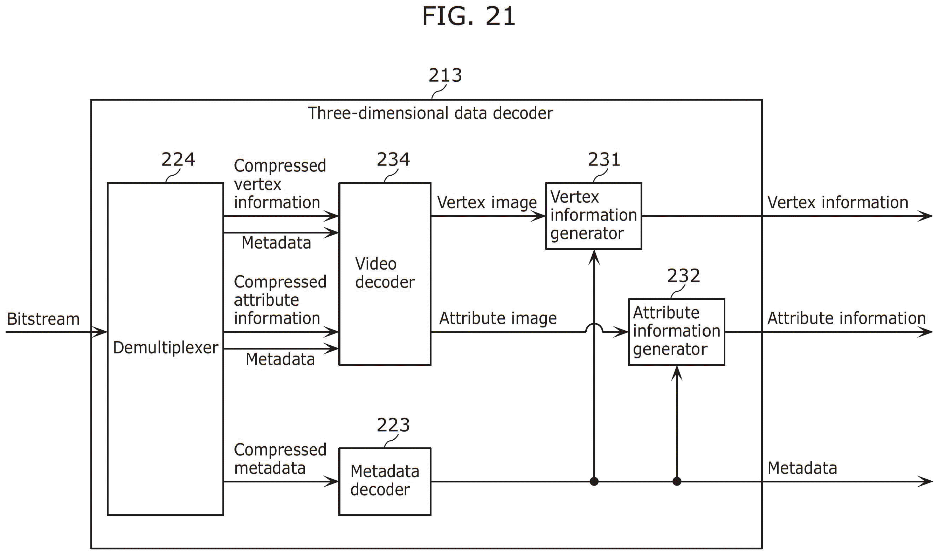

   FIG. 21 is a block diagram illustrating another configuration example of the three-dimensional data decoder according to the embodiment.
[FIG. 22]

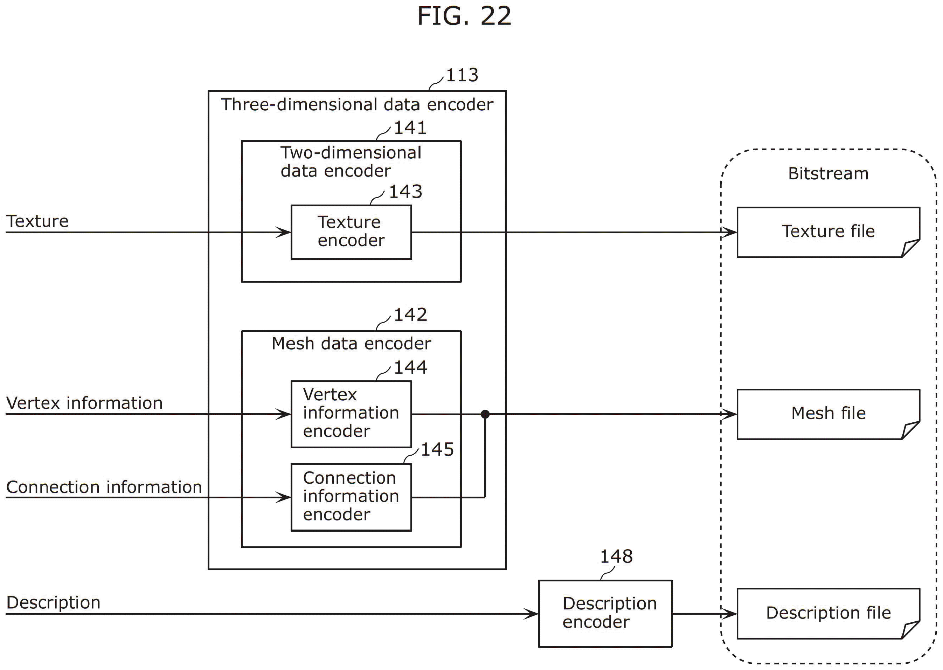

   FIG. 22 is a conceptual diagram illustrating a specific example of encoding processing according to the embodiment.
[FIG. 23]

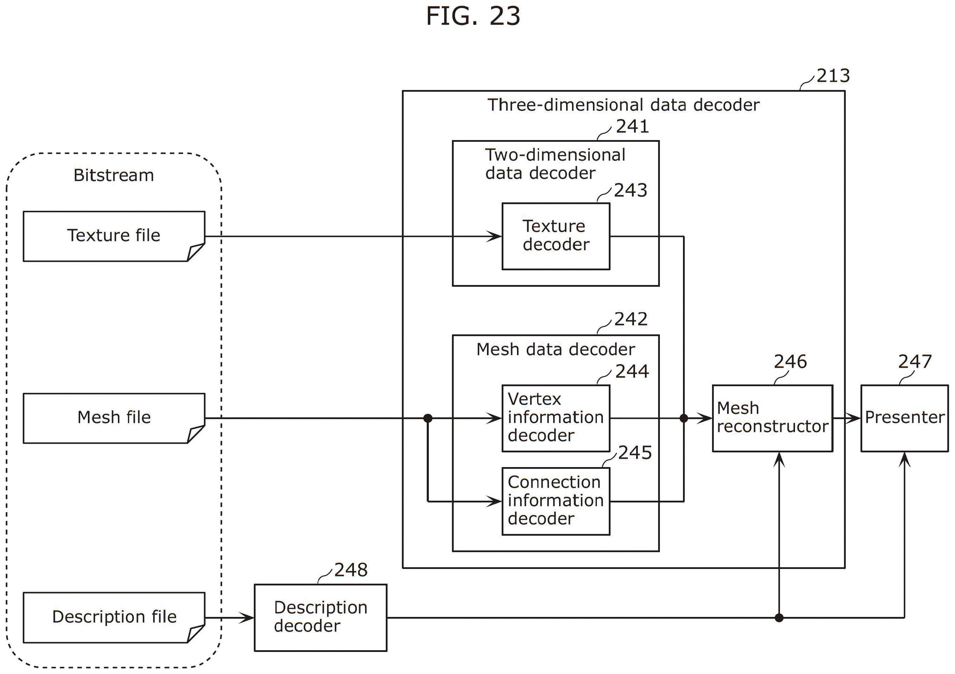

   FIG. 23 is a conceptual diagram illustrating a specific example of decoding processing according to the embodiment.
[FIG. 24]

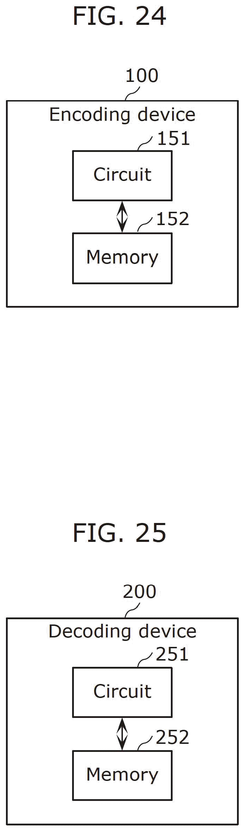

   FIG. 24 is a block diagram illustrating an implementation example of the encoding device according to the embodiment.
[FIG. 25]
   FIG. 25 is a block diagram illustrating an implementation example of the decoding device according to the embodiment.
[FIG. 26]

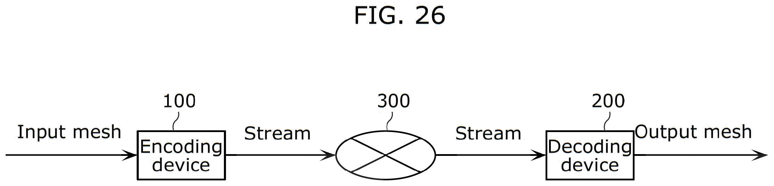

   FIG. 26 is a block diagram illustrating another configuration example of the encoding/decoding system according to the embodiment.
[FIG. 27]

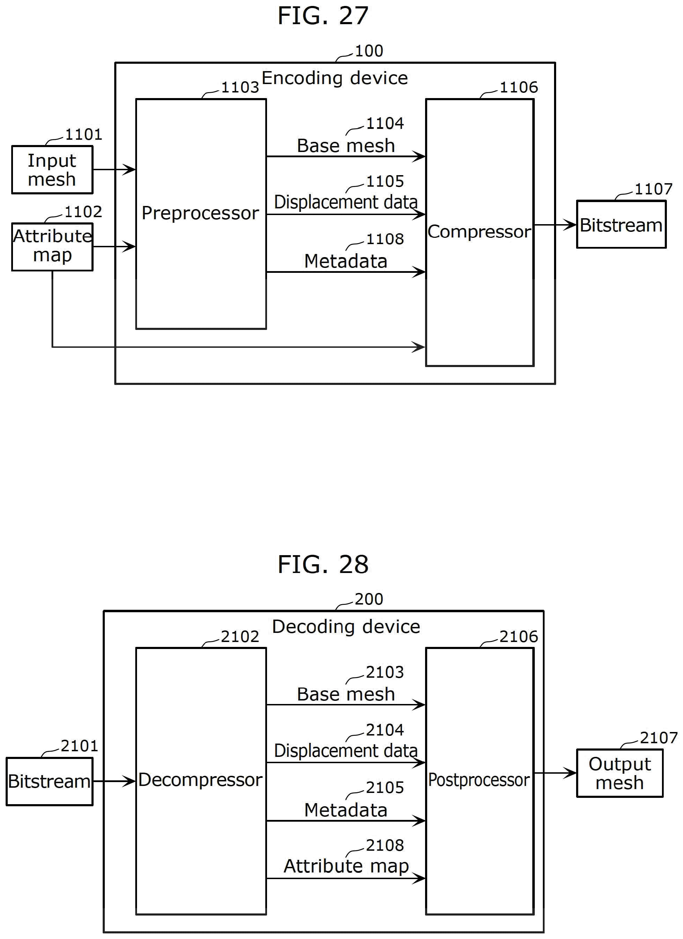

   FIG. 27 is a block diagram illustrating another configuration example of the encoding device according to the embodiment.
[FIG. 28]
   FIG. 28 is a block diagram illustrating another configuration example of the decoding device according to the embodiment.
[FIG. 29]

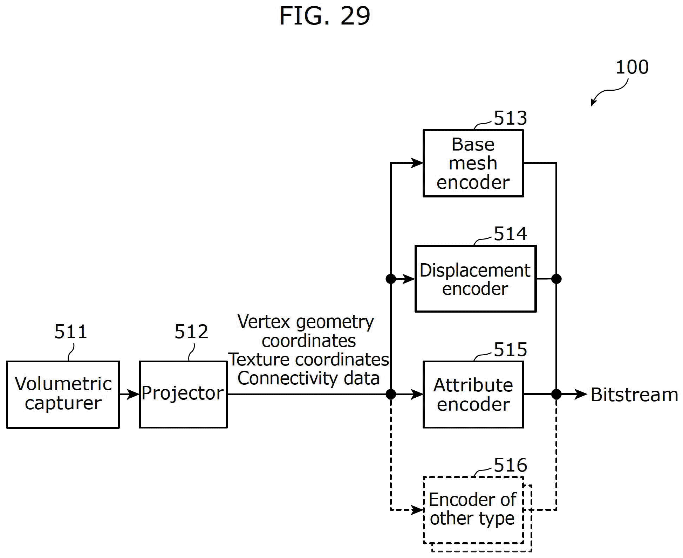

   FIG. 29 is a block diagram illustrating another configuration example of the encoding device according to the embodiment.
[FIG. 30]

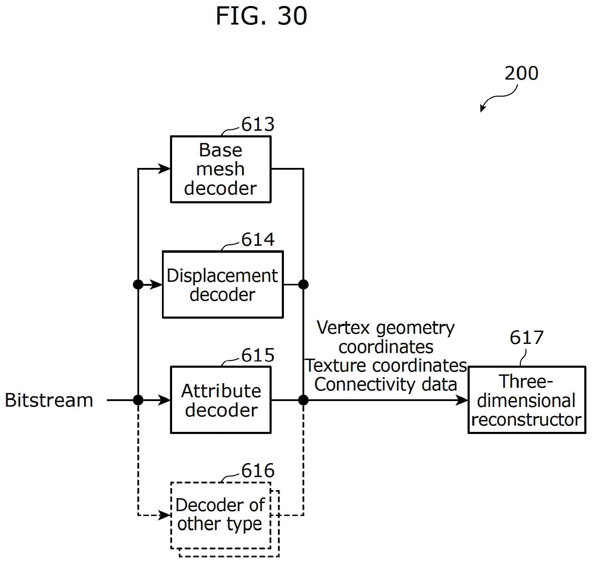

   FIG. 30 is a block diagram illustrating another configuration example of the decoding device according to the embodiment.
[FIG. 31]

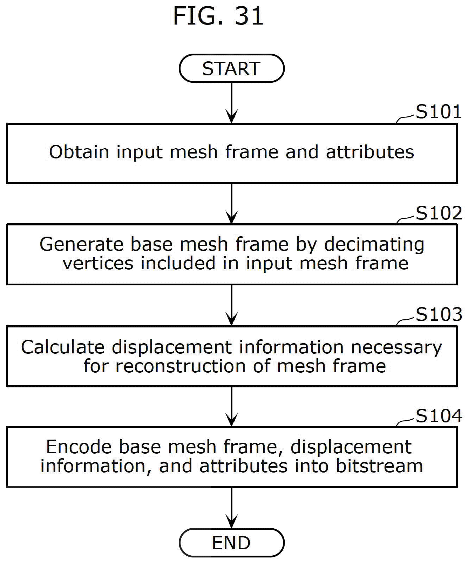

   FIG. 31 is a flowchart illustrating processing of the encoding device according to the embodiment.
[FIG. 32]

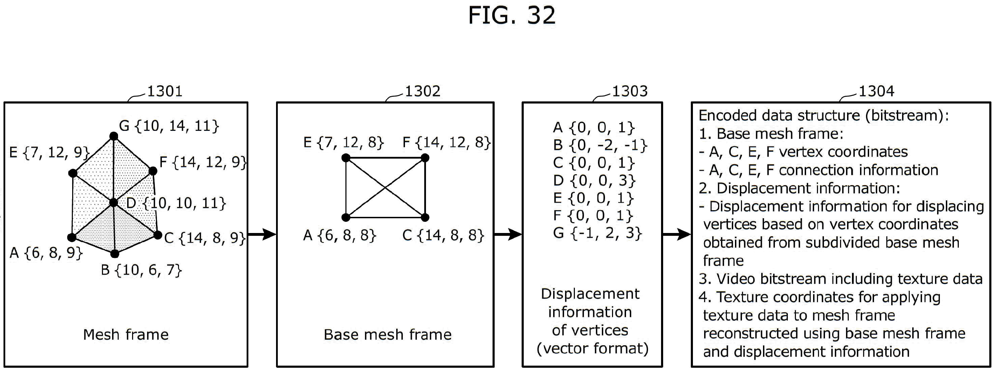

   FIG. 32 is an explanatory diagram conceptually illustrating encoding of a mesh frame according to the embodiment.
[FIG. 33]

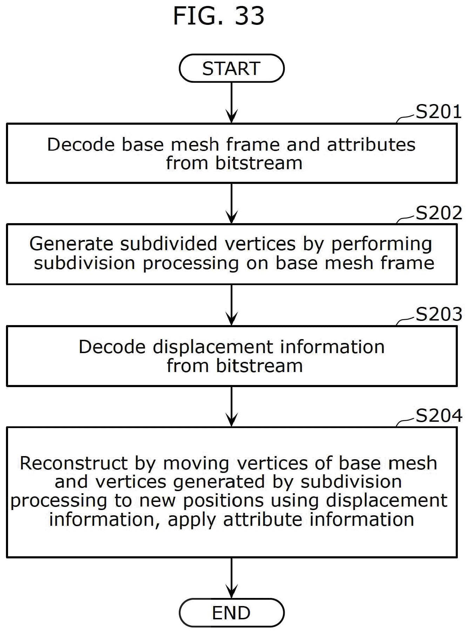

   FIG. 33 is a flowchart illustrating processing of the decoding device according to the embodiment.
[FIG. 34]

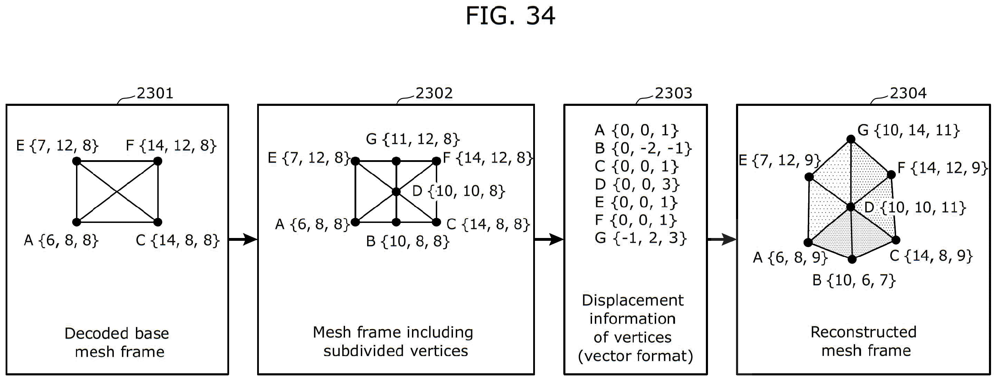

   FIG. 34 is an explanatory diagram conceptually illustrating decoding of a mesh frame according to the embodiment.
[FIG. 35]

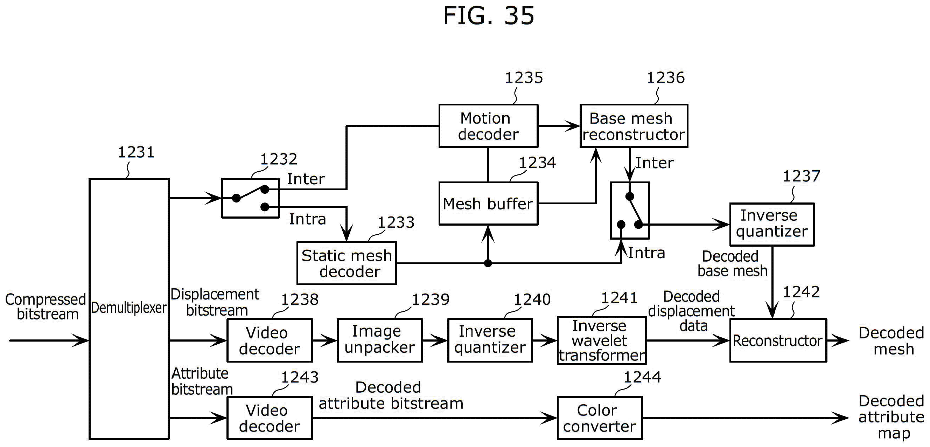

   FIG. 35 is a block diagram illustrating a configuration example of the decoding device according to the embodiment.
[FIG. 36]

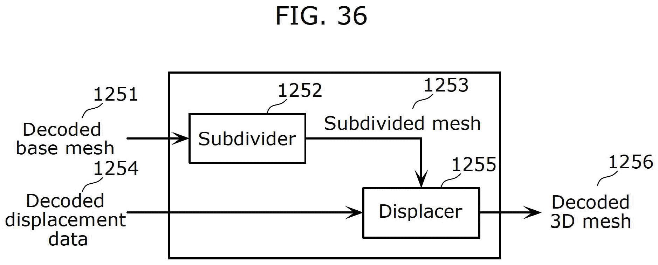

   FIG. 36 is a block diagram illustrating a configuration example of the decoding device according to the embodiment.
[FIG. 37]

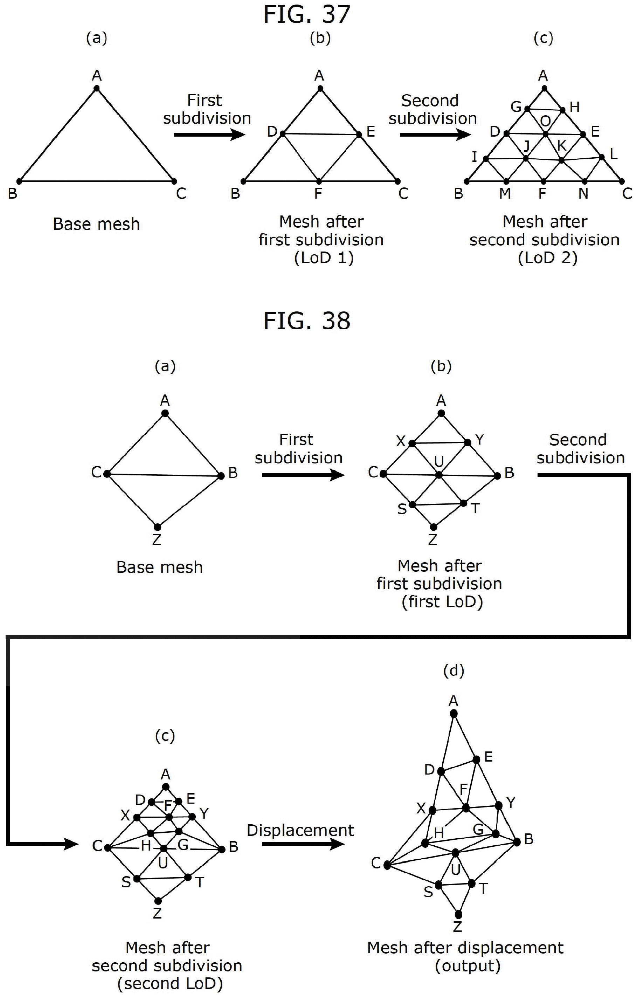

   FIG. 37 is an explanatory diagram illustrating an example of subdivision according to the embodiment.
[FIG. 38]
   FIG. 38 is an explanatory diagram illustrating an example of displacement of vertices after being displaced after subdivision according to the embodiment.
[FIG. 39]

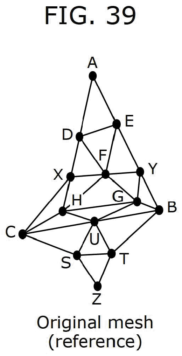

   FIG. 39 is an explanatory diagram illustrating an example of vertices of an original mesh according to the embodiment.
[FIG. 40]

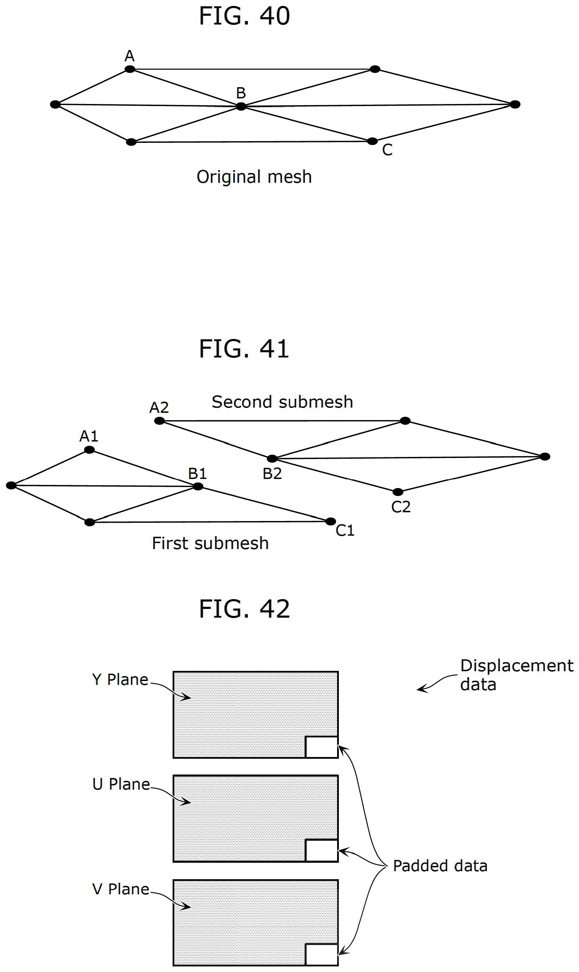

   FIG. 40 is an explanatory diagram illustrating an example of a mesh according to the embodiment.
[FIG. 41]
   FIG. 41 is an explanatory diagram illustrating an example of the division of a mesh into submeshes according to the embodiment.
[FIG. 42]
   FIG. 42 is a first explanatory diagram illustrating an example of packing of displacement information into an image frame according to the embodiment.
[FIG. 43]

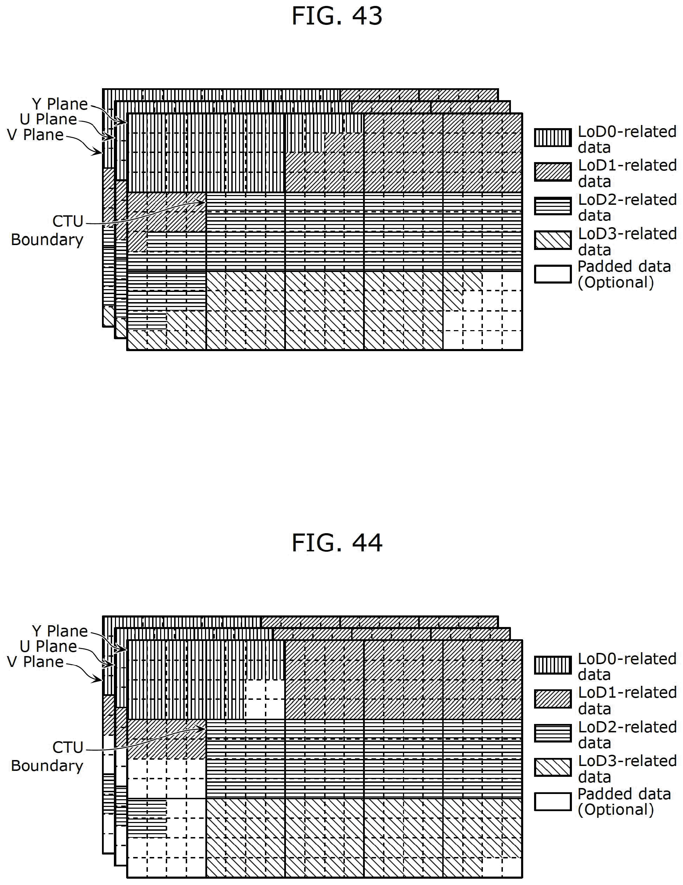

   FIG. 43 is a second explanatory diagram illustrating an example of packing of displacement information into an image frame according to the embodiment.
[FIG. 44]
   FIG. 44 is a third explanatory diagram illustrating an example of packing of displacement information into an image frame according to the embodiment.
[FIG. 45]

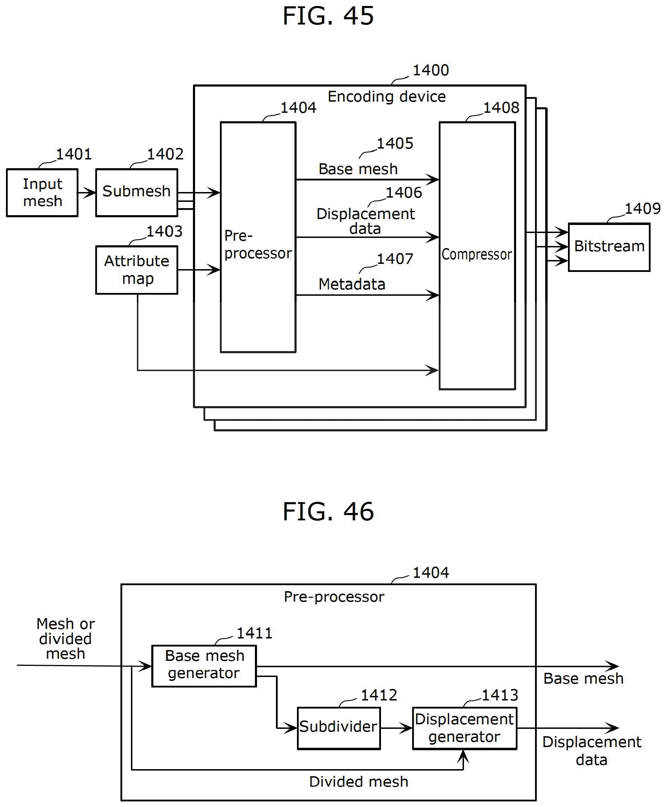

   FIG. 45 is a diagram illustrating a configuration example of the encoding device in a case where a mesh is divided into a plurality of submeshes according to the embodiment.
[FIG. 46]
   FIG. 46 is a diagram illustrating a configuration example of a pre-processor according to the embodiment.
[FIG. 47]

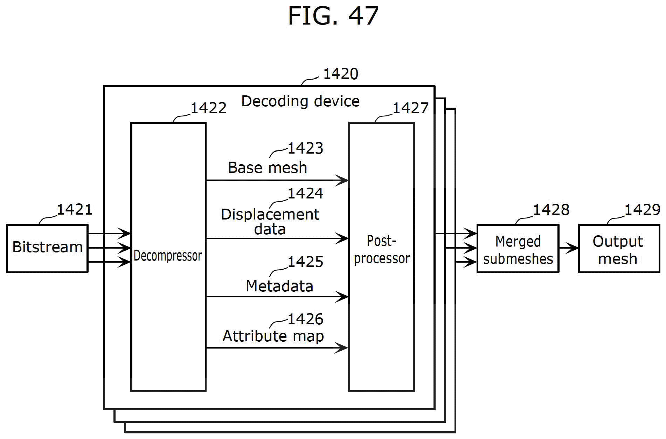

   FIG. 47 is a diagram illustrating a configuration example of the decoding device in a case where a mesh is divided into a plurality of submeshes according to the embodiment.
[FIG. 48]

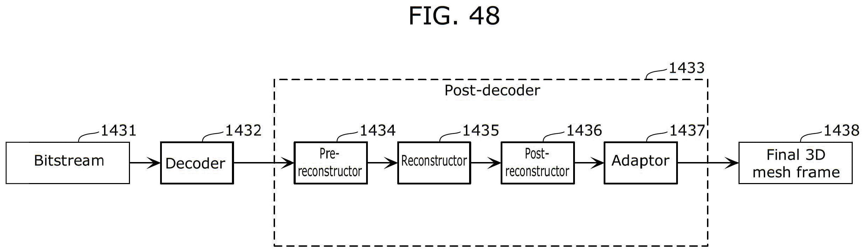

   FIG. 48 is a diagram for explaining a post-decoding process according to the embodiment.
[FIG. 49]

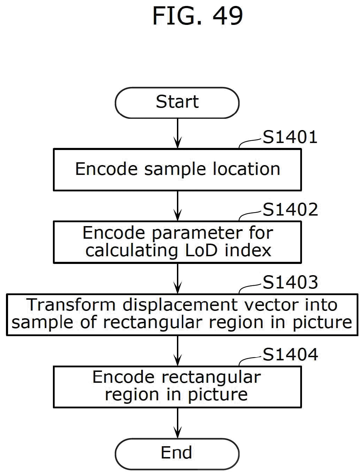

   FIG. 49 is a flowchart illustrating one example of an encoding method performed by the encoding device according to the embodiment.
[FIG. 50]

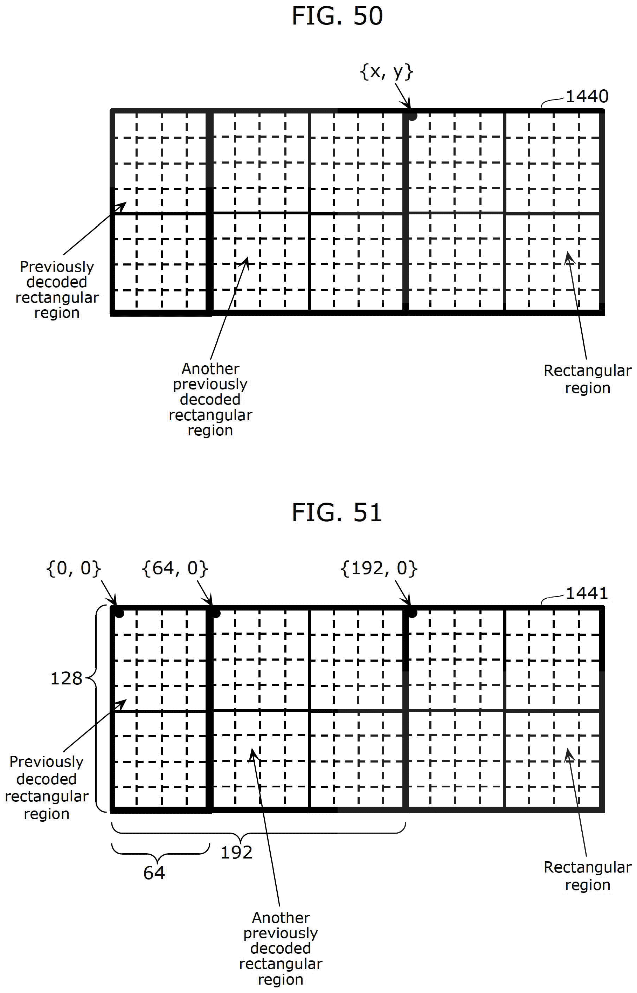

   FIG. 50 is a diagram illustrating an example of a sample location according to the embodiment.
[FIG. 51]
   FIG. 51 is a diagram illustrating an example in which the sample location is indicated by an absolute value according to the embodiment.
[FIG. 52]

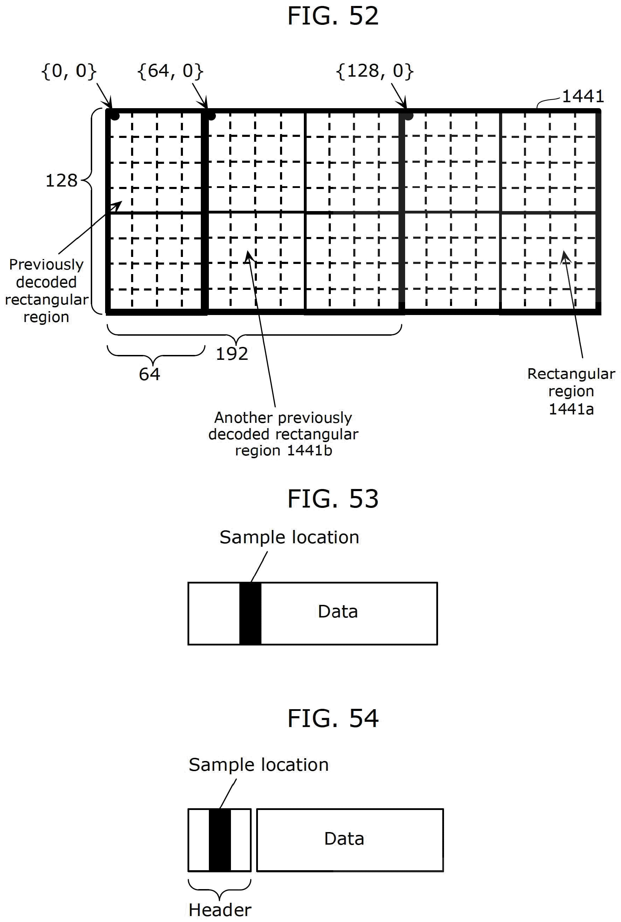

   FIG. 52 is a diagram illustrating an example in which the sample location is indicated by a relative value according to the embodiment.
[FIG. 53]
   FIG. 53 illustrates an example in which the sample location is signaled in a bitstream body according to the embodiment.
[FIG. 54]
   FIG. 54 illustrates an example in which the sample location is signaled in a bitstream header according to the embodiment.
[FIG. 55]

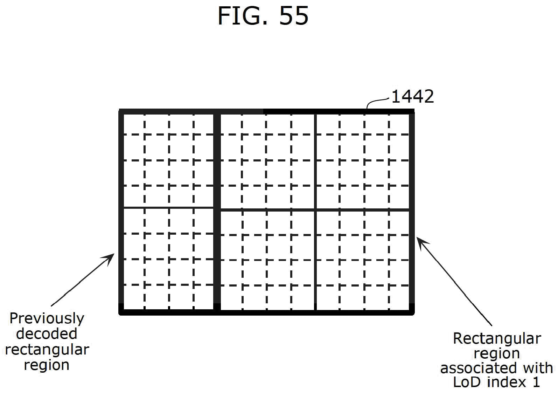

   FIG. 55 is a diagram illustrating an example of a LoD index associated with a rectangular region according to the embodiment.
[FIG. 56]

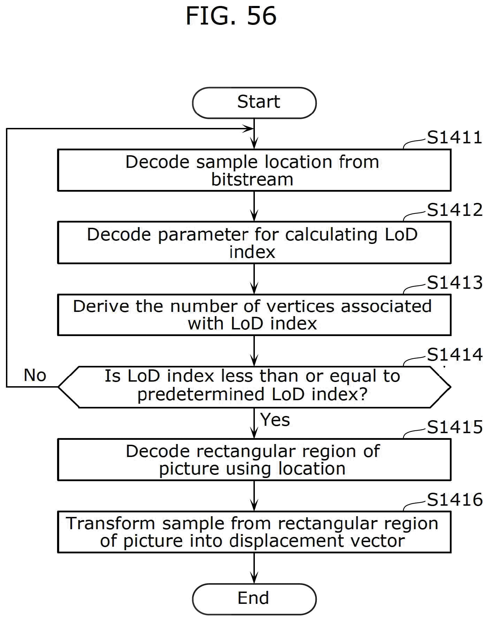

   FIG. 56 is a flowchart illustrating one example of a decoding method performed by the decoding device according to the embodiment.
[FIG. 57]

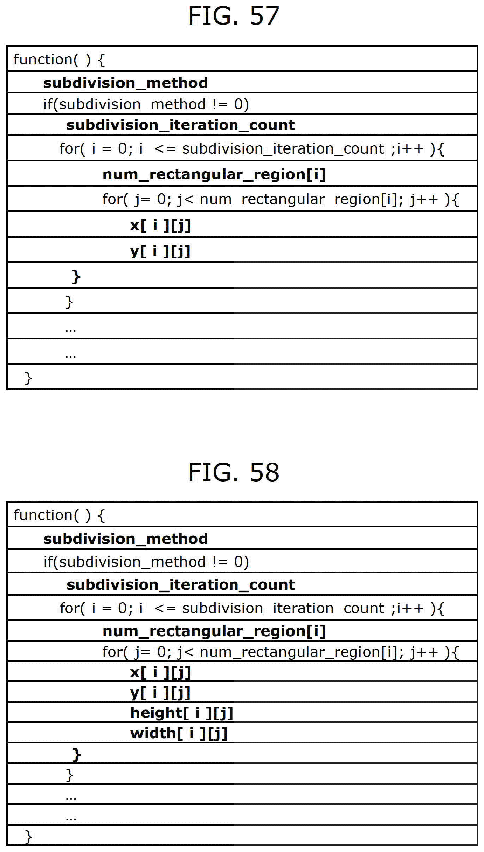

   FIG. 57 is a diagram illustrating a syntax for decoding the sample location according to the embodiment.
[FIG. 58]
   FIG. 58 is a diagram illustrating a syntax for decoding the sample location including the height and the width of a rectangular region according to the embodiment.
[FIG. 59]

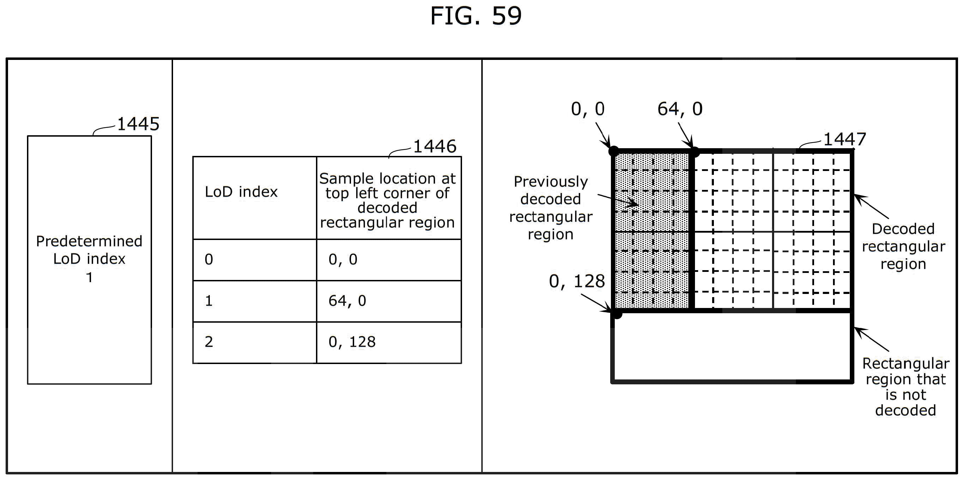

   FIG. 59 is a diagram for explaining one example of a process of decoding rectangular regions according to the embodiment.
[FIG. 60]

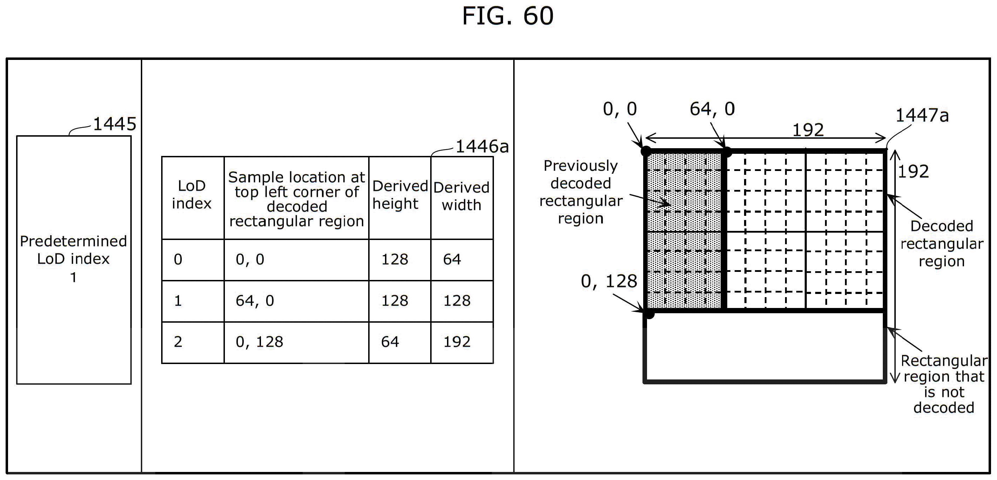

   FIG. 60 is a diagram for explaining another example of the process of decoding rectangular regions according to the embodiment.
[FIG. 61]

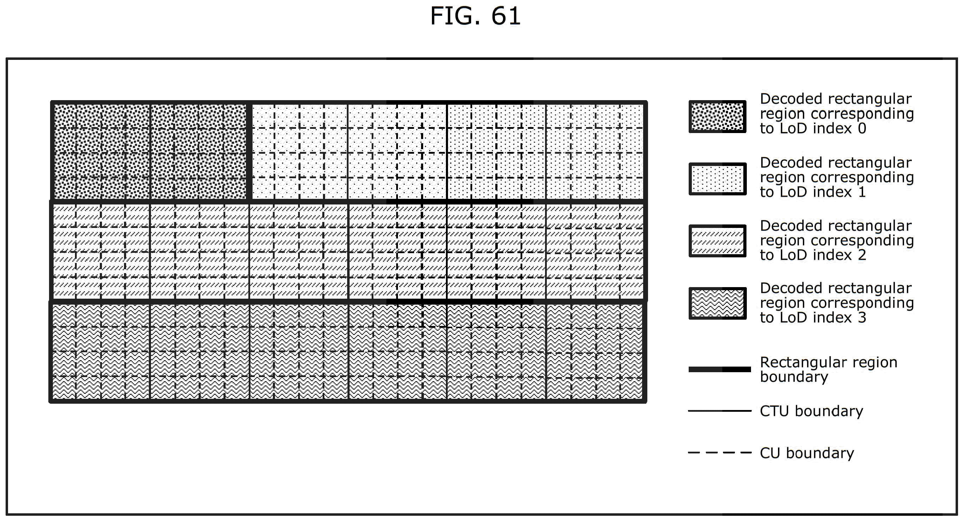

   FIG. 61 is a diagram illustrating an example of different decoded rectangular regions arranged in rows according to the embodiment.
[FIG. 62]

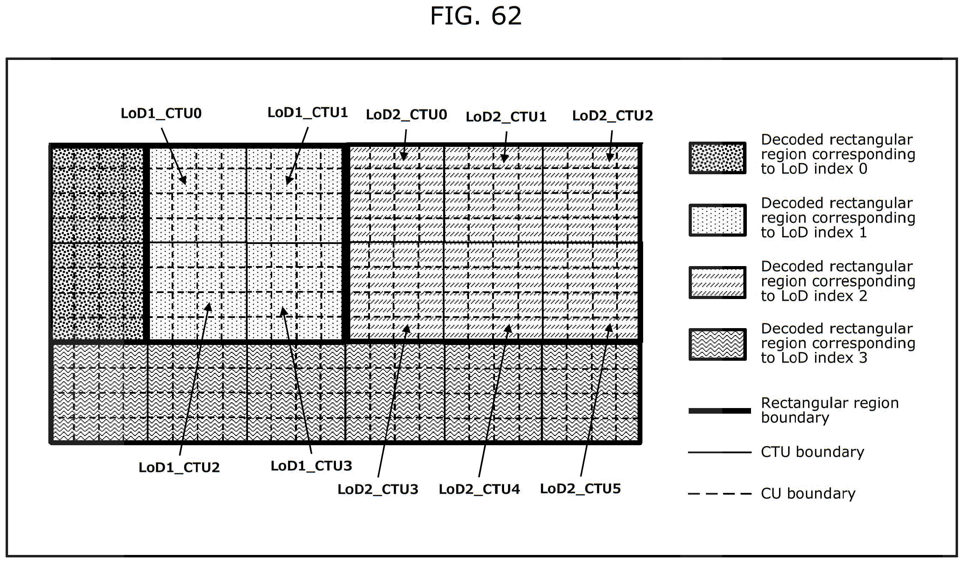

   FIG. 62 is a diagram illustrating an example of different decoded rectangular regions arranged in mixture of rows and columns according to the embodiment.
[FIG. 63]

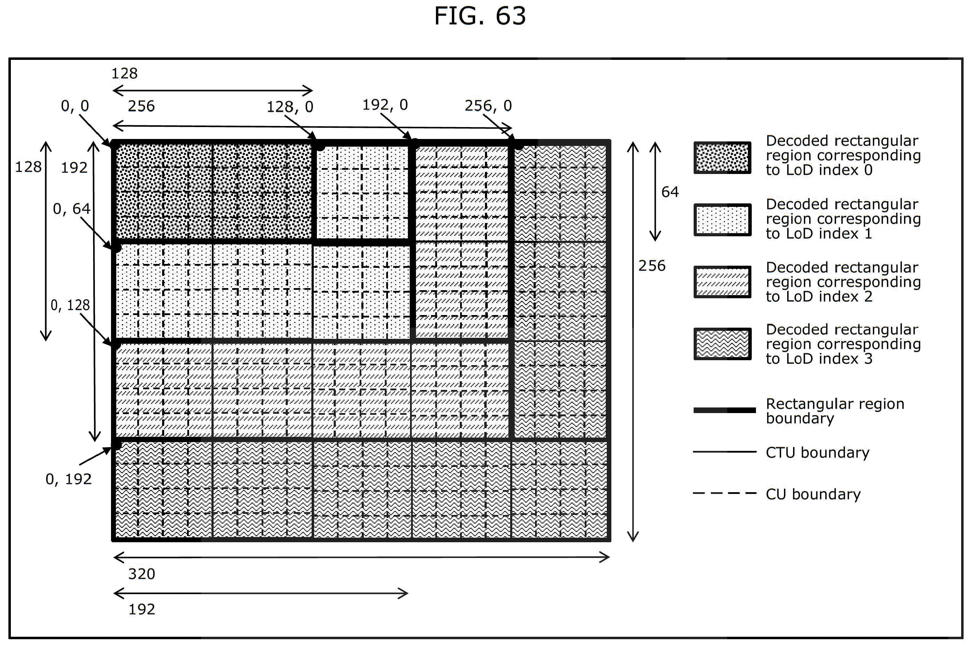

   FIG. 63 is a diagram illustrating an example in which rectangular regions form a reverse L shape in the horizontal direction according to the embodiment.
[FIG. 64]

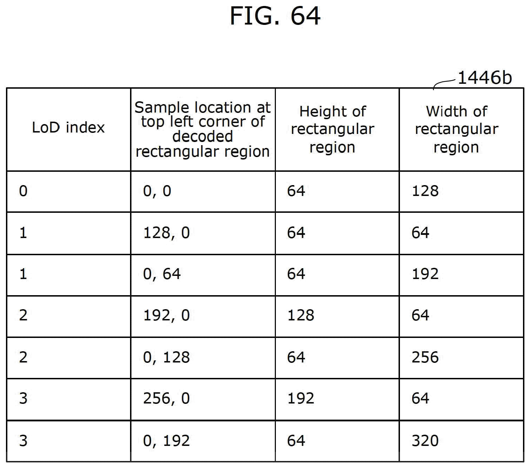

   FIG. 64 is a diagram illustrating an example of parameters to be signaled in a syntax according to the embodiment.
[FIG. 65]

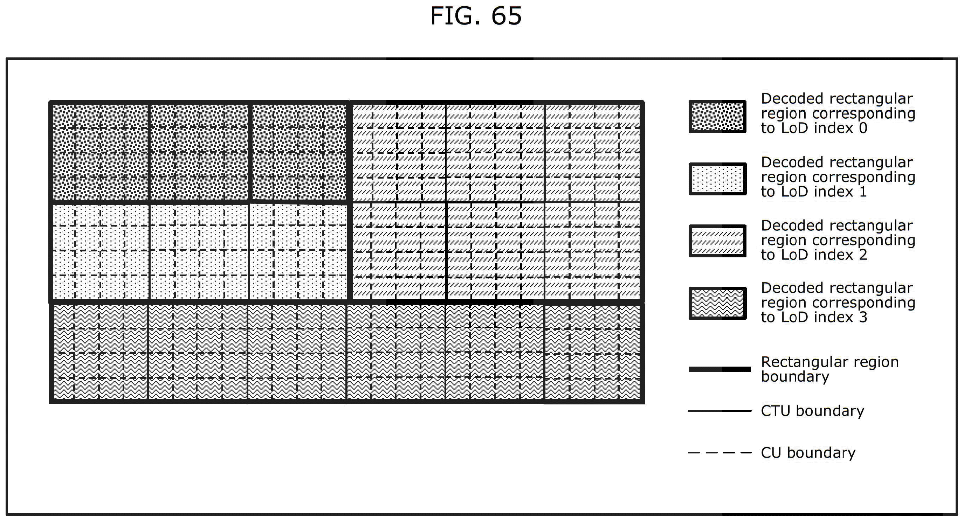

   FIG. 65 is a diagram illustrating an example including different types of rectangular regions according to the embodiment.
[FIG. 66]

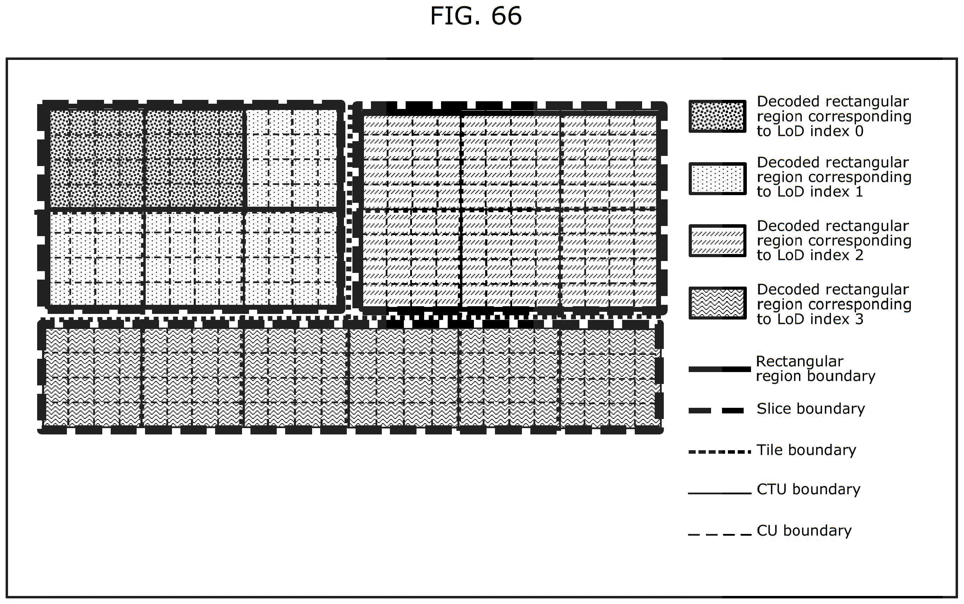

   FIG. 66 is a diagram illustrating an example including different types of rectangular regions in a plurality of rectangular slices according to the embodiment.
[FIG. 67]

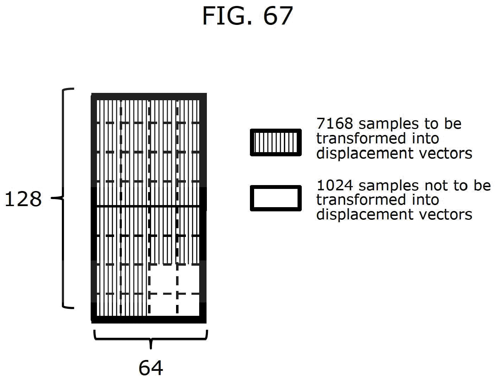

   FIG. 67 is a diagram illustrating an example of samples to be transformed into displacement vectors according to the embodiment.
[FIG. 68]

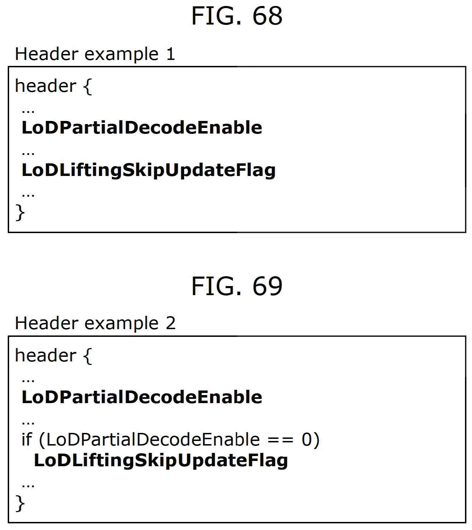

   FIG. 68 is a diagram illustrating a syntax of header example 1 according to the embodiment.
[FIG. 69]
   FIG. 69 is a diagram illustrating a syntax of header example 2 according to the embodiment.
[FIG. 70]

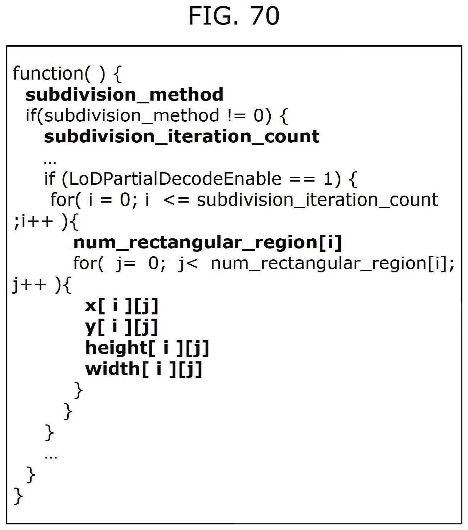

   FIG. 70 is an example of a syntax for indicating location information according to the embodiment.
[FIG. 71]

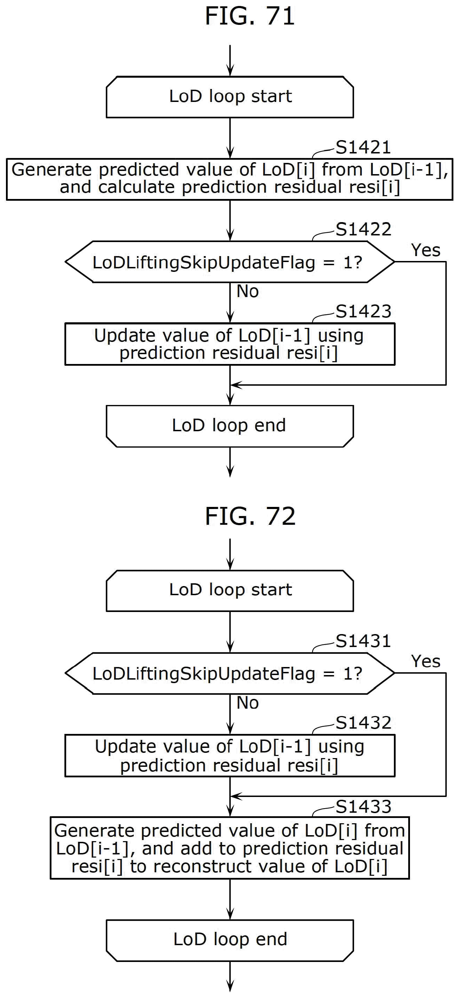

   FIG. 71 is a flowchart illustrating an example of lifting transform by the encoding device according to the embodiment.
[FIG. 72]
   FIG. 72 is a flowchart illustrating an example of lifting transform by the decoding device according to the embodiment.
[FIG. 73]

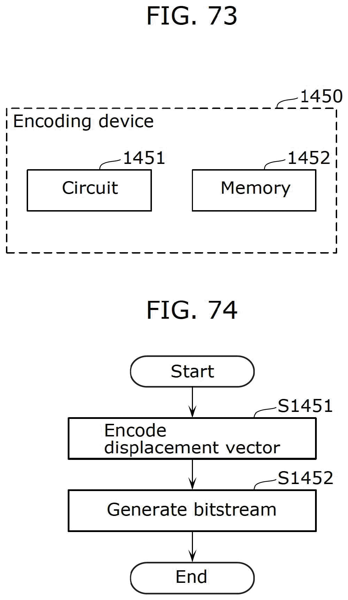

   FIG. 73 is a diagram illustrating one example of the configuration of the encoding device according to the embodiment.
[FIG. 74]
   FIG. 74 is a flowchart illustrating one example of an encoding method performed by the encoding device according to the embodiment.
[FIG. 75]

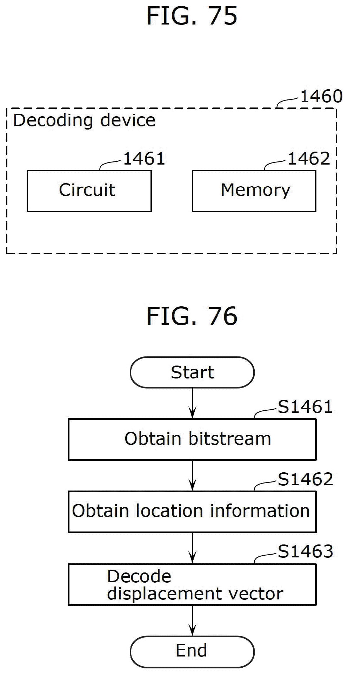

   FIG. 75 is a diagram illustrating one example of the configuration of the decoding device according to the embodiment.
[FIG. 76]
   FIG. 76 is a flowchart illustrating one example of a decoding method performed by the decoding device according to the embodiment.

### [Description of Embodiments]

### <Overview of Present Disclosure>

A three-dimensional (3D) mesh is used for a computer graphics video, for example. For example, the computer graphics video is formed by a plurality of frames that temporally differs from each other, and each frame may be represented by a three-dimensional mesh.

In addition, the three-dimensional mesh is formed by vertex information that indicates a position of each of a plurality of vertices in a three-dimensional space, connection information that indicates a connection relationship between the plurality of vertices, and attribute information that indicates an attribute of each vertex or each face. Each face is constructed according to a connection relationship between a plurality of vertices. Such a three-dimensional mesh can represent various computer graphics videos.

Furthermore, for transmission and storage of a three-dimensional mesh, efficient encoding and decoding of a three-dimensional mesh is expected. For efficient encoding and decoding of a three-dimensional mesh, arithmetic encoding and arithmetic decoding may be used.

There is a demand for further improvement in an encoding or decoding process related to three-dimensional data. An object of the present disclosure is to improve the encoding or decoding process related to three-dimensional data.

Hereinafter, aspects of the present invention derived from the content of the disclosure of the present description will be described by way of example, and the effects and the like derived from the aspect of the invention will be described.

An encoding method according to a first aspect of the present disclosure is an encoding method that is performed by an encoding device. The encoding method includes: encoding a displacement vector as a sample of a rectangular region in a picture; and generating a bitstream including the sample encoded and a location information item indicating a location of the rectangular region in the picture, in which the location information item is associated with a layer corresponding to the rectangular region.

With this, since a bitstream is generated that includes the sample obtained by encoding the displacement vector and the location information item indicating the location of the rectangular region in the picture, the decoding device can be informed of the location of the sample in the picture. Accordingly, a bitstream can be generated that allows the decoding device to correctly decode the displacement vector of a desired sample in the picture based on the location information item.

An encoding method according to a second aspect of the present disclosure is the encoding method according to the first aspect, in which the location information item indicates a location of a top left corner of the rectangular region.

Accordingly, the decoding device can be informed of the rectangular region in which the sample is arranged in the picture.

An encoding method according to a third aspect of the present disclosure is the encoding method according to the first aspect or the second aspect, in which the bitstream further includes a size of the rectangular region.

Accordingly, the decoding device can be informed of the rectangular region in which the sample is arranged in the picture.

An encoding method according to a fourth aspect of the present disclosure is the encoding method according to the third aspect, in which the size includes a width and a height of the rectangular region.

Accordingly, the decoding device can be informed of the rectangular region in which the sample is arranged in the picture.

An encoding method according to a fifth aspect of the present disclosure is the encoding method according to any one of the first aspect through the fourth aspect, in which the bitstream further includes identification information for identifying the layer.

Accordingly, the decoding device can be informed of the layer to which the sample corresponds.

An encoding method according to a sixth aspect of the present disclosure is the encoding method according to any one of the first aspect through the fifth aspect, in which the picture has a plurality of rectangular regions including the rectangular region, the plurality of rectangular regions correspond to a plurality of layers, and the plurality of layers include the layer.

An encoding method according to a seventh aspect of the present disclosure is the encoding method according to the sixth aspect, in which the bitstream includes a plurality of location information items including the location information item, and the plurality of location information items indicate locations of the plurality of rectangular regions.

Accordingly, the decoding device can be informed of the layers to which the samples correspond and the locations of the rectangular regions.

An encoding method according to an eighth aspect of the present disclosure is the encoding method according to the sixth aspect or the seventh aspect, in which the bitstream includes a plurality of sizes including the size, and the plurality of sizes correspond to the plurality of rectangular regions.

Accordingly, the decoding device can be informed of the rectangular regions in which the samples are arranged in the picture.

An encoding method according to a ninth aspect of the present disclosure is the encoding method according to any one of the first aspect through the eighth aspect, in which the rectangular region includes one or more coding tree units (CTUs) in the picture.

An encoding method according to a tenth aspect of the present disclosure is the encoding method according to any one of the first aspect through the eighth aspect, in which the rectangular region includes one or more tiles in the picture.

An encoding method according to an eleventh aspect of the present disclosure is the encoding method according to any one of the first aspect through the eighth aspect, in which the rectangular region includes one or more slices in the picture.

An encoding method according to a twelfth aspect of the present disclosure is the encoding method according to any one of the first aspect through the eighth aspect, in which the rectangular region includes one or more sub-pictures in the picture.

A decoding method according to a thirteenth aspect of the present disclosure is a decoding method that is performed by a decoding device. The decoding method includes: obtaining a bitstream; obtaining, from the bitstream, a location information item indicating a location of a rectangular region in a picture; and decoding a displacement vector represented by a sample of the rectangular region located by the location information item in the picture, in which the location information item is associated with a layer corresponding to the rectangular region.

With this, since the location information item indicating the location of the rectangular region in the picture is obtained from the bitstream, a desired sample in the picture can be correctly decoded based on the location information item.

A decoding method according to a fourteenth aspect of the present disclosure is the decoding method according to the thirteenth aspect, in which the location information item indicates a location of a top left corner of the rectangular region.

Accordingly, the decoding device can correctly decode the displacement vector of a desired sample based on the specific location of the rectangular region.

A decoding method according to a fifteenth aspect of the present disclosure is the decoding method according to the thirteenth aspect or the fourteenth aspect, in which the bitstream further includes a size of the rectangular region.

Accordingly, the decoding device can identify the rectangular region in which the sample is arranged in the picture, and can correctly decode the displacement vector of a desired sample.

A decoding method according to a sixteenth aspect of the present disclosure is the decoding method according to the fifteenth aspect, in which the size includes a width and a height of the rectangular region.

Accordingly, the decoding device can identify the rectangular region in which the sample is arranged in the picture, and can correctly decode the displacement vector of a desired sample.

A decoding method according to a seventeenth aspect of the present disclosure is the decoding method according to any one of the thirteenth aspect through the sixteenth aspect, in which the bitstream further includes identification information for identifying the layer.

Accordingly, the decoding device can identify the rectangular region corresponding to the layer to which the sample corresponds, and can correctly decode the displacement vector of a desired sample.

A decoding method according to a eighteenth aspect of the present disclosure is the decoding method according to any one of the thirteenth aspect through the seventeenth aspect, in which the picture has a plurality of rectangular regions including the rectangular region, the plurality of rectangular regions correspond to a plurality of layers, and the plurality of layers include the layer.

A decoding method according to a nineteenth aspect of the present disclosure is the decoding method according to the eighteenth aspect, in which the bitstream includes a plurality of location information items including the location information item, and the plurality of location information items indicate locations of the plurality of rectangular regions.

Accordingly, the decoding device can identify the layers to which the samples correspond and the locations of the rectangular regions.

A decoding method according to a twentieth aspect of the present disclosure is the decoding method according to the eighteenth aspect or the nineteenth aspect, in which the bitstream includes a plurality of sizes including the size, and the plurality of sizes correspond to the plurality of rectangular regions.

Accordingly, the decoding device can identify the rectangular regions in which the samples are arranged in the picture.

A decoding method according to a twenty-first aspect of the present disclosure is the decoding method according to any one of the thirteenth aspect through the twentieth aspect, in which the rectangular region includes one or more coding tree units (CTUs) in the picture.

A decoding method according to a twenty-second aspect of the present disclosure is the decoding method according to any one of the thirteenth aspect through the twentieth aspect, in which the rectangular region includes one or more tiles in the picture.

A decoding method according to a twenty-third aspect of the present disclosure is the decoding method according to any one of the thirteenth aspect through the twentieth aspect, in which the rectangular region includes one or more slices in the picture.

A decoding method according to a twenty-fourth aspect of the present disclosure is the decoding method according to any one of the thirteenth aspect through the twentieth aspect, in which the rectangular region includes one or more sub-pictures in the picture.

A decoding method according to a twenty-fifth aspect of the present disclosure is the decoding method according to the seventeenth aspect. The decoding method further includes determining whether the layer identified by the identification information is lower than or equal to a predetermined layer identified by predetermined identification information, in which the decoding is performed based on a result of determining that the layer identified by the identification information is lower than or equal to the predetermined layer.

Accordingly, the decoding device can decode rectangular regions at or below the predetermined layer. Therefore, the processing load can be reduced.

An encoding device according to a twenty-sixth aspect of the present disclosure includes a circuit and memory connected to the circuit, in which, in operation, the circuit: encodes a displacement vector as a sample of a rectangular region in a picture; and generates a bitstream including the sample encoded and a location information item indicating a location of the rectangular region in the picture, and the location information item is associated with a layer corresponding to the rectangular region.

With this, since a bitstream is generated that includes the sample obtained by encoding the displacement vector and the location information item indicating the location of the rectangular region in the picture, the decoding device can be informed of the location of the sample in the picture. Accordingly, a bitstream can be generated that allows the decoding device to correctly decode the displacement vector of a desired sample in the picture based on the location information item.

A decoding device according to a twenty-seventh aspect of the present disclosure includes a circuit and memory connected to the circuit, in which, in operation, the circuit: obtains a bitstream; obtains, from the bitstream, a location information item indicating a location of a rectangular region in a picture; and decodes a displacement vector represented by a sample of the rectangular region located by the location information item in the picture, and the location information item is associated with a layer corresponding to the rectangular region.

With this, since the location information item indicating the location of the rectangular region in the picture is obtained from the bitstream, a desired sample in the picture can be correctly decoded based on the location information item.

Note that these general or specific aspects may be implemented using a system, a device, an integrated circuit, a computer program, or a computer-readable recording medium such as a CD-ROM, or any combination of systems, devices, integrated circuits, computer programs, or recording media.

Hereinafter, an embodiment of the present disclosure will be described in detail with reference to the drawings.

The embodiments described below each illustrate a general or specific example of the present disclosure. The numerical values, shapes, materials, elements, the arrangement and connection of the elements, steps, order of the steps, etc., shown in the following embodiments are mere examples, and therefore do not limit the scope of the present invention. Accordingly, among the elements in the following embodiments, those not recited in any of the independent claims defining the broadest concept are described as optional elements.

### [Embodiment]

In the present embodiment, an encoding method and a decoding method will be described.

### <Expressions and terms>

The following expressions and terms will be used herein.

### (1) Three-dimensional mesh

A three-dimensional mesh is a set of a plurality of faces and indicates, for example, a three-dimensional object. In addition, a three-dimensional mesh is mainly constituted of vertex information, connection information, and attribute information. A three-dimensional mesh may be expressed as a polygon mesh or a mesh. In addition, a three-dimensional mesh may have a temporal change. A three-dimensional mesh may include metadata related to vertex information, connection information, and attribute information or other additional information.

### (2) Vertex information

Vertex information is information indicating a vertex. For example, vertex information indicates a position of a vertex in a three-dimensional space. In addition, a vertex corresponds to a vertex of a face that constitutes a three-dimensional mesh. Vertex information may be expressed as "geometry". In addition, vertex information may also be expressed as position information.

### (3) Connection information

Connection information is information indicating a connection between vertices. For example, connection information indicates a connection for constructing a face or an edge of a three-dimensional mesh. Connection information may be expressed as "connectivity". In addition, connection information may also be expressed as face information.

### (4) Attribute information

Attribute information is information indicating an attribute of a vertex or a face. For example, attribute information indicates an attribute such as a color, an image, a normal vector, and the like associated with a vertex or a face. Attribute information may be expressed as "texture".

### (5) Face

A face is an element that constitutes a three-dimensional mesh. Specifically, a face is a polygon on a plane in a three-dimensional space. For example, a face can be determined as a triangle in the three-dimensional space.

### (6) Plane

A plane is a two-dimensional plane in a three-dimensional space. For example, a polygon is formed on a plane and a plurality of polygons are formed on a plurality of planes.

### (7) Bitstream

A bitstream corresponds to encoded information. A bitstream can also be expressed as a stream, an encoded bitstream, a compressed bitstream, or an encoded signal.

### (8) Encoding and decoding

The expression "encode" may be replaced with expressions such as store, include, write, describe, signalize, send out, notify, save, or compress and such expressions may be interchangeably used. For example, encoding information may mean including information in a bitstream. In addition, encoding information in a bitstream may mean encoding the information and generating a bitstream that includes the encoded information.

In addition, the expression "decode" may be replaced with expressions such as read, interpret, scan, load, derive, acquire, receive, extract, restore, reconstruct, decompress, or expand and such expressions may be interchangeably used. For example, decoding information may mean acquiring information from a bitstream. In addition, decoding information from a bitstream may mean decoding the bitstream and acquiring information included in the bitstream.

### (9) Ordinal numbers

In the description, an ordinal number such as first, second, or the like may be affixed to a constituent element or the like. Such ordinal numbers may be replaced as necessary. In addition, an ordinal number may be newly affixed to or removed from a constituent element or the like. Furthermore, the ordinal numbers may be affixed to elements in order to identify the elements and may not correspond to any meaningful order.

### <Three-dimensional mesh>

FIG. 1 is a conceptual diagram illustrating a three-dimensional mesh according to the present embodiment. The three-dimensional mesh is constituted of a plurality of faces. For example, each face is a triangle. Vertices of the triangles are determined in a three-dimensional space. In addition, a three-dimensional mesh indicates a three-dimensional object. Each face may have a color or an image.

FIG. 2 is a conceptual diagram illustrating basic elements of a three-dimensional mesh according to the present embodiment. The three-dimensional mesh is constituted of vertex information, connection information, and attribute information. Vertex information indicates a position of a vertex of a face in a three-dimensional space. Connection information indicates a connection between vertices. A face can be identified based on vertex information and connection information. In other words, an uncolored three-dimensional object is formed in a three-dimensional space based on vertex information and connection information.

Attribute information may be associated with a vertex or associated with a face. Attribute information associated with a vertex may be expressed as "attribute per point". Attribute information associated with a vertex may indicate an attribute of the vertex itself or indicate an attribute of a face connected to the vertex.

For example, a color may be associated with a vertex as attribute information. The color associated with the vertex may be the color of the vertex or the color of a face connected to the vertex. The color of the face may be an average of a plurality of colors associated with a plurality of vertices of the face. In addition, a normal vector may be associated with a vertex or a face as attribute information. Such a normal vector can express a front and a rear of a face.

In addition, a two-dimensional image may be associated with a face as attribute information. The two-dimensional image associated with a face is also expressed as a texture image or an "attribute map". In addition, information indicating mapping between a face and a two-dimensional image may be associated with the face as attribute information. Such information indicating mapping may be expressed as mapping information, vertex information of a texture image, texture coordinates, or an "attribute UV coordinate".

Furthermore, information on a color, an image, a moving image, and the like to be used as attribute information may be expressed as "parametric space".

A texture may be reflected in a three-dimensional object based on such attribute information. In other words, a colored three-dimensional object is formed in a three-dimensional space based on vertex information, connection information, and attribute information.

Note that while attribute information is associated with a vertex or a face in the description given above, alternatively, attribute information may be associated with an edge.

FIG. 3 is a conceptual diagram illustrating mapping according to the present embodiment. For example, a region of a two-dimensional image on a two-dimensional plane can be mapped to a face of a three-dimensional mesh in a three-dimensional space. Specifically, coordinate information of a region in the two-dimensional image is associated with a face of the three-dimensional mesh. Accordingly, an image of the mapped region in the two-dimensional image is reflected in the face of the three-dimensional mesh.

The use of mapping enables a two-dimensional image to be used as attribute information to be separated from the three-dimensional mesh. For example, in encoding of the three-dimensional mesh, the two-dimensional image may be encoded based on an image encoding system or a video encoding system.

### <System configuration>

FIG. 4 is a block diagram illustrating a configuration example of an encoding/decoding system according to the present embodiment. In FIG. 4, the encoding/decoding system includes encoding device 100 and decoding device 200.

For example, encoding device 100 acquires a three-dimensional mesh and encodes the three-dimensional mesh into a bitstream. In addition, encoding device 100 outputs the bitstream to network 300. For example, the bitstream includes an encoded three-dimensional mesh and control information for decoding the encoded three-dimensional mesh. Encoding of the three-dimensional mesh causes information of the three-dimensional mesh to be compressed.

Network 300 transmits the bitstream from encoding device 100 to decoding device 200. Network 300 may be the Internet, a wide area network (WAN), a local area network (LAN), or a combination thereof. Network 300 is not necessarily limited to two-way communication and may be a unidirectional communication network for terrestrial digital broadcasting, satellite broadcasting, or the like.

In addition, network 300 may be replaced with a recording medium such as a DVD (digital versatile disc), a BD (Blu-Ray Disc (registered trademark)), or the like.

Decoding device 200 acquires a bitstream and decodes a three-dimensional mesh from the bitstream. Decoding of the three-dimensional mesh causes information of the three-dimensional mesh to be expanded. For example, decoding device 200 decodes a three-dimensional mesh according to a decoding method corresponding to an encoding method used by encoding device 100 to encode the three-dimensional mesh. In other words, encoding device 100 and decoding device 200 perform encoding and decoding according to an encoding method and a decoding method which correspond to each other.

Note that the three-dimensional mesh before encoding can also be expressed as an original three-dimensional mesh. In addition, the three-dimensional mesh after decoding is also expressed as a reconstructed three-dimensional mesh.

### <Encoding device>

FIG. 5 is a block diagram illustrating a configuration example of encoding device 100 according to the present embodiment. For example, encoding device 100 includes vertex information encoder 101, connection information encoder 102, and attribute information encoder 103.

Vertex information encoder 101 is an electric circuit which encodes vertex information. For example, vertex information encoder 101 encodes vertex information into a bitstream according to a format defined with respect to the vertex information.

Connection information encoder 102 is an electric circuit which encodes connection information. For example, connection information encoder 102 encodes connection information into a bitstream according to a format defined with respect to the connection information.

Attribute information encoder 103 is an electric circuit which encodes attribute information. For example, attribute information encoder 103 encodes attribute information into a bitstream according to a format defined with respect to the attribute information.

Variable-length coding or fixed length coding may be used for encoding vertex information, connection information, and attribute information. The variable-length coding may accommodate Huffman coding, context-adaptive binary arithmetic coding (CABAC), or the like.

Vertex information encoder 101, connection information encoder 102, and attribute information encoder 103 may be integrated. Alternatively, each of vertex information encoder 101, connection information encoder 102, and attribute information encoder 103 may be further divided into a plurality of constituent elements.

FIG. 6 is a block diagram illustrating another configuration example of encoding device 100 according to the present embodiment. For example, in addition to the components illustrated in FIG. 5, encoding device 100 includes preprocessor 104 and postprocessor 105.

Preprocessor 104 is an electric circuit which performs processing before encoding of vertex information, connection information, and attribute information. For example, preprocessor 104 may perform transformation processing, demultiplexing, multiplexing, or the like with respect to a three-dimensional mesh before encoding. More specifically, for example, preprocessor 104 may demultiplex vertex information, connection information, and attribute information from the three-dimensional mesh before encoding.

Postprocessor 105 is an electric circuit which performs processing after the encoding of vertex information, connection information, and attribute information. For example, postprocessor 105 may perform transformation processing, demultiplexing, multiplexing, or the like with respect to vertex information, connection information, and attribute information after encoding. More specifically, for example, postprocessor 105 may multiplex vertex information, connection information, and attribute information after encoding into a bitstream. In addition, for example, postprocessor 105 may further perform variable-length coding with respect to vertex information, connection information, and attribute information after the encoding.

### <Decoding device>

FIG. 7 is a block diagram illustrating a configuration example of decoding device 200 according to the present embodiment. For example, decoding device 200 includes vertex information decoder 201, connection information decoder 202, and attribute information decoder 203.

Vertex information decoder 201 is an electric circuit which decodes vertex information. For example, vertex information decoder 201 decodes vertex information from a bitstream according to a format defined with respect to the vertex information.

Connection information decoder 202 is an electric circuit which decodes connection information. For example, connection information decoder 202 decodes connection information from a bitstream according to a format defined with respect to the connection information.

Attribute information decoder 203 is an electric circuit which decodes attribute information. For example, attribute information decoder 203 decodes attribute information from a bitstream according to a format defined with respect to the attribute information.

Variable-length decoding or fixed length decoding may be used for decoding vertex information, connection information, and attribute information. The variable-length decoding may accommodate Huffman coding, context-adaptive binary arithmetic coding (CABAC), or the like.

Vertex information decoder 201, connection information decoder 202, and attribute information decoder 203 may be integrated. Alternatively, each of vertex information decoder 201, connection information decoder 202, and attribute information decoder 203 may be further divided into a plurality of constituent elements.

FIG. 8 is a block diagram illustrating another configuration example of decoding device 200 according to the present embodiment. For example, in addition to the components illustrated in FIG. 7, decoding device 200 includes preprocessor 204 and postprocessor 205.

Preprocessor 204 is an electric circuit which performs processing before decoding of vertex information, connection information, and attribute information. For example, preprocessor 204 may perform transformation processing, demultiplexing, multiplexing, or the like with respect to a bitstream before decoding of vertex information, connection information, and attribute information.

More specifically, for example, preprocessor 204 may demultiplex, from a bitstream, a sub-bitstream corresponding to vertex information, a sub-bitstream corresponding to connection information, and a sub-bitstream corresponding to attribute information. In addition, for example, preprocessor 204 may perform variable-length decoding with respect to the bitstream in advance before decoding of vertex information, connection information, and attribute information.

Postprocessor 205 is an electric circuit which performs processing after the decoding of vertex information, connection information, and attribute information. For example, postprocessor 205 may perform transformation processing, demultiplexing, multiplexing, or the like with respect to vertex information, connection information, and attribute information after decoding. More specifically, for example, postprocessor 205 may multiplex vertex information, connection information, and attribute information after decoding into a three-dimensional mesh.

### <Bitstream>

Vertex information, connection information, and attribute information are encoded and stored in a bitstream. A relationship between these items of information and the bitstream will be described below.

FIG. 9 is a conceptual diagram illustrating a configuration example of a bitstream according to the present embodiment. In this example, connection information, vertex information, and attribute information are integrated in the bitstream. For example, connection information, vertex information, and attribute information may be included in one file.

In addition, a plurality of portions of the items of information may be sequentially stored such as a first portion of connection information, a first portion of vertex information, a first portion of attribute information, a second portion of connection information, a second portion of vertex information, a second portion of attribute information, and so on. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 10 is a conceptual diagram illustrating another configuration example of a bitstream according to the present embodiment. In the example, a plurality of files are included in a bitstream and connection information, vertex information, and attribute information are respectively stored in different files. While a file including connection information, a file including vertex information, and a file including attribute information are illustrated here, storage formats are not limited to this example. For example, two types of information among connection information, vertex information, and attribute information may be included in one file and the one remaining type of information may be included in another file.

Alternatively, the items of information can be stored by being divided into a larger number of files. For example, a plurality of portions of connection information may be stored in a plurality of files, a plurality of portions of vertex information may be stored in a plurality of files, and a plurality of portions of attribute information may be stored in a plurality of files. The plurality of portions may correspond to a plurality of temporally different portions, correspond to a plurality of spatially different portions, or correspond to a plurality of different faces.

Furthermore, an order of storage of connection information, vertex information, and attribute information is not limited to the example described above and an order of storage that differs from the above may be used.

FIG. 11 is a conceptual diagram illustrating another configuration example of a bitstream according to the present embodiment. In the example, a bitstream is constituted of a plurality of separable sub-bitstreams and connection information, vertex information, and attribute information are respectively stored in different sub-bitstreams.

While a sub-bitstream including connection information, a sub-bitstream including vertex information, and a sub-bitstream including attribute information are illustrated here, storage formats are not limited to this example.

For example, two types of information among connection information, vertex information, and attribute information may be included in one sub-bitstream and the one remaining type of information may be included in another sub-bitstream. Specifically, attribute information such as a two-dimensional image may be stored in a sub-bitstream conforming to an image encoding system separately from a sub-bitstream of connection information and vertex information.

In addition, each sub-bitstream may include a plurality of files. Furthermore, a plurality of portions of connection information may be stored in a plurality of files, a plurality of portions of vertex information may be stored in a plurality of files, and a plurality of portions of attribute information may be stored in a plurality of files.

Furthermore, an order of storage of connection information, vertex information, and attribute information is not limited to the example illustrated in FIG. 9, FIG. 10, and FIG. 11, and an order of storage that differs from this example may be used. For example, vertex information, connection information, and attribute information may be stored in a bitstream in this order. Alternatively, in an order other than this order, e.g., in any of orders: connection information, attribute information, and vertex information; vertex information, attribute information, and connection information; attribute information, connection information, and vertex information; and attribute information, vertex information, and connection information, these items of information may be stored in a bitstream.

Furthermore, each of connection information, vertex information, and attribute information may be divided into a plurality of data items, and the plurality of data items may be stored in a bitstream in a periodic order or in a random order.

### <Specific example>

FIG. 12 is a block diagram illustrating a specific example of the encoding/decoding system according to the present embodiment. In FIG. 12, the encoding/decoding system includes three-dimensional data encoding system 110, three-dimensional data decoding system 210, and external connector 310.

Three-dimensional data encoding system 110 includes controller 111, input/output processor 112, three-dimensional data encoder 113, three-dimensional data generator 115, and system multiplexer 114. Three-dimensional data decoding system 210 includes controller 211, input/output processor 212, three-dimensional data decoder 213, system demultiplexer 214, presenter 215, and user interface 216.

In three-dimensional data encoding system 110, sensor data is input from a sensor terminal to three-dimensional data generator 115. Three-dimensional data generator 115 generates three-dimensional data that is point cloud data, mesh data, or the like from the sensor data and inputs the three-dimensional data to three-dimensional data encoder 113.

For example, three-dimensional data generator 115 generates vertex information and generates connection information and attribute information which correspond to the vertex information. Three-dimensional data generator 115 may process vertex information when generating connection information and attribute information. For example, three-dimensional data generator 115 may reduce a data amount by deleting overlapping vertices or transform vertex information (position shift, rotation, normalization, or the like). In addition, three-dimensional data generator 115 may render attribute information.

While three-dimensional data generator 115 is a constituent element of three-dimensional data encoding system 110 in FIG. 12, three-dimensional data generator 115 may be disposed on the outside independent of three-dimensional data encoding system 110.

For example, a sensor terminal that provides sensor data for generating three-dimensional data may be a mobile object such as an automobile, a flying object such as an airplane, a mobile terminal, a camera, or the like. Alternatively, a range sensor such as LIDAR, a millimeter-wave radar, an infrared sensor, or a range finder, a stereo camera, a combination of a plurality of monocular cameras, or the like may be used as the sensor terminal.

The sensor data may be a distance (position) of an object, a monocular camera image, a stereo camera image, a color, a reflectance, an attitude or an orientation of a sensor, a gyro, a sensing position (GPS information or elevation), a velocity, an acceleration, a time of day of sensing, air temperature, air pressure, humidity, magnetism, or the like.

Three-dimensional data encoder 113 corresponds to encoding device 100 illustrated in FIG. 5 and the like. For example, three-dimensional data encoder 113 encodes three-dimensional data and generates encoded data. In addition, three-dimensional data encoder 113 generates control information when encoding the three-dimensional data. Furthermore, three-dimensional data encoder 113 inputs the encoded data to system multiplexer 114 together with the control information.

The encoding system of three-dimensional data may be an encoding system using geometry or an encoding system using a video codec. In this case, an encoding system using geometry may also be expressed as a geometry-based encoding system. An encoding system using a video codec may also be expressed as a video-based encoding system.

System multiplexer 114 multiplexes encoded data and control information input from three-dimensional data encoder 113 and generates multiplexed data using a prescribed multiplexing system. System multiplexer 114 may multiplex other media such as video, audio, subtitles, application data, or document files, reference time information, or the like together with the encoded data and control information of three-dimensional data. Furthermore, system multiplexer 114 may multiplex attribute information related to sensor data or three-dimensional data.

For example, multiplexed data has a file format for accumulation, a packet format for transmission, or the like. ISOBMFF or an ISOBMFF-based system may be used as an accumulation system or a transmission system. Alternatively, MPEG-DASH, MMT, MPEG-2 TS Systems, RTP, or the like may be used.

In addition, multiplexed data is output as a transmission signal by input/output processor 112 to external connector 310. The multiplexed data may be transmitted as a transmission signal in a wired manner or in a wireless manner. Alternatively, the multiplexed data is accumulated in an internal memory or a storage device. The multiplexed data may be transmitted via the Internet to a cloud server or stored in an external storage device.

For example, the transmission or accumulation of the multiplexed data is performed by a method in accordance with a medium for transmission or accumulation such as broadcasting or communication. As a communication protocol, http, ftp, TCP, UDP, IP, or a combination thereof may be used. In addition, a pull-type communication scheme may be used or a push-type communication scheme may be used.

Ethernet (registered trademark), USB, RS-232C, HDMI (registered trademark), a coaxial cable, or the like may be used for wired transmission. In addition, 3GPP (registered trademark), 3G/4G/5G as specified by IEEE, a wireless LAN, Wi-Fi, Bluetooth, or a millimeter-wave may be used for wireless transmission. Furthermore, for example, DVB-T2, DVB-S2, DVB-C2, ATSC 3.0, ISDB-S3, or the like may be used as a broadcasting system.

Note that sensor data may be input to three-dimensional data generator 115 or system multiplexer 114. In addition, three-dimensional data or encoded data may be output as-is as a transmission signal to external connector 310 via input/output processor 112. The transmission signal output from three-dimensional data encoding system 110 is input to three-dimensional data decoding system 210 via external connector 310.

In addition, each operation of three-dimensional data encoding system 110 may be controlled by controller 111 which executes application programs.

In three-dimensional data decoding system 210, a transmission signal is input to input/output processor 212. Input/output processor 212 decodes multiplexed data having a file format or a packet format from the transmission signal and inputs the multiplexed data to system demultiplexer 214. System demultiplexer 214 acquires encoded data and control information from the multiplexed data and inputs the encoded data and the control information to three-dimensional data decoder 213. System demultiplexer 214 may extract other media, reference time information, or the like from the multiplexed data.

Three-dimensional data decoder 213 corresponds to decoding device 200 illustrated in FIG. 7 and the like. For example, three-dimensional data decoder 213 decodes three-dimensional data from the encoded data based on an encoding system specified in advance. Subsequently, the three-dimensional data is presented to a user by presenter 215.

In addition, additional information such as sensor data may be input to presenter 215. Presenter 215 may present three-dimensional data based on the additional information. In addition, an instruction by the user may be input to user interface 216 from a user terminal. Furthermore, presenter 215 may present three-dimensional data based on the input instruction.

Note that input/output processor 212 may acquire three-dimensional data and encoded data from external connector 310.

In addition, each operation of three-dimensional data decoding system 210 may be controlled by controller 211 which executes application programs.

FIG. 13 is a conceptual diagram illustrating a configuration example of point cloud data according to the present embodiment. Point cloud data refers to data of a point cloud that indicates a three-dimensional object.

Specifically, a point cloud is constituted of a plurality of points and has position information which indicates a three-dimensional coordinate position of each point and attribute information which indicates an attribute of each point. The position information is also expressed as geometry.

For example, a type of attribute information may be a color, a reflectance, or the like. Attribute information related to one type may be associated with one point, attribute information related to a plurality of different types may be associated with one point, or attribute information having a plurality of values with respect to a same type may be associated with one point.

FIG. 14 is a conceptual diagram illustrating a data file example of the point cloud data according to the present embodiment. The example is an example of a case where items of position information and items of attribute information have a one-to-one correspondence and the example indicates position information and attribute information of N points which constitute the point cloud data. In this example, position information is information indicating a three-dimensional coordinate position by three axes of x, y, and z and attribute information is information indicating a color by RGB. As a representative data file of point cloud data, a PLY file or the like can be used.

FIG. 15 is a conceptual diagram illustrating a configuration example of mesh data according to the present embodiment. Mesh data is data used in CG (computer graphics) or the like and is data of a three-dimensional mesh which represents a three-dimensional shape of an object by a plurality of faces. Each face is also expressed as a polygon and has a polygonal shape such as a triangle or a quadrilateral.

Specifically, in addition to the plurality of points which constitute a point cloud, a three-dimensional mesh is constituted of a plurality of edges and a plurality of faces. Each point is also expressed as a vertex or a position. Each edge corresponds to a line segment which connects two vertices. Each face corresponds to an area enclosed by three or more edges.

In addition, a three-dimensional mesh has position information indicating three-dimensional coordinate positions of vertices. The position information is also expressed as vertex information or geometry. Furthermore, a three-dimensional mesh has connection information indicating a relationship among a plurality of vertices constituting an edge or a face. The connection information is also expressed as connectivity. In addition, a three-dimensional mesh has attribute information indicating an attribute with respect to a vertex, an edge, or a face. The attribute information in a three-dimensional mesh is also expressed as a texture.

For example, attribute information may indicate a color, a reflectance, or a normal vector with respect to a vertex, an edge, or a face. An orientation of a normal vector can express a front and a rear of a face.

An object file or the like may be used as a data file format of mesh data.

FIG. 16 is a conceptual diagram illustrating a data file example of the mesh data according to the present embodiment. In the example, a data file includes items of position information G(1) to G(N) of N vertices and items of attribute information A1(1) to A1(N) of N vertices which constitute a three-dimensional mesh. In addition, in the example, M items of attribute information A2(1) to A2(M) are included. An item of attribute information need not correspond one-to-one to a vertex and need not correspond one-to-one to a face. In addition, attribute information need not exist.

Connection information is indicated by a combination of indexes of vertices. n[1, 3, 4] indicates a face of a triangle constituted of three vertices n = 1, n = 3, and n = 4. In addition, m[2, 4, 6] indicates that items of attribute information m = 2, m = 4, and m = 6 respectively correspond to the three vertices.

In addition, a substantive content of the attribute information may be described in a separate file. Furthermore, a pointer with respect to the content may be associated with a vertex, a face, or the like. For example, attribute information indicating an image with respect to a face may be stored in a two-dimensional attribute map file. In addition, a file name of the attribute map and a two-dimensional coordinate value in the attribute map may be described in items of attribute information A2(1) to A2(M). Methods of designating attribute information with respect to a face are not limited to these methods and any kind of method may be used.

FIG. 17 is a conceptual diagram illustrating a type of three-dimensional data according to the present embodiment. Point cloud data and mesh data may either indicate a static object or a dynamic object. A static object is an object that does not temporally change and a dynamic object is an object that temporally changes. A static object may correspond to three-dimensional data with respect to an arbitrary time point.

For example, point cloud data with respect to an arbitrary time point may be expressed as a PCC frame. In addition, mesh data with respect to an arbitrary time point may be expressed as a mesh frame. Furthermore, a PCC frame and a mesh frame may be simply expressed as a frame.

In addition, an area of an object may be limited to a certain range in a similar manner to ordinary video data or need not be limited in a similar manner to map data. Furthermore, a density of points or faces may be set in various ways. Sparse point cloud data or sparse mesh data may be used or dense point cloud data or dense mesh data may be used.

Next, encoding and decoding of a point cloud or a three-dimensional mesh will be described. A device, processing, or a syntax for encoding and decoding vertex information of a three-dimensional mesh according to the present disclosure may be applied to the encoding and decoding of a point cloud. A device, processing, or a syntax for encoding and decoding a point cloud according to the present disclosure may be applied to the encoding and decoding of vertex information of a three-dimensional mesh.

In addition, a device, processing, or a syntax for encoding and decoding attribute information of a point cloud according to the present disclosure may be applied to the encoding and decoding of connection information or attribute information of a three-dimensional mesh. Furthermore, a device, processing, or a syntax for encoding and decoding connection information or attribute information of a three-dimensional mesh according to the present disclosure may be applied to the encoding and decoding of attribute information of a point cloud.

Furthermore, at least a part of processing may be commonalized between the encoding and decoding of point cloud data and the encoding and decoding of mesh data. This can reduce the size and complexity of circuits and software programs.

FIG. 18 is a block diagram illustrating a configuration example of three-dimensional data encoder 113 according to the present embodiment. In this example, three-dimensional data encoder 113 includes vertex information encoder 121, attribute information encoder 122, metadata encoder 123, and multiplexer 124. Vertex information encoder 121, attribute information encoder 122, and multiplexer 124 may correspond to vertex information encoder 101, attribute information encoder 103, postprocessor 105, and the like illustrated in FIG. 6.

In addition, in this example, three-dimensional data encoder 113 encodes three-dimensional data according to a geometry-based encoding system. Encoding according to the geometry-based encoding system takes a three-dimensional structure into consideration. Furthermore, in encoding according to the geometry-based encoding system, attribute information is encoded using configuration information obtained during encoding of vertex information.

Specifically, first, vertex information, attribute information, and metadata included in three-dimensional data generated from sensor data are respectively input to vertex information encoder 121, attribute information encoder 122, and metadata encoder 123. In this case, connection information included in three-dimensional data may be handled in a similar manner to attribute information. In addition, in the case of point cloud data, position information may be handled as vertex information.

Vertex information encoder 121 encodes vertex information into compressed vertex information and outputs the compressed vertex information to multiplexer 124 as encoded data. In addition, vertex information encoder 121 generates metadata of the compressed vertex information and outputs the metadata to multiplexer 124. Furthermore, vertex information encoder 121 generates configuration information and outputs the configuration information to attribute information encoder 122.

Attribute information encoder 122 encodes attribute information into compressed attribute information using the configuration information generated by vertex information encoder 121 and outputs the compressed attribute information to multiplexer 124 as encoded data. In addition, attribute information encoder 122 generates metadata of the compressed attribute information and outputs the metadata to multiplexer 124.

Metadata encoder 123 encodes compressible metadata into compressed metadata and outputs the compressed metadata to multiplexer 124 as encoded data. The metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 19 is a block diagram illustrating a configuration example of three-dimensional data decoder 213 according to the present embodiment. In this example, three-dimensional data decoder 213 includes vertex information decoder 221, attribute information decoder 222, metadata decoder 223, and demultiplexer 224. Vertex information decoder 221, attribute information decoder 222, and demultiplexer 224 may correspond to vertex information decoder 201, attribute information decoder 203, preprocessor 204, and the like illustrated in FIG. 8.

In addition, in this example, three-dimensional data decoder 213 decodes three-dimensional data according to a geometry-based encoding system. Decoding according to the geometry-based encoding system takes a three-dimensional structure into consideration. Furthermore, in decoding according to the geometry-based encoding system, attribute information is decoded using configuration information obtained during decoding of vertex information.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information and the metadata of the compressed vertex information are input to vertex information decoder 221. The compressed attribute information and the metadata of the compressed attribute information are input to attribute information decoder 222. The metadata is input to metadata decoder 223.

Vertex information decoder 221 decodes vertex information from the compressed vertex information using the metadata of the compressed vertex information. In addition, vertex information decoder 221 generates configuration information and outputs the configuration information to attribute information decoder 222. Attribute information decoder 222 decodes attribute information from the compressed attribute information using the configuration information generated by vertex information decoder 221 and the metadata of the compressed attribute information. Metadata decoder 223 decodes metadata from the compressed metadata. The metadata decoded by metadata decoder 223 may be used to decode vertex information and to decode attribute information.

Subsequently, the vertex information, the attribute information, and the metadata are output from three-dimensional data decoder 213 as three-dimensional data. For example, the metadata is metadata of vertex information and attribute information and can be used in an application program.

FIG. 20 is a block diagram illustrating another configuration example of three-dimensional data encoder 113 according to the present embodiment. In this example, three-dimensional data encoder 113 includes vertex image generator 131, attribute image generator 132, metadata generator 133, video encoder 134, metadata encoder 123, and multiplexer 124. Vertex image generator 131, attribute image generator 132, and video encoder 134 may correspond to vertex information encoder 101, attribute information encoder 103, and the like illustrated in FIG. 6.

In addition, in this example, three-dimensional data encoder 113 encodes three-dimensional data according to a video-based encoding system. In encoding according to the video-based encoding system, a plurality of two-dimensional images are generated from three-dimensional data and the plurality of two-dimensional images are encoded according to a video encoding system. In this case, the video encoding system may be high efficiency video coding (HEVC), versatile video coding (VVC), or the like.

Specifically, first, vertex information and attribute information included in three-dimensional data generated from sensor data are input to metadata generator 133. In addition, the vertex information and the attribute information are respectively input to vertex image generator 131 and attribute image generator 132. Furthermore, the metadata included in the three-dimensional data is input to metadata encoder 123. In this case, connection information included in three-dimensional data may be handled in a similar manner to attribute information. In addition, in the case of point cloud data, position information may be handled as vertex information.

Metadata generator 133 generates map information of a plurality of two-dimensional images from the vertex information and the attribute information. In addition, metadata generator 133 inputs the map information into vertex image generator 131, attribute image generator 132, and metadata encoder 123.

Vertex image generator 131 generates a vertex image based on the vertex information and the map information and inputs the vertex image into video encoder 134. Attribute image generator 132 generates an attribute image based on the attribute information and the map information and inputs the attribute image into video encoder 134.

Video encoder 134 respectively encodes the vertex image and the attribute image into compressed vertex information and compressed attribute information according to the video encoding system and outputs the compressed vertex information and the compressed attribute information to multiplexer 124 as encoded data. In addition, video encoder 134 generates metadata of the compressed vertex information and metadata of the compressed attribute information and outputs the items of metadata to multiplexer 124.

Metadata encoder 123 encodes compressible metadata into compressed metadata and outputs the compressed metadata to multiplexer 124 as encoded data. Compressible metadata includes map information. In addition, the metadata encoded by metadata encoder 123 may be used to encode vertex information and to encode attribute information.

Multiplexer 124 multiplexes the compressed vertex information, the metadata of the compressed vertex information, the compressed attribute information, the metadata of the compressed attribute information, and the compressed metadata into a bitstream. In addition, multiplexer 124 inputs the bitstream into a system layer.

FIG. 21 is a block diagram illustrating another configuration example of three-dimensional data decoder 213 according to the present embodiment. In this example, three-dimensional data decoder 213 includes vertex information generator 231, attribute information generator 232, video decoder 234, metadata decoder 223, and demultiplexer 224. Vertex information generator 231, attribute information generator 232, and video decoder 234 may correspond to vertex information decoder 201, attribute information decoder 203, and the like illustrated in FIG. 8.

In addition, in this example, three-dimensional data decoder 213 decodes three-dimensional data according to a video-based encoding system. In decoding according to the video-based encoding system, a plurality of two-dimensional images are decoded according to a video encoding system and three-dimensional data is generated from the plurality of two-dimensional images. In this case, the video encoding system may be high efficiency video coding (HEVC), versatile video coding (VVC), or the like.

Specifically, first, a bitstream is input from a system layer into demultiplexer 224. Demultiplexer 224 separates compressed vertex information, metadata of the compressed vertex information, compressed attribute information, metadata of the compressed attribute information, and compressed metadata from the bitstream. The compressed vertex information, the metadata of the compressed vertex information, the compressed attribute information, and the metadata of the compressed attribute information are input to video decoder 234. The compressed metadata is input to metadata decoder 223.

Video decoder 234 decodes a vertex image according to the video encoding system. In doing so, video decoder 234 decodes the vertex image from the compressed vertex information using the metadata of the compressed vertex information. In addition, video decoder 234 inputs the vertex image into vertex information generator 231. Furthermore, video decoder 234 decodes an attribute image according to the video encoding system. In doing so, video decoder 234 decodes the attribute image from the compressed attribute information using the metadata of the compressed attribute information. In addition, video decoder 234 inputs the attribute image into attribute information generator 232.

Metadata decoder 223 decodes metadata from the compressed metadata. The metadata decoded by metadata decoder 223 includes map information to be used to generate vertex information and to generate attribute information. In addition, the metadata decoded by metadata decoder 223 may be used to decode the vertex image and to decode the attribute image.

Vertex information generator 231 reproduces vertex information from the vertex image according to the map information included in the metadata decoded by metadata decoder 223. Attribute information generator 232 reproduces attribute information from the attribute image according to the map information included in the metadata decoded by metadata decoder 223.

Subsequently, the vertex information, the attribute information, and the metadata are output from three-dimensional data decoder 213 as three-dimensional data. For example, the metadata is metadata of vertex information and attribute information and can be used in an application program.

FIG. 22 is a conceptual diagram illustrating a specific example of encoding processing according to the present embodiment. FIG. 22 illustrates three-dimensional data encoder 113 and description encoder 148. In this example, three-dimensional data encoder 113 includes two-dimensional data encoder 141 and mesh data encoder 142. Two-dimensional data encoder 141 includes texture encoder 143. Mesh data encoder 142 includes vertex information encoder 144 and connection information encoder 145.

Vertex information encoder 144, connection information encoder 145, and texture encoder 143 may correspond to vertex information encoder 101, connection information encoder 102, attribute information encoder 103, and the like illustrated in FIG. 6.

For example, two-dimensional data encoder 141 operates as texture encoder 143 and generates a texture file by encoding a texture corresponding to attribute information as two-dimensional data according to an image encoding system or a video encoding system.

In addition, mesh data encoder 142 operates as vertex information encoder 144 and connection information encoder 145 and generates a mesh file by encoding vertex information and connection information. Mesh data encoder 142 may further encode mapping information with respect to a texture. The encoded mapping information may be included in a mesh file.

In addition, description encoder 148 generates a description file by encoding a description corresponding to metadata such as text data. Description encoder 148 may encode a description in the system layer. For example, description encoder 148 may be included in system multiplexer 114 illustrated in FIG. 12.

Due to the operation described above, a bitstream including a texture file, a mesh file, and a description file is generated. The files may be multiplexed in the bitstream in a file format such as graphics language transmission format (glTF) or universal scene description (USD).

Note that three-dimensional data encoder 113 may include two mesh data encoders as mesh data encoder 142. For example, one mesh data encoder encodes vertex information and connection information of a static three-dimensional mesh and the other mesh data encoder encodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter prediction. In addition, as information of the dynamic three-dimensional mesh, difference information between vertex information or connection information of the intra-frame three-dimensional mesh and vertex information or connection information of the inter-frame three-dimensional mesh may be used.

FIG. 23 is a conceptual diagram illustrating a specific example of decoding processing according to the present embodiment. FIG. 23 illustrates three-dimensional data decoder 213, description decoder 248, and presenter 247. In this example, three-dimensional data decoder 213 includes two-dimensional data decoder 241, mesh data decoder 242, and mesh reconstructor 246. Two-dimensional data decoder 241 includes texture decoder 243. Mesh data decoder 242 includes vertex information decoder 244 and connection information decoder 245.

Vertex information decoder 244, connection information decoder 245, texture decoder 243, and mesh reconstructor 246 may correspond to vertex information decoder 201, connection information decoder 202, attribute information decoder 203, postprocessor 205, and the like illustrated in FIG. 8. Presenter 247 may correspond to presenter 215 and the like illustrated in FIG. 12.

For example, two-dimensional data decoder 241 operates as texture decoder 243 and decodes a texture corresponding to attribute information from a texture file as two-dimensional data according to an image encoding system or a video encoding system.

In addition, mesh data decoder 242 operates as vertex information decoder 244 and connection information decoder 245 and decodes vertex information and connection information from a mesh file. Mesh data decoder 242 may further decode mapping information with respect to a texture from the mesh file.

Furthermore, description decoder 248 decodes a description corresponding to metadata such as text data from a description file. Description decoder 248 may decode a description in the system layer. For example, description decoder 248 may be included in system demultiplexer 214 illustrated in FIG. 12.

Mesh reconstructor 246 reconstructs a three-dimensional mesh from vertex information, connection information, and a texture according to a description. Presenter 247 renders and outputs the three-dimensional mesh according to the description.

Due to the operation described above, a three-dimensional mesh is reconstructed and output from a bitstream including a texture file, a mesh file, and a description file.

Note that three-dimensional data decoder 213 may include two mesh data decoders as mesh data decoder 242. For example, one mesh data decoder decodes vertex information and connection information of a static three-dimensional mesh and the other mesh data decoder decodes vertex information and connection information of a dynamic three-dimensional mesh.

In addition, two mesh files may be included in the bitstream so as to correspond to the three-dimensional meshes. For example, one mesh file corresponds to the static three-dimensional mesh and the other mesh file corresponds to the dynamic three-dimensional mesh.

Furthermore, the static three-dimensional mesh may be an intra-frame three-dimensional mesh which is encoded using intra-prediction and the dynamic three-dimensional mesh may be an inter-frame three-dimensional mesh which is encoded using inter prediction. In addition, as information of the dynamic three-dimensional mesh, difference information between vertex information or connection information of the intra-frame three-dimensional mesh and vertex information or connection information of the inter-frame three-dimensional mesh may be used.

An encoding system of a dynamic three-dimensional mesh may be called dynamic mesh coding (DMC). In addition, a video-based encoding system of a dynamic three-dimensional mesh may be called video-based dynamic mesh coding (V-DMC).

An encoding system of a point cloud may be called point cloud compression (PCC). A video-based encoding system of a point cloud may be called video-based point cloud compression (V-PCC). In addition, a geometry-based encoding system of a point cloud may be called geometry-based point cloud compression (G-PCC).

### <Implementation example>

FIG. 24 is a block diagram illustrating an implementation example of encoding device 100 according to the present embodiment. Encoding device 100 includes circuit 151 and memory 152. For example, a plurality of constituent elements of encoding device 100 illustrated in FIG. 5 and the like are implemented by circuit 151 and memory 152 illustrated in FIG. 24.

Circuit 151 is a circuit which performs information processing and which is capable of accessing memory 152. For example, circuit 151 is a dedicated or general-purpose electric circuit which encodes a three-dimensional mesh. Circuit 151 may be a processor such as a CPU. Alternatively, circuit 151 may be a set of a plurality of electric circuits.

Memory 152 is a dedicated or general-purpose memory that stores information used by circuit 151 to encode a three-dimensional mesh. Memory 152 may be an electric circuit and may be connected to circuit 151. In addition, memory 152 may be included in circuit 151. Alternatively, memory 152 may be a set of a plurality of electric circuits. Furthermore, memory 152 may be a magnetic disk, an optical disk, or the like or may be expressed as a storage, a recording medium, or the like. In addition, memory 152 may be a non-volatile memory or a volatile memory.

For example, memory 152 may store a three-dimensional mesh or a bitstream. In addition, memory 152 may store a program used by circuit 151 to encode a three-dimensional mesh.

Note that in encoding device 100, all of the plurality of constituent elements illustrated in FIG. 5 and the like need not be implemented and all of the plurality of processing steps described herein need not be performed. A part of the plurality of constituent elements illustrated in FIG. 5 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in encoding device 100.

FIG. 25 is a block diagram illustrating an implementation example of decoding device 200 according to the present embodiment. Decoding device 200 includes circuit 251 and memory 252. For example, a plurality of constituent elements of decoding device 200 illustrated in FIG. 7 and the like are implemented by circuit 251 and memory 252 illustrated in FIG. 25.

Circuit 251 is a circuit which performs information processing and which is capable of accessing memory 252. For example, circuit 251 is a dedicated or general-purpose electric circuit which decodes a three-dimensional mesh. Circuit 251 may be a processor such as a CPU. Alternatively, circuit 251 may be a set of a plurality of electric circuits.

Memory 252 is a dedicated or general-purpose memory that stores information used by circuit 251 to decode a three-dimensional mesh. Memory 252 may be an electric circuit and may be connected to circuit 251. In addition, memory 252 may be included in circuit 251. Alternatively, memory 252 may be a set of a plurality of electric circuits. Furthermore, memory 252 may be a magnetic disk, an optical disk, or the like or may be expressed as a storage, a recording medium, or the like. In addition, memory 252 may be a non-volatile memory or a volatile memory.

For example, memory 252 may store a three-dimensional mesh or a bitstream. In addition, memory 252 may store a program used by circuit 251 to decode a three-dimensional mesh.

Note that in decoding device 200, all of the plurality of constituent elements illustrated in FIG. 7 and the like need not be implemented and all of the plurality of processing steps described herein need not be performed. A part of the plurality of constituent elements illustrated in FIG. 7 and the like may be included in another device and a part of the plurality of processing steps described herein may be executed by another device. In addition, a plurality of constituent elements according to the present disclosure may be optionally combined and implemented or a plurality of processing steps according to the present disclosure may be optionally combined and executed in decoding device 200.

An encoding method and a decoding method including steps performed by each constituent element of encoding device 100 and decoding device 200 according to the present disclosure may be executed by any device or system. For example, a part of or all of the encoding method and the decoding method may be executed by a computer including a processor, a memory, an input/output circuit, and the like. In doing so, the encoding method and the decoding method may be executed by having the computer execute a program that enables the computer to execute the encoding method and the decoding method.

In addition, a program or a bitstream may be recorded on a non-transitory computer-readable recording medium such as a CD-ROM.

An example of a program may be a bitstream. For example, a bitstream including an encoded three-dimensional mesh includes a syntax element that enables decoding device 200 to decode the three-dimensional mesh. In addition, the bitstream causes decoding device 200 to decode the three-dimensional mesh according to the syntax element included in the bitstream. Therefore, a bitstream can perform a similar role to a program.

The bitstream described above may be an encoded bitstream including an encoded three-dimensional mesh or a multiplexed bitstream including an encoded three-dimensional mesh and other information.

In addition, each constituent element of encoding device 100 and decoding device 200 may be constituted of dedicated hardware, general-purpose hardware which executes the program or the like described above, or a combination thereof. Furthermore, the general-purpose hardware may be constituted of a memory on which a program is recorded, a general-purpose processor which reads the program from the memory and executes the program, and the like. In this case, the memory may be a semiconductor memory, a hard disk, or the like and the general-purpose processor may be a CPU or the like.

Furthermore, the dedicated hardware may be constituted of a memory, a dedicated processor, and the like. For example, the dedicated processor may execute the encoding method and the decoding method by referring to a memory for recording data.

In addition, as described above, the respective constituent elements of encoding device 100 and decoding device 200 may be electric circuits. The electric circuits may constitute one electric circuit as a whole or may be respectively different electric circuits. Furthermore, the electric circuits may correspond to dedicated hardware or to general-purpose hardware which executes the program or the like described above. Moreover, encoding device 100 and decoding device 200 may be implemented as integrated circuits.

In addition, encoding device 100 may be a transmitting device which transmits a three-dimensional mesh. Decoding device 200 may be a receiving device which receives a three-dimensional mesh.

### <Encoding and Decoding of Displacement>

The following terms will be used herein as examples.

### (1) Image

An image is a data unit composed of a set of pixels, and includes a picture or a block smaller than a picture. Images include video as well as still pictures.

### (2) Picture

A picture is an image processing unit composed of a set of pixels, and may also be referred to as a frame or field.

### (3) Block

A block is a processing unit composed of a specific number of pixels. The following terms may also be used for blocks as illustrated in the examples below. The shape of a block is not particularly limited. A block can be, for example, a rectangular shape of M×N pixels, or a square shape of M×M pixels. A block may be a triangular shape, a circular shape, or other shapes. Examples of blocks are as follows.
- slice, tile, or brick
- CTU, superblock, or basic splitting unit
- VPDU, hardware processing splitting unit
- CU, processing block unit, prediction block unit (PU), or orthogonal transform block unit (TU)
- sub-block

### (4) Pixel or sample

A pixel or sample is the smallest point of an image, in other words, the smallest unit. A pixel or sample includes not only pixels at integer positions, but also pixels at sub-pixel positions generated based on pixels at integer positions.

### (5) Pixel value or sample value

A pixel value or sample value is an eigenvalue of a pixel. A pixel value or sample value includes a luma value, a chroma value, or an RGB gradation level, and can also include a depth value or a binary value of 0 or 1.

### (6) Flag

A flag indicates one or more bits. A flag is, for example, a parameter or index represented by two or more bits. A flag can also indicate not only a value represented by a binary number, but also a value represented by a number other than a binary number.

### (7) Signal

A signal refers to something that has been symbolized or encoded to convey information. A signal includes a discrete digital signal or a continuous analog signal.

### (8) Stream or bitstream

A stream or bitstream is a digital data sequence indicating a flow of digital data. A stream or bitstream may be one stream or may include a plurality of streams having a plurality of hierarchical layers. A stream or bitstream may be transmitted by serial communication using a single transmission path or may be transmitted by packet communication using a plurality of transmission paths.

### (9) Difference

In the case of a scalar quantity, a difference can include a simple difference (x - y) and difference calculation. A difference can include an absolute value of a difference (|x - y|), a square of a difference (x^2 - y^2), a square root of a difference (√(x - y)), a weighted difference (ax - by, where a and b are constants), an offset difference (x - y + a, where a is an offset), or the like.

### (10) Sum

In the case of a scalar quantity, a sum can include a simple sum (x + y) and addition calculation. A sum can include an absolute value of a sum (|x + y|), a sum of squares (x^2 + y^2), a square root of a sum (√(x + y)), a weighted sum (ax + by, where a and b are constants), an offset sum (x + y + a, where a is an offset), or the like.

### (11) Based on

The expression "based on something" means that things other than that "something" may be considered. "Based on" may be used both when a direct result is obtained and when a result is obtained through an intermediate result.

### (12) "Used" or "use"

The expression "something is used" or "something was used" means that things other than that "something" may be considered. The expression "used" or "was used" may be used both when a direct result is obtained and when a result is obtained through an intermediate result.

### (13) Prohibited

"Prohibited" can be rephrased as "not permitted". "Not prohibited/prohibited" or "permitted/permitted" does not necessarily mean an obligation.

### (14) "Restriction" or "limitation"

"Restriction" or "limitation" can be rephrased as "do not permit/do not allow" or "not permitted/permitted". "Prohibited/not prohibited" or "not permitted/permitted" does not necessarily mean an obligation. What is prohibited quantitatively or qualitatively may be a part or all.

### (15) Chroma

The term chroma is an adjective represented by the symbol Cb or Cr, and indicates that a sample array or single sample represents one of two color difference signals related to primary colors. The term chroma may be used in place of the term chrominance.

### (16) Luma

The term luma is an adjective represented by the symbol or subscript Y or L, and indicates that a sample array or single sample represents a monochrome signal related to primary colors. Term luma may be used in place of the term luminance.

Hereinafter, the encoding/decoding system according to the present embodiment will be described.

In general, a three-dimensional model (also referred to as a 3D model) represents an object digitally such that a user can explore the model using zooming, panning, and rotation in all three dimensions while rendering it temporally. One way to construct such a representation is to construct a 3D mesh using triangles. The model stores the positions of the vertices of the triangles, connectivity of the vertices of the triangles with each other, and the attributes associated therewith (such as a normal or UV patches).

Storing all of this information in an uncompressed format requires very large storage space, and therefore the bandwidth for transmission becomes very large. The triangles forming the mesh often have a repetitive pattern and similar attributes especially in the temporal and spatial neighborhood. The repetition can be used to formulate efficient encoding and decoding methods for storage and transmission. One such encoding method and decoding method is Video-based Dynamic Mesh Coding (V-DMC).

FIG. 26 is a block diagram illustrating another configuration example of the encoding/decoding system according to the present embodiment. As illustrated in FIG. 26, the encoding/decoding system includes encoding device 100 and decoding device 200.

The encoding/decoding system receives a three-dimensional mesh (also referred to as 3D mesh) that is input in the format of three-dimensional coordinates of vertices (vertex information), connectivity (connection information), and associated attributes (attribute information). Note that the 3D mesh can include not only geometry but also a texture map.

Encoding device 100 receives the 3D mesh that has been input (also referred to as input 3D mesh or input mesh) in the format of three-dimensional coordinates of vertices, connectivity, and associated attributes. Encoding device 100 encodes all related information into a stream. The stream may be a single bitstream or a plurality of bitstreams.

Network 300 transmits the stream generated by the encoding device to decoding device 200. Network 300 may be the Internet, a wide area network (WAN), a local area network (LAN), or any combination thereof. Network 300 is not necessarily limited to a two-way communication network and may be a unidirectional communication network that transmits broadcast waves for terrestrial digital broadcasting, satellite broadcasting, or the like. In addition, instead of network 300, a recording medium such as a DVD (digital versatile disc) or a BD (Blu-Ray Disc) on which a stream is recorded may be used.

The stream is transmitted to decoding device 200 via network 300. Decoding device 200 decodes the bitstream to produce a three-dimensional mesh using the decoded vertices' three-dimensional coordinates, connectivity, and associated attributes. Decoding device 200 outputs the generated three-dimensional mesh (also referred to as output 3D mesh or output mesh).

FIG. 27 illustrates another configuration example of encoding device 100.

As illustrated in FIG. 27, encoding device 100 includes preprocessor 1103 and compressor 1106.

Encoding device 100 reads input mesh 1101 and attribute map 1102, and passes them to preprocessor 1103. Preprocessor 1103 processes the input mesh to extract base mesh 1104 and displacement data 1105. Attribute map 1102 is passed to compressor 1106 together with extracted base mesh 1104 and displacement data 1105.

Compressor 1106 compresses base mesh 1104, displacement data 1105, and attribute map 1102 to generate bitstream 1107. Compressor 1106 can transmit additional information to decoding device 200 by further including metadata 1108 in bitstream 1107.

FIG. 28 illustrates another configuration example of decoding device 200.

As illustrated in FIG. 28, decoding device 200 includes decompressor 2102 and postprocessor 2106.

Decoding device 200 reads bitstream 2101 and passes it to decompressor 2102. Decompressor 2102 decompresses base mesh 2103, displacement data 2104, and attribute map 2108 from bitstream 2101, and passes them to postprocessor 2106. One example of displacement data 2104 is displacement vectors.

Postprocessor 2106 processes base mesh 2103 according to displacement data 2104 and attribute map 2108 to generate output mesh 2107. Postprocessor 2106 may further use information from metadata 2105 to generate output mesh 2107.

FIG. 29 is a block diagram illustrating yet another configuration example of encoding device 100 according to the present embodiment.

In this example, encoding device 100 includes volumetric capturer 511, projector 512, base mesh encoder 513, displacement encoder 514, and attribute encoder 515, and optionally includes one or more encoders 516 of other types.

Volumetric capturer 511 captures a content and outputs the captured content to projector 512.

Projector 512 projects the content onto a three-dimensional mesh frame that includes vertex geometry coordinates (vertex coordinates indicating the position of a vertex), texture coordinates, and connectivity data (connection information). The data is output to base mesh encoder 513, displacement encoder 514, and attribute encoder 515, and optionally to one or more encoders 516 of other types. Each encoder compresses the data into a bitstream.

FIG. 30 is a block diagram illustrating yet another configuration example of decoding device 200 according to the present embodiment.

In this example, decoding device 200 includes base mesh decoder 613, displacement decoder 614, attribute decoder 615, one or more decoders 616 of other types, and three-dimensional reconstructor 617.

A bitstream is sent to base mesh decoder 613, displacement decoder 614, and attribute decoder 615 and optionally to one or more decoders 616 of other types. These decoders decode the bitstream to produce decoded data including vertex geometry coordinates, texture coordinates, and connectivity data. The decoded data is then sent to three-dimensional reconstructor 617, where a three-dimensional mesh frame is reconstructed.

Hereinafter, the encoding processing performed by encoding device 100 will be described in detail.

FIG. 31 is a flowchart illustrating processing of encoding device 100. FIG. 32 is an explanatory diagram conceptually illustrating encoding of a mesh frame. With reference to FIG. 31 and FIG. 32, processes performed by encoding device 100 will be described.

In step S101, encoding device 100 reads the 3D mesh frame that is the input mesh frame, and its attributes. The input mesh frame is a mesh frame input into encoding device 100. An example of a 3D mesh frame that is the input mesh frame is illustrated as mesh frame 1301 (see FIG. 32).

In step S102, encoding device 100 generates a base mesh frame having fewer vertices than the input mesh frame by performing decimation processing on the input mesh frame read in step S101. A base mesh frame generated by decimating mesh frame 1301 is illustrated as base mesh frame 1302 (see FIG. 32).

In step S103, encoding device 100 calculates displacement information used by decoding device 200 to reconstruct the mesh frame. The displacement information corresponds to displacement vectors from vertices of the base mesh frame generated in step S102 toward vertices of the input mesh frame. Methods for calculating the displacement information include a method of subtracting the coordinates of vertices of the base mesh frame from the coordinates of vertices of the input mesh frame. Displacement information calculated from mesh frame 1301 and base mesh frame 1302 is illustrated as displacement information 1303 (see FIG. 32). Displacement information 1303 is in vector format, or in other words, is expressed as displacement vectors.

In step S104, encoding device 100 encodes the base mesh frame generated in step S102, the displacement information generated in step S103, and the attributes of the input mesh frame into a bitstream (corresponding to a compressed bitstream). An example of a bitstream is illustrated as bitstream 1304 (see FIG. 32).

More specifically, bitstream 1304 includes the vertex coordinates and connection information of vertices A, C, E, and F, the displacement information, a video bitstream including the texture data, and a compressed attribute map (see FIG. 32). The displacement information includes displacement information for displacing vertices based on vertex coordinates obtained from the subdivided base mesh frame. The compressed attribute map is texture coordinates for applying texture data to a mesh frame reconstructed using the base mesh frame and the displacement information.

Hereinafter, the decoding processing performed by decoding device 200 will be described in detail.

FIG. 33 is a flowchart illustrating processing of decoding device 200. FIG. 34 is an explanatory diagram conceptually illustrating decoding of a 3D mesh. With reference to FIG. 33 and FIG. 34, processes performed by decoding device 200 will be described.

In step S201, decoding device 200 decodes the base mesh frame and attributes from the bitstream (corresponding to the compressed bitstream). An example of a decoded base mesh frame (corresponding to a decoded base mesh frame) is illustrated as decoded base mesh frame 2301 (see FIG. 34).

In step S202, decoding device 200 generates subdivided vertices by performing subdivision processing on the base mesh frame decoded in step S201. An example of a base mesh frame including subdivided vertices is illustrated as base mesh frame 2302 (see FIG. 34).

In step S203, decoding device 200 decodes displacement information from the bitstream (corresponding to the compressed bitstream). An example of decoded displacement information is illustrated as displacement information 2303 (see FIG. 34). Displacement information 2303 is in vector format, or in other words, is expressed as displacement vectors.

In step S204, decoding device 200 reconstructs the shape of the mesh frame by moving the vertices of the base mesh frame including the subdivided vertices to new positions using the displacement information, and restores the mesh frame by applying the attribute information. One example of an attribute is texture. An example of a reconstructed mesh frame is illustrated as mesh frame 2304 (see FIG. 34).

FIG. 35 is a block diagram illustrating a configuration example of the decoding device according to the present embodiment.

FIG. 35 illustrates an example of a block diagram of general intra decoding.

The decoding device illustrated in FIG. 35 includes demultiplexer 1231, switch 1232, static mesh decoder 1233, mesh buffer 1234, motion decoder 1235, base mesh reconstructor 1236, inverse quantizer 1237, video decoder 1238, image unpacker 1239, inverse quantizer 1240, inverse wavelet transformer 1241, reconstructor 1242, video decoder 1243, and color converter 1244.

Demultiplexer 1231 obtains the compressed bitstream and separates compressed data related to the base mesh, video including displacement data (also referred to as displacement bitstream), and video including attribute data (also referred to as attribute bitstream). The compressed data related to the base mesh is passed to switch 1232. Switch 1232 determines whether to perform intra decoding processing or inter decoding processing based on a parameter in the bitstream.

When the intra decoding processing is selected, the bitstream is passed to static mesh decoder 1233 that generates a quantized base mesh. Static mesh decoder 1233 is, for example, a decoder that uses the Edgebreaker algorithm to decode 3D mesh data. Static mesh decoder 1233 generates a quantized base mesh from the bitstream. The quantized base mesh generated by static mesh decoder 1233 is stored in mesh buffer 1234 for reference when the inter decoding processing is selected.

When the inter decoding processing is selected, switch 1232 passes the compressed data related to the base mesh to motion decoder 1235. Motion decoder 1235 receives a previously decoded, quantized base mesh, and decodes motion data representing a difference in coordinates of vertices between the quantized base mesh stored in mesh buffer 1234 and the current quantized base mesh. The motion data and the quantized base mesh stored in mesh buffer 1234 are used by base mesh reconstructor 1236 to reconstruct the current quantized base mesh. The quantized base mesh obtained from the inter decoding processing or the intra decoding processing is passed to inverse quantizer 1237 to obtain a decoded base mesh.

The video including the displacement data is passed to video decoder 1238 because the bitstream includes displacement data in an image format having two items of chroma information and one item of luma information. Video decoder 1238 decodes the data using a video frame decompression method. In another example, the displacement data is decoded using an arithmetic decoder. This decompressed data is passed to image unpacker 1239, which extracts wavelet coefficients associated with each vertex from the decompressed data in image format. Inverse quantizer 1240 performs inverse quantization on the quantized wavelet coefficients with three components associated with each vertex. Inverse wavelet transformer 1241 performs inverse transformation on the result to obtain finally decoded displacement data. The decoded displacement data and the decoded base mesh are passed to reconstructor 1242. Reconstructor 1242 performs subdivision of edges of the decoded base mesh, displaces vertices using the decoded displacement data, and obtains a decoded mesh.

The video including the attribute data is passed to another video decoder 1243 to obtain a decoded attribute bitstream. The decoded attribute bitstream is further processed by color converter 1244 for color space and color format conversion to obtain a decoded attribute map.

FIG. 36 is a block diagram illustrating a configuration example of the decoding device according to the present embodiment.

FIG. 36 illustrates an example of a reconstructor that obtains decoded 3D mesh 1256 from decoded base mesh 1251 and decoded displacement data 1254.

Decoded base mesh 1251 is passed to subdivider 1252.

Subdivider 1252 subdivides any two connected vertices of the entire 3D mesh by adding a new vertex between them. This process can be repeated several times to include the vertices created in the previous subdivision step in order to generate a predefined number of vertices. Each iteration of subdivision across the entire 3D mesh generates a new level of detail (LoD). Subdivided mesh 1253 and decoded displacement data 1254 are passed to displacer 1255. Displacer 1255 generates decoded 3D mesh 1256 by moving each vertex to a new position according to corresponding displacement data.

Hereinafter, subdivision will be described. Subdivision is executed by a subdivider (specifically, subdivider 1206 or subdivider 2204).

FIG. 37 is an explanatory diagram illustrating an example of subdivision.

Base mesh illustrated in (a) in FIG. 37 includes vertices A, B, and C, and connection information indicating connectivity thereof.

(b) in FIG. 37 illustrates a mesh generated by a first subdivision, in other words, a mesh after a first subdivision. In the first subdivision, the subdivider generates vertices D, E, and F, and connection information indicating connectivity thereof. The mesh generated by the subdivider is also referred to as LoD1 or the first LoD.

Vertex D of the mesh after the first subdivision is a vertex generated by subdivision based on vertices A and B. Similarly, vertex E is a vertex generated by subdivision based on vertices B and C. Vertex F is a vertex generated by subdivision based on vertices A and C.

Note that, as an example, vertex D can be a midpoint of line segment AB (in other words, edge AB) connecting vertices A and B from which vertex D was generated. Similarly, vertex E can be a midpoint of line segment AC. Vertex F can be a midpoint of line segment BC.

(c) in FIG. 37 illustrates a mesh generated by a second subdivision, in other words, a mesh after a second subdivision. In the second subdivision, the subdivider generates vertices G, H, I, J, K, L, M, N, and O, and connection information indicating connectivity thereof. The mesh generated by the subdivider is also referred to as LoD2 or the second LoD.

Vertex G of the mesh after the second subdivision is a vertex generated by subdivision based on vertices A and D. Similarly, vertex H is a vertex generated by subdivision based on vertices A and E. Vertex I is a vertex generated by subdivision based on vertices B and D. Vertex J is a vertex generated by subdivision based on vertices D and F. Vertex K is a vertex generated by subdivision based on vertices E and F. Vertex L is a vertex generated by subdivision based on vertices C and E. Vertex M is a vertex generated by subdivision based on vertices B and F. Vertex N is a vertex generated by subdivision based on vertices C and F. Vertex O is a vertex generated by subdivision based on vertices D and E.

Note that, as an example, vertex G can be a midpoint of line segment AD (in other words, edge AD) connecting vertices A and D from which vertex G was generated. Similarly, vertex H can be a midpoint of line segment AE. Vertex I can be a midpoint of line segment BD. Vertex J can be a midpoint of line segment DF. Vertex K can be a midpoint of line segment EF. Vertex L can be a midpoint of line segment CE. Vertex M can be a midpoint of line segment BF. Vertex N can be a midpoint of line segment CF. Vertex O can be a midpoint of line segment DE.

Hereinafter, the displacement of vertices will be described with reference to FIG. 38 and FIG. 39. The displacement of vertices is executed by reconstructor 2209.

FIG. 38 is an explanatory diagram illustrating an example of displacement of vertices after being displaced after subdivision. FIG. 39 is an explanatory diagram illustrating an example of vertices of an original mesh.

Base mesh illustrated in (a) in FIG. 38 includes vertices A, B, C, and Z, and connection information indicating connectivity thereof.

(b) in FIG. 38 illustrates a mesh generated by a first subdivision, in other words, a mesh after a first subdivision (i.e., a first LoD). In the first subdivision, the subdivider generates vertices S, T, U, X, or Y, and connection information indicating connectivity thereof. Vertices S, T, U, X, or Y are the same as vertices D, E, and F illustrated in (b) in FIG. 37.

(c) in FIG. 38 illustrates a mesh generated by a second subdivision, in other words, a mesh after a second subdivision (i.e., a second LoD). In the second subdivision, the subdivider generates vertices D, E, F, G, and H, and connection information indicating connectivity thereof. Vertices D, E, F, G, and H are the same as vertices G, H, I, J, K, L, M, N, or O illustrated in (c) in FIG. 37.

(d) in FIG. 38 illustrates a mesh including vertices after being displaced after subdivision. Each of vertices A, B, C, D, E, F, G, H, S, T, U, X, Y, and Z illustrated in (d) in FIG. 38 is located at a position displaced using displacement information from the position of the corresponding vertex illustrated in (c) in FIG. 38.

The original mesh illustrated in FIG. 39 is an example of a mesh input into encoding device 100, in other words, a mesh before encoding.

The mesh illustrated in FIG. 38 has a shape close to the original mesh illustrated in FIG. 39. The displacement information is generated by displacement vector calculator 1207 of encoding device 100 as information indicating displacement from vertices of the base mesh to vertices of the original mesh, so by reconstructing the mesh using the displacement information generated in this manner, a mesh having a shape close to the original mesh is generated.

Decoding device 200 can output the mesh illustrated in (d) in FIG. 38.

Next, with reference to FIG. 40 and FIG. 41, division of a mesh into submeshes will be described.

The mesh can be divided into a plurality of parts smaller than the mesh and can be encoded on a division basis. In the division of the mesh, the vertices of the mesh are divided such that the coordinates of vertices included in each division and the connectivity can be independently encoded.

FIG. 40 is an explanatory diagram illustrating an example of a mesh. FIG. 41 is an explanatory diagram illustrating an example of the division of a mesh into submeshes.

The mesh illustrated in FIG. 40 is an original mesh and may be referred to as a full mesh in contrast with the submesh.

FIG. 41 is a diagram illustrating division of the full mesh illustrated in FIG. 40 into two submeshes. For vertices A, B, and C of the full mesh (see FIG. 40), vertex A is duplicated to form vertex A1 and vertex A2, vertex B is duplicated to form vertex B1 and vertex B2, and vertex C is duplicated to form vertex C1 and vertex C2, thereby creating two submeshes (i.e., a first submesh and a second submesh) from the full mesh. The first submesh and the second submesh are meshes that can be independently decoded.

Hereinafter, packing of displacement information into image frames will be described with reference to FIG. 42, FIG. 43, and FIG. 44.

FIG. 42, FIG. 43, and FIG. 44 are explanatory diagrams each illustrating an example of packing of displacement information into an image frame. Note that an image frame can also be rephrased as a video frame.

The displacement data of vertices is encoded as image frame data by being mapped, for example, to each component of an image frame in YUV format (i.e., the Y component (Y Plane), the U component (U Plane), and the V component (V Plane), respectively). This case will be described below as an example. Note that as another example, the displacement data of vertices may be encoded as image frame data by being mapped to each component of an image frame in RGB format (the R component, the G component, and the B component, respectively).

Decoding device 200 can use an image encoding module to extract the displacement data. The displacement data may be in the form of an X component, a Y component, or a Z component in a global coordinate system (e.g., a Cartesian coordinate system), or a normal, a tangent, or a bitangent component in a local coordinate system. Methods for mapping the displacement data to an image frame include the following methods.

For example, in a first method, the displacement data is arranged in scanning order in an image frame. An example of packing of the displacement data in this case is illustrated in FIG. 42. The displacement data is directly mapped to an image frame according to a predefined scanning order.

Note that, because the image frame has a fixed height and width, the displacement data may not fit exactly into the frame. In such cases, the remaining portion of the image frame is padded with padding data (also referred to as padded data) (see FIG. 42).

For example, in a second method, the displacement data is separated into a plurality of LoDs and mapped to the Y component, U component, and V component of an image frame. An example of packing of the displacement data in this case is illustrated in FIG. 43. Here, the displacement data of the image frame of the next one LoD starts immediately after the displacement data of the previous LoD ends. Similar to the first method, when the displacement data does not fit exactly into the image frame, the end portion of the image frame is padded (see FIG. 43).

For example, in a third method, the displacement data corresponding to the LoD is mapped to the Y component, U component, and V component of an image frame in a manner different from that in the second method. An example of packing of the displacement data in this case is illustrated in FIG. 44. In this manner, each LoD can be decoded independently. In the third method, intermediate padding is performed on the displacement data of each LoD, and CTU alignment is performed together with padding at the end of the video frame (see FIG. 44).

### <Other examples>

Although the aspects of the encoding device and the decoding device have thus far been described according to the embodiment, the aspects of the encoding device and the decoding device are not limited to the embodiment. Modifications that may be conceived by a person skilled in the art may be applied to the embodiment, and a plurality of constituent elements in the embodiment may be combined in any manner.

For example, processing performed by a specific constituent element in the embodiment may be performed by a different constituent element instead of the specific constituent element. Moreover, the order of processes may be changed or processes may be performed in parallel.

Moreover, as stated above, it is possible to implement, as an integrated circuit, at least part of the plurality of constituent elements in the present disclosure. At least part of the processes in the present disclosure may be used as an encoding method or a decoding method. A program for causing a computer to execute the encoding method or the decoding method may be used. Furthermore, a non-transitory computer-readable recording medium on which the program is recorded may be used. In addition, a bitstream for causing the decoding device to perform decoding processing may be used.

Moreover, at least part of the plurality of constituent elements and the processes in the present disclosure may be used as a transmitting device, a receiving device, a transmitting method, and a receiving method. A program for causing a computer to execute the transmitting method or the receiving method may be used. Furthermore, a non-transitory computer-readable recording medium on which the program is recorded may be used.

In the above embodiment, each constituent element may be configured using dedicated hardware, or may be implemented by executing a software program suitable for the constituent element. Each constituent element may be implemented by a program execution unit such as a CPU or processor reading and executing a software program recorded on a recording medium such as a hard disk or semiconductor memory. Here, software that implements the encoding device according to the above embodiment is a program as follows.

In other words, the software is a program for causing a computer to execute an encoding method including: obtaining a first frame to be encoded; and encoding first data using second data as a reference, the first data included in the first frame and including one or more layers, the second data included in a second frame and including one or more layers, in which the encoding of the first data includes: for each layer among the one or more layers included in the first data, determining one process among a plurality of processes, using a value indicating the layer and a value related to the one or more layers included in the second data, and executing the one process determined on the first data of the layer.

Software that implements the decoding device according to the above embodiment is a program as follows.

In other words, the software is a program for causing a computer to execute a decoding method including: obtaining a first frame to be decoded; and decoding first data using second data as a reference, the first data included in the first frame and including one or more layers, the second data included in a second frame and including one or more layers, in which the decoding of the first data includes: for each layer among the one or more layers included in the first data, determining one process among a plurality of processes, using a value indicating the layer and a value related to the one or more layers included in the second data, and executing the one process determined on the first data of the layer.

Next, the configuration of the encoding device in a case where a mesh is divided into a plurality of submeshes will be described.

FIG. 45 is a diagram illustrating a configuration example of the encoding device in a case where a mesh is divided into a plurality of submeshes. FIG. 46 is a diagram illustrating a configuration example of a pre-processor.

Inputted input mesh 1401 is divided into multiple submeshes 1402. For example, input mesh 1401 is a full mesh. Each of multiple submeshes 1402 is input to encoding device 1400 illustrated in FIG. 45. In other words, the encoding process by encoding device 1400 is performed after input mesh 1401 is divided into multiple submeshes 1402.

As illustrated in FIG. 45, encoding device 1400 includes pre-processor 1404 and compressor 1408.

Encoding device 1400 reads attribute map 1403 and one submesh 1402 supported by encoding device 1400 among multiple submeshes 1402, and passes them to pre-processor 1404. Pre-processor 1404 processes submesh 1402 to extract base mesh 1405 and displacement data 1406.

As illustrated in FIG. 46, pre-processor 1404 includes base mesh generator 1411, subdivider 1412, and displacement generator 1413.

Base mesh generator 1411 generates a base mesh based on a mesh or submesh 1402.

Subdivider 1412 subdivides the base mesh in a predetermined manner to generate a subdivided mesh (subdivided base mesh).

Displacement generator 1413 generates displacement data 1406 based on the subdivided mesh and submesh 1402. For example, the displacement data is difference vectors (displacement vectors) between the input mesh (submesh 1402) and the subdivided mesh. The displacement vectors correspond to the vertices of the input mesh.

Note that, also in the decoding device, the same method as the subdivision in encoding device 1400 is used. The subdivision method or the parameters in encoding device 1400 may be transmitted to decoding device 1420. In other words, the subdivision method or the parameters may be included in a bitstream.

Attribute map 1403 is passed to compressor 1408 together with base mesh 1405 and displacement data 1406 generated by pre-processor 1404.

Compressor 1408 compresses base mesh 1405, displacement data 1406, and attribute map 1403 to generate bitstream 1409. By additionally adding metadata 1407 to bitstream 1409, compressor 1408 can transmit additional information to decoding device 1420.

Next, the configuration of the decoding device in a case where a mesh is divided into a plurality of submeshes will be described.

FIG. 47 is a diagram illustrating a configuration example of the decoding device in a case where a mesh is divided into a plurality of submeshes.

As illustrated in FIG. 47, decoding device 1420 includes decompressor 1422 and post-processor 1427.

Decoding device 1420 reads bitstream 1421 and passes it to decompressor 1422. Decompressor 1422 decompresses base mesh 1423, displacement data 1424, and attribute map 1426 from bitstream 1421, and passes them to post-processor 1427. One example of displacement data 1424 is displacement vectors.

Post-processor 1427 generates merged submeshes 1428 by processing base mesh 1423 according to displacement data 1424 and attribute map 1426. Post-processor 1427 may further use information from metadata 1425 to generate merged submeshes 1428. Output mesh 1429 is then generated based on merged submeshes 1428.

In post-processor 1427, a deformed mesh (subdivision, displacement unit) is reconstructed. In post-processor 1427, in the subdivision, for each of the decoded submeshes, the base mesh is subdivided and the displacement vectors are added to the subdivided base mesh, to reconstruct the submesh. In other words, in post-processor 1427, a process for a reconstructed deformed mesh is performed for each of the submeshes. The reconstructed submeshes are merged to reconstruct a full mesh before division.

FIG. 48 is a diagram for explaining a post-decoding process.

Decoder 1432 obtains bitstream 1431 and performs the decoding process. After the decoding process, the process by post-decoder 1433 may be performed.

The processes in post-decoder 1433 is optional for some applications. For example, post-decoder 1433 converts decoded data into nominal format such as converting video from YUV to RGB space. Post-decoder 1433 includes pre-reconstructor 1434, reconstructor 1435, post-reconstructor 1436, and adaptor 1437. In other words, the post decoding encapsulates several processes by pre-reconstructor 1434, reconstructor 1435, post-reconstructor 1436, and adaptor 1437.

In the context of video-based dynamic mesh coding, for example, pre-reconstructor 1434 scales normalized texture coordinates up in order to align with the dimensions of texture image.

Reconstructor 1435 performs the reconstruction process on, for example, decoded atlas frames, decoded base mesh frames, decoded video frames, and syntax elements associated with the same mesh sequence. Output of this process is a sequence of reconstructed mesh frames before the post-reconstruction step.

In the context of video-based dynamic mesh coding, post-reconstructor 1436 performs a number of smoothing operations on, for example, the reconstructed mesh frames. The smoothing operations include collapsing edges or adding new vertices.

Adaptor 1437 is applied by some application to adapt reconstructed meshes to a given scenario. For example, vertices of the reconstructed mesh are transformed from the 3D model coordinate system to the 3D world coordinate system.

FIG. 49 is a flowchart illustrating one example of the encoding method performed by the encoding device.

Encoding device 1400 encodes a sample location into a bitstream (S1401). The encoded sample location indicates the location of the top left corner of a rectangular region in a picture. For example, the sample location may be used by decoding device 1420 to identify the rectangular region of the picture for decoding. The sample location may also be used by a server to identify the rectangular region of the picture for transmission.

FIG. 50 is a diagram illustrating an example of the sample location.

In picture 1440, the sample location for the rectangular region is indicated as {x, y} that is located at the top right corner of a previously decoded rectangular region. For example, the sample location {x, y} may be the location of a first sample in a CU or a CTU. Alternatively, for example, the sample location {x, y} is the location of a sample within the frame that is different from the first sample in a CU or a CTU. The sample location may be indicated by an absolute location (absolute coordinates) in the picture, or by a relative location (relative coordinates).

FIG. 51 is a diagram illustrating an example in which the sample location is indicated by an absolute value.

As illustrated in FIG. 51, the sample location may be indicated by an absolute value. The sample location at the top left corner of the rectangular region in picture 1441 is {192, 0}, and does not depend on the sample of another rectangle.

FIG. 52 is a diagram illustrating an example in which the sample location is indicated by a relative value.

As illustrated in FIG. 52, the sample location may be indicated by the coordinates relative to the sample location of the preceding rectangular region (relative coordinates). In other words, the sample location may be indicated by the offset coordinates relative to the sample of the preceding rectangular region. Here, in picture 1441, the sample location at the top left corner of rectangular region 1441a is {128, 0} calculated based on the sample location of preceding rectangular region 1441b {64, 0}. In other word, the sample location of rectangular region 1441a {128, 0} is a difference obtained by subtracting the absolute sample location of rectangular region 1441b from the absolute sample location of rectangular region 1441a with respect to the origin {0, 0} of picture 1441.

FIG. 53 illustrates an example in which the sample location is signaled in the bitstream body.

As illustrated in FIG. 53, the sample location may be included in the bitstream body (data).

FIG. 54 illustrates an example in which the sample location is signaled in the bitstream header.

As illustrated in FIG. 54, the sample location may be included in the bitstream header.

Alternatively, for example, the sample location may be signaled as a supplementary enhancement information (SEI). For example, the picture may be encoded in YUV420 chroma format. Alternatively, for example, the picture may be encoded in YUV444 chroma format. Alternatively, for example, the picture may be encoded in YUV400 chroma format.

Here, return to the description of FIG. 49.

Encoding device 1400 encodes, into the bitstream, a parameter for calculating a Level of Details (LoD) index (S1402). The encoded LoD index indicates a LoD identifier associated with the rectangular region.

Note that the parameter for calculating the LoD index may be, for example, subdividion_iteration_count. For example, in the case of subdividion_iteration_count=1, LoD 0 and LoD 1 are generated, and the passible value of LoD index is 0 or 1. For example, in the case of subdividion_iteration_count=2, LoD 0, LoD 1, and LoD 2 are generated, and the possible value of LoD index is 0, 1, or 2. As described above, subdividion_iteration_count is added to the bitstream on encoding-device 1400 side. Accordingly, decoding device 1420 can calculate the LoD index of the possible value by decoding subdividion_iteration_count in the bitstream, and thus can appropriately decode the bitstream.

FIG. 55 is a diagram illustrating an example of the LoD index associated with the rectangular region.

As illustrated in FIG. 55, the LoD index associated with the rectangular region in picture 1442 is 1. For example, the encoded value of the LoD index may be calculated using one iteration out of the number of iterations at encoding device 1400. For example, the association of the LoD index with the rectangular region may be determined using the syntax that is used to encode the sample locations x[i][j] and y[i][j]. For the rectangular region in picture 1442, i is equal to 1 indicating that the LoD index is 1.

Here, return to the description of FIG. 49.

Encoding device 1400 transforms displacement vectors into samples of the rectangular region in the picture based on a predetermined scanning order (S1403). For example, encoding device 1400 may add padding data after the samples obtained by transforming the displacement vectors, to form the rectangular region.

Encoding device 1400 encodes the rectangular region in the picture (S1404).

FIG. 56 is a flowchart illustrating one example of the decoding method performed by the decoding device.

Decoding device 1420 decodes a sample location from a bitstream (S1411). The decoded sample location indicates the location of the top left corner of a rectangular region in a picture. For example, decoding device 1420 identifies the rectangular region of the picture based on the sample location, and decodes the identified rectangular region. For example, a server may identify the rectangular region of the picture based on the sample location and transmit the identified rectangular region.

FIG. 57 is a diagram illustrating a syntax for decoding a sample location.

The syntax illustrated in FIG. 57 is used for decoding device 1420 to decode the sample location using syntax elements x[i][j] and y[i][j] associated with LoD i and rectangular region j. Here, i=0 indicates base-mesh LoD.

num_rectangular_region[i] indicates the number of rectangular regions corresponding to i-th LoD index. Here, LoDs are generated by encoding device 1400 performing the subdivision method indicated by the subdivision_method parameter a given number of times specified by subdivision_iteration_count. x[i][j] and y[i][j] indicate the sample location at the top left corner of j-th rectangular region associated with i-th LoD index.

FIG. 58 is a diagram illustrating a syntax for decoding the sample location including the height and the width of a rectangular region.

The syntax can be located in other header positions. For example, these parameters are signaled at the sequence level. Alternatively, for example, these parameters are signaled at the frame level. Alternatively, for example, these parameters are signaled for each patch of the 3D mesh. Alternatively, for example, these parameters are signaled using supplemental enhancement information (SEI). In this case, when decoding device 1420 selects to ignore the SEI, i.e., to use no SEI, decoding device 1420 decodes the entire picture together instead of independently decoding the rectangular regions.

For example, the decoded num_rectangular_region[i], x[i][j], y[i][j], height[i][j], and width[i][j] are used by decoding device 1420 to determine the identifier for vertices associated with the LoD index i.

Alternatively, for example, the decoded num_rectangular_region[i], x[i][j], y[i][j], height[i][j], and width[i][j] are used by decoding device 1420 to determine the location of a block including the samples associated with a particular vertex identifier.

Decoding device 1420 decodes a parameter for calculating the LoD index from the bitstream (S1412). The decoded LoD index indicates a LoD identifier associated with the rectangular region.

For example, the server may select the rectangular region associated with a particular LoD index from among all the rectangular regions encoded by encoding device 1400, and transmit the selected rectangular region to decoding device 1420. In this case, the server may depict the rectangular region as a picture by changing the encoded value of the height and width of the picture.

For example, the server may select the rectangular region to be transmitted, in consideration of the available network bandwidth. For example, the server may select the rectangular region to be transmitted, based on the received request.

Note that when the server selects LoDs to be transmitted and transmits the rectangular region data related to the selected LoDs to decoding device 1420, the value of subdivision_iteration_count to be added to a header according to the number of LoDs to be transmitted may be changed. For example, when the value of original subdivision_iteration_count is 3, the number of LoDs is 4. When the data related to two layers among the four LoDs, i.e., LoD 0 and LoD 1, is transmitted to decoding device 1420, the value of subdivision_iteration_count to be added to a header may be changed from 3 to 1. In this manner, decoding device 1420 determines, from the header, whether the data of two layers is included in the bitstream, and decodes the data of two LoD layers.

Decoding device 1420 derives the number of vertices associated with the decoded LoD index (S1413). The derived number of vertices indicates the number of vertices in a 3D mesh to be displaced using displacement vectors. The derived number of vertices includes the number of vertices in the base mesh and the number of vertices generated by the subdivision process.

Decoding device 1420 determines whether the decoded LoD index is less than or equal to a predetermined LoD index (S1414). The predetermined LoD index may be defined by a user or may be derived from another information source.

When decoding device 1420 determines that the decoded LoD index is less than or equal to a predetermined LoD index (Yes in S1414), decoding device 1420 determines the location of the rectangular region in the picture using the decoded sample location, and decodes the corresponding rectangular region (S1415). Here, the decoded rectangular region is combined with a plurality of other decoded rectangular regions to form a larger rectangular region in the picture. In doing so, the LoD indexes of all the decoded rectangular regions are less than or equal to the predetermined LoD index.

FIG. 59 is a diagram for explaining one example of a process of decoding rectangular regions.

Here, subdivision_iteration_count is 2. Accordingly, in location information 1446, the LoD indexes relating the rectangular regions are 0, 1, and 2 in picture 1447. In location information 1446, a location (e.g., the location of the top left corner) of a rectangular region whose layer corresponds to each LoD index is indicated.

In the example of FIG. 59, num_rectangular_region[i] is always 1. Accordingly, there is only one rectangular region corresponding to each LoD index. In addition, the sample locations are absolute values.

When the LoD index is 0 and the rectangular region is 0, i is 0, and j is 0. In other words, x[0][0] and y[0][0] are 0 and 0, respectively, which indicate the decoded sample location. Similarly, when the LoD index is 1 and the rectangular region is 0, i is 1 and j is 0. In other words, x[1][0] and y[1][0] are 64 and 0, respectively. When the LoD index is 2 and the rectangular region is 0, i is 2, and j is 0. In other words, x[2][0] and y[2][0] are 0 and 128, respectively. The rectangular region with LoD index 0 is previously decoded. Accordingly, in picture 1447, the rectangular region with LoD index 1 is decoded. The decoded rectangular region forms a larger rectangular region in combination with the previously decoded rectangular region.

Note that, since predetermined LoD index 1445 is set to 1, in this example, the rectangular regions with the LoD index of 1 or less (i.e., the rectangular region with LoD index 0 and the rectangular region with LoD index 1) are decoded, and the rectangular region with LoD index 2 is not decoded.

Decoding device 1420 derives the height and the width of the rectangular region, and uses the derived height and width in combination with the decoded sample location to determine the location in the picture.

FIG. 60 is a diagram for explaining another example of the process of decoding rectangular regions.

In the example of FIG. 60, location information 1446a indicates a location (e.g., the location of the top left corner) of a rectangular region whose layer corresponds to the LoD index. Location information 1446a further includes the height (derived height) and the width (derived width) of each rectangular region. In this example, the overall height of picture 1447a is 192 pixels and the overall width of picture 1447a is 192 pixels.

FIG. 61 is a diagram illustrating an example of different decoded rectangular regions arranged in rows.

For example, the decoded rectangular regions corresponding to different LoD indexes are arranged in rows as illustrated in FIG 61. Alternatively, for example, the decoded rectangular regions corresponding to different LoD indexes are arranged in columns, and each rectangular region may include optional padding to form the rectangular shape. In this example, the thick line represents the rectangular region boundary, the normal line represents the coding tree unit (CTU) boundary, and the dotted line indicates the coding unit (CU) boundary. Each rectangular region can include one or more tiles or slices corresponding to a LoD. Each tile has multiple CTUs in the row, and each CTU includes multiple CUs. A slice can include one or more tiles, and one tile can be shared between slices in some cases.

Note that, in the above padding process, for example, for the rectangular region corresponding to a given LoD index as illustrated in FIG. 61, when the number of samples generated from the displacement vectors is less than the number of samples obtained by subtracting the maximum number of samples to be stored in one CTU from the maximum number of samples to be stored in this rectangular region, this rectangular region includes a CTU storing only padding samples. Specifically, for example, when LoD index 1 and LoD index 3 each satisfy the above condition, the rectangular region with LoD index 1 and the rectangular region with LoD index 3 each include a CTU storing only padding samples.

Note that the picture does not need to be formed by only the rectangular regions corresponding to LoD indexes. For example, a rectangular region formed by only CTUs including no samples generated from displacement vectors, i.e., a rectangular region that is not used to derive displacement vectors, may be arranged in the picture. This rectangular region including no samples generated from displacement vectors need not store information such as the location or size of the rectangular region, or may store information such as the location or size of the rectangular region and information indicating that there is no LoD associated with the rectangular region.

FIG. 62 is a diagram illustrating an example of different decoded rectangular regions arranged in mixture of rows and columns.

For example, the decoded rectangular regions corresponding to different LoD indexes are arranged in mixture of rows and columns as illustrated in FIG 62. In this example, the thick line represents the rectangular region boundary, the normal line represents the coding tree unit (CTU) boundary, and the dotted line indicates the coding unit (CU) boundary. Each rectangular region can include one or more tiles or slices corresponding to a LoD. Each tile has multiple CTUs in the row, and each CTU includes multiple CUs. A slice can include one or more tiles, and one tile can be shared between slices in some cases.

As illustrated in the above example, displacement vector data can be adaptively mapped to a picture for each of LoDs by encoding device 1400. In this manner, when the picture after the mapping is encoded using a video codec, for example, in the intra prediction of LoD1_CTU3, encoding device 1400 or decoding device 1420 can refer to LoD1_CTU0, LoD1_CTU1, or LoD1_CTU2, which are the same layer as LoD1_CTU3, to generate a predicted value. When the values of the displacement vector data in the same layer are close, the accuracy of the predicted value is improved, thereby improving coding efficiency. For example, in the intra prediction of LoD2_CTU4, encoding device 1400 or decoding device 1420 can refer to LoD2_CTU0, LoD2_CTU1, LoD2_CTU2, or LoD2_CTU3, which are the same layer as LoD2_CTU0, to generate a predicted value. When the values of the displacement vector data in the same layer are close, the accuracy of the predicted value is improved, thereby improving coding efficiency.

FIG. 63 is a diagram illustrating an example in which there are multiple rectangular regions corresponding to one LoD index and these rectangular regions form a reverse L shape in the horizontal direction.

For example, there are multiple rectangular regions corresponding to one LoD index, and these rectangular regions form a reverse L shape in the horizontal direction as illustrated in FIG. 63. In this example, the thick line represents the rectangular region boundary, the normal line represents the coding tree unit (CTU) boundary, and the dotted line indicates the coding unit (CU) boundary. Each rectangular region can include one or more tiles or slices corresponding to a LoD. Each tile has multiple CTUs in the row, and each CTU includes multiple CUs. A slice can include one or more tiles, and one tile can be shared between slices in some cases.

For example, in some cases, the multiple rectangular regions corresponding to a LoD index are determined in image unpacker 1239 during the decoding process illustrated in FIG 35. For example, decoding device 1420 uses the multiple regions corresponding to a LoD index to reconstruct the 3D mesh up to a certain LoD.

FIG. 64 is a diagram illustrating an example of parameters to be signaled in a syntax. These parameters 1446b are included in the syntax of the case where there are multiple rectangular regions corresponding to one LoD index and these rectangular regions form a reverse L shape in the horizontal direction.

In this example, the first row signals the first rectangular region corresponding to LoD Index 0. The top left sample of this rectangular region is located at "0, 0", and the height and the width are 64 and 128, respectively. Similarly, the second row signals the first rectangular region corresponding to LoD Index 1. The top left sample of this rectangular region is located at "128, 0", and the height and the width are 64 and 64, respectively. Furthermore, the third row signals the second rectangular region corresponding to LoD Index 1. The top left sample of this rectangular region is located at "0, 64", and the height and the width are 64 and 192, respectively. As described above, the remaining parameters are also signaled in the same manner.

In FIG. 64, in order to signal the location and the size of the rectangular region, three parameters, i.e., Location, Height, and Width, are signaled in units of samples, but the method of signaling the location and the size of the rectangular region is not limited to this. For example, when the rectangular region boundary is not set in the location other than the CTU boundary, Location, Height, and Width may be represented by an integer multiple of the CTU size or CTB size for luminance. For example, in the example of FIG. 64, for the CTU size of 64, LoD index 0 has Location of "0, 0", Height of "1", and Width of "2", and LoD index 1 has Location of "2, 0", Height of "1", and Width of "1".

The case using the CTU size has been described here as an example, but the present disclosure can be implemented in the same manner even when a rectangular-shaped block unit other than the CTU is used. For example, Location, Height, and Width may be represented by an integer multiple of the tile, an integer multiple of the slice, an integer multiple of the sub-picture, or an integer multiple of the rectangular block size different from all of the tile, the slice, and the sub-picture. Note that when the size of any of the CTU, the tile, the slice, and the sub-picture is used to signal the location and the size of the rectangular region, it is desired that the size to be used is fixed in the picture, but not always required. For example, when the CTU size is used to signal the location and the size of the rectangular region and the CTU size is fixed in the picture, the picture size, i.e., Height and Width of the picture, may be restricted to an integer multiple of the CTU size.

The location of the rectangular region may not only be specified by the vertical location and the horizontal location of the top left corner of the rectangular region, but also be signaled by the index of the top left CTU in the rectangular region based on the CTU indexes assigned to the CTUs in the picture in the raster scan order.

Note that when the size of any of the CTU, the tile, the slice, and the sub-picture is used to signal the location and the size of the rectangular region, information indicating the size to be used may be stored and signaled in the first bitstream.

FIG. 65 is a diagram illustrating an example including different types of rectangular regions. Here, some rectangular regions are arranged in rows, while other rectangular regions are arranged in mixture of rows and columns, and few rectangular regions correspond to the same LoD index.

In this example, there are different types of rectangular regions. Some rectangular regions are arranged in rows, and the other rectangular regions are arranged in mixture of rows and columns. Some of the rectangular regions correspond to the same LoD index. In this example, the thick line represents the rectangular region boundary, the normal line indicates the coding tree unit (CTU) boundary, and the dotted line indicates the coding unit (CU) boundary. Each rectangular region can have one or more tiles or slices corresponding to a LoD. Each tile includes multiple CTUs in the row, and each CTU includes multiple CUs. A slice can include one or more tiles, and a tile can be shared between slices in some cases.

FIG. 66 is a diagram illustrating an example including different types of rectangular regions in a plurality of rectangular slices. Here, some rectangular regions are arranged in rows, while other rectangular regions are arranged in mixture of rows and columns, and few rectangular regions correspond to the same LoD index.

For example, video encoding device 1400 utilizes a codec such as VVC to encode samples of different rectangular regions using multiple rectangular slices. Each rectangular slice can include several rectangular regions, and each rectangular region corresponds to a different LoD index. FIG. 66 illustrates such an example. In this example, encoding device 1400 divides the picture into a fixed number of tile rows and tile columns. The rectangular slice includes tiles each of which has a different number of tile rows and a different number of tile columns. Accordingly, a rectangular slice may include different rectangular regions. In this example, the rectangular slice on the top left corner includes three rectangular regions. One of them corresponds to LoD index 0, and the other two of them correspond to LoD index 1.

Here, return to the description of FIG. 56.

When decoding device 1420 determines that the decoded LoD index is less than or equal to the predetermined LoD index, decoding device 1420 transforms samples from the rectangular region of the picture into displacement vectors based on the predetermined scanning order (S1416). In doing so, the total number of samples transformed into displacement vectors in the predetermined scanning order is equal to the number of vertices. The remaining samples that are not transformed in the rectangular region are padding samples, and thus not used to displace vertices of the three-dimensional mesh.

FIG. 67 is a diagram illustrating an example of samples to be transformed into displacement vectors.

In this example, the number of samples included in the rectangular region is 8192, and the derived number of vertices is 7168. Accordingly, only 7168 samples from the rectangular region are transformed into displacement vectors.

In the conventional techniques, the samples used to determine the displacement vectors of a LoD have not been confined to a rectangular region. This limitation has made it impossible to independently obtain the displacement vectors for a specific LoD. This has been problematic for scenarios where a server transmits only up to a certain LoD to adjust to bandwidth constraints or sends a particular LoD in response to a client's (decoding device 1420) request. The object of the present disclosure is to ensure that decoding device 1420 can accurately decode the picture samples without errors.

### (Variations)

In variations, the rectangular regions may be padded to align them to a CU, a CTU, a tile, a slice, or a sub-picture.

Moreover, in variations, samples in the rectangular region corresponding to different displacement vectors of different LoDs may be packed in reverse order (starting from the bottom right corner of the rectangular region).

Note that information indicating whether the displacement vector data is packed in the reverse order (hereinafter, referred to as reverse_packing information) may be added to the bitstream header or the like. With this information, by decoding the reverse_packing information in the bitstream header, the decoding device can match the unpacking method of the displacement vectors with the packing method on the encoding device side to appropriately decode the bitstream.

Moreover, in variations, the rectangular region may be a tile, and all the tiles in the picture may share a common header indicating the LoDs including the samples corresponding to displacement vectors.

Moreover, in variations, all the tiles may have different headers indicating the LoDs including the samples corresponding to displacement vectors.

Moreover, in variations, all the rectangular regions in the picture may have the same aspect ratio.

Moreover, in variations, at least one rectangular region may have an aspect ratio different from that of the other rectangular regions.

Note that, when the bitstream includes the information related to LoD mapping (location, width, height, tile boundary, subdividion_iteration_count, etc.), this information allows the server to understand LoD mapping information without decoding the bitstream.

In this manner, the server obtains the capability to generate a modified video bitstream without decoding the original bitstream. The adjustments, such as changes in image size based on client requests or the bandwidth, is seamlessly incorporated into a new bitstream, and the new bitstream is transmitted. This innovative approach ensures that the receiver (decoding device) can process the modified bitstream as a video frame. By transmitting the rectangular shape and all necessary decoding data from the server, it is possible for the decoding device to accurately decode the video without errors.

Next, the mapping rules for displacement vector generation and sample arrangement will be described.

In the present disclosure, the mapping order of samples generated from displacement vectors or the demapping order or scanning order in generating displacement vectors from samples can be defined by combining three-stage mapping rules. Hereinafter, the present disclosure is described using the "mapping order" as an example, but the "mapping order" may be replaced with the "demapping order" or the "scanning order".

In the first stage, the arrangement order of rectangular regions is defined. As this arrangement order, raster scan order, reverse raster scan order, or other orders are used. In the second stage, the order of arranging samples in a rectangular region based on a CTU, a CU, or another block size is defined. Also as this arrangement order, raster scan order, reverse raster scan order, or other orders are used. In the third stage, the order of arranging samples in a rectangular region, a CTU, or a CU is defined, and raster scan order, reverse raster scan order, or other orders are similarly applied.

Examples of other orders include zigzag scan order or reverse zigzag scan order. Instead of the raster scan, which prioritizes the horizontal direction and scans from the top left to the bottom right, it is possible to employ an order that prioritizes the vertical direction and scans from the top left to the bottom right, or an order that prioritizes the vertical direction and scans from the bottom right to the top left.

Furthermore, the mapping orders in the first to third stages can be selected independently. For example, the reverse raster scan order can be used as the order of arranging rectangular regions in the first stage and the order of arranging samples in CUs within a rectangular region in the second stage, while the raster scan order can be used as the order of arranging samples in a CU in the third stage. There may be cases where the order of arranging samples in CTUs within a rectangular region, the order of arranging samples in CUs within a CTU, and the order of arranging samples in a CU are separately defined. When samples are arranged for the entire rectangular region without considering CTU, CU, or other block units, the third-stage rule is applied to the entire rectangular region regardless of the block units. In this case, for example, for the raster scan order, a method is employed in which samples in the top row within the rectangular region are sequentially arranged from left to right, and upon reaching the right end, the processing proceeds to the next row.

In combining rectangular regions to form an L-shape or an entire picture, if it is difficult to fix the order of arranging rectangular regions in the first stage, it is also possible to define the second and third stages or only the third stage without defining the first stage. Even in this case, a rule such as arranging rectangular regions with LoD index 0 on the bottom right portion of the picture can be defined.

FIG. 68 is a diagram illustrating a syntax of header example 1. FIG. 69 is a diagram illustrating a syntax of header example 2. FIG. 70 is an example of a syntax for indicating location information. FIG. 70 is another example of the syntax of FIG. 58.

LoDPartialDecodeEnable is information indicating that LoDs can be partially decoded. For example, a value of 1 may indicate that LoDs can be partially decoded, and a value of 0 may indicate that LoDs cannot be partially decoded. Specifically, when the bitstream includes information on four LoD layers, if LoDPartialDecodeEnable=1, for example, the decoding device may be able to decode only LoD 0, or may be able to decode only LoD 0 and LoD 1. In this manner, by adding, to the bitstream, information indicating whether LoDs can be partially decoded, the decoding device can know whether LoDs can be partially decoded, and the decoding device can perform partial decoding according to the use case.

Note that, as an example of a use case, for example, when three-dimensional mesh data is displayed as a thumbnail, the thumbnail can be displayed with low processing load by performing the partially decoding up to LoD 0 and LoD 1 among four LoD layers for display, and when three-dimensional mesh data selected on the thumbnail display is displayed on one screen, the three-dimensional mesh data can be displayed at high resolution by decoding the four layers from LoD 0 to LoD 3.

LoDLiftingSkipUpdateFlag is information indicating whether to skip the process of updating the value of a higher layer using the prediction residual of a lower layer in assigning displacement vector data to LoD layers and applying lifting transform or the like to the displacement vector to generate transform coefficients representing components from low-frequency components to high-frequency components. For example, a value of 1 indicates that the update process is skipped, and a value of 0 indicates that the update process is applied. An example of a processing flow of lifting transform using this information will be described in detail later.

Note that in the case where each information item is added to the bitstream as illustrated in header example 1, when LoDPartialDecodeEnable=1 is set, LoDLiftingSkipUpdateFlag may be restricted to 1 by a standard or the like. This can ensure that LoDs can be partially decoded when LoDPartialDecodeEnable=1 is set. Note that when LoDLiftingSkipUpdateFlag=0 is set under LoDPartialDecodeEnable=1, the decoding device may output a standard compliance error.

Note that each information item may be added to the bitstream as illustrated in header example 2. In this case, when LoDPartialDecodeEnable=0 is set, LoDLiftingSkipUpdateFlag may be added, and when LoDPartialDecodeEnable=1 is set, LoDLiftingSkipUpdateFlag need not be added to bitstream. Note that when LoDLiftingSkipUpdateFlag is not added to the bitstream, the decoding device may set its value to 1 and proceed with the decoding process. In this manner, LoDLiftingSkipUpdateFlag=1 is always set when LoDPartialDecodeEnable=1 is set, thereby ensuring the partial decoding of LoDs.

Note that LoDLiftingSkipUpdateFlag may be added to the bitstream without LoDPartialDecodeEnable added to the bitstream, and the decoding device may determine that LoDs can be partially decoded when LoDLiftingSkipUpdateFlag=1 is set. This can reduce the header code amount.

Subdivision_method, subdivision_iteration_count, num_rectangular_region, x, y, height, and width are the information items described above. Among them, num_rectangular_region, x, y, height, and width may be added to the bitstream when LoDPartialDecodeEnable=1 is set, and not added to the bitstream when LoDPartialDecodeEnable=0 is set. This can reduce the header code amount.

Note that in the present disclosure, LoDPartialDecodeEnable is used to indicate whether LoDs can be partially decoded, but the present disclosure is not necessarily limited to this. For example, information on a layer among the LoD layers on which the partial decoding can be performed (hereinafter, referred to as LoDPartialDecodeEnableLayer) may be added. For example, when the total number of LoD layers is 4 and LoDPartialDecodeEnableLayer=2 is set, it may be defined that the partial decoding cannot be performed on LoD 0 and LoD 1, but can be performed on LoD 2 and the following layers. This allows the decoding device to know that the partial decoding can be performed on LoDPartialDecodeEnableLayer and the following layers. Accordingly, the layer to be decoded can be switched among LoDPartialDecodeEnableLayer and the following layers according to the use case.

Note that in the present disclosure, LoDLiftingSkipUpdateFlag is used to indicate whether to skip the update process in the lifting transform, but the present disclosure is not necessarily limited to this. For example, information on the layer among the LoD layers for which the update process is skipped (hereinafter, referred to as LoDLiftingSkipUpdateLayer) may be added. For example, when the total number of LoD layers is 4 and LoDLiftingSkipUpdateLayer=2 is set, it may be defined that the update process is not skipped for LoD 0 and LoD 1, but the update process is skipped for LoD 2 and the following layers. This allows the decoding device to know that the partial decoding can be performed on LoDLiftingSkipUpdateLayer and the following layers since the update process in the lifting transform is skipped for LoDLiftingSkipUpdateLayer and the following layers. Accordingly, the layer to be decoded can be switched among LoDLiftingSkipUpdateLayer and the following layers according to the use case.

Note that the configuration to signal information indicating that LoDs can be partially decoded or information indicating whether to skip the process of updating the value of a higher layer using the prediction residual of a lower layer as described above can be implemented without combining with the configuration to signal the location and size of the rectangular region and the LoD index corresponding to the rectangular region as described in the present disclosure. For example, the configuration to signal information indicating that LoDs can be partially decoded or information indicating whether to skip the process of updating the value of a higher layer using the prediction residual of a lower layer as described above may be implemented in combination with a scheme in which samples generated from displacement vectors corresponding to a predetermined LoD index are mapped to a non-rectangular region, or may be implemented in combination with a scheme in which displacement vectors corresponding to a predetermined LoD index are encoded without generating image format data from the displacement vectors corresponding to the predetermined LoD index.

FIG. 71 is a flowchart illustrating an example of lifting transform by the encoding device.

Encoding device 1400 generates a predicted value of the displacement vector value belonging to LoD layer i (hereinafter, referred to as LoD[i]) from the displacement vector value belonging to LoD layer i-1 which is the higher layer (hereinafter, referred to as LoD[i-1]) using the average value or the like, and calculates a prediction residual of the displacement vector of layer i (hereinafter, referred to as resi[i]) (S1421). Encoding device 1400 may add the encoding result of this resi[i] to the bitstream.

Next, encoding device 1400 determines whether LoDLiftingSkipUpdateFlag=1 is set (S1422).

When LoDLiftingSkipUpdateFlag=0 is set, encoding device 1400 updates the value of LoD[i-1] using prediction residual resi[i] (S1423), and moves the processing to the next layer. For example, encoding device 1400 may update the value of LoD[i-1] by adding resi[i] multiplied by a weighting coefficient to LoD[i-1]. In this manner, coding efficiency in encoding LoD[i-1] can be improved by correcting the value of LoD[i-1], which is the basis of prediction, according to the value of the prediction residual when the prediction residual increases due to prediction.

When LoDLiftingSkipUpdateFlag=1 is set, encoding device 1400 skips the process of updating the value of LoD[i-1] using prediction residual resi[i], and moves to the process of the next layer. Here, by skipping the process of updating the value of LoD[i-1] using prediction residual resi[i], the LoD value of a higher layer no longer depends on the resi value of a lower layer, and the LoD value of a higher layer can be decoded without using the resi value of a lower layer. In other words, it is possible to performing the partial decoding up to a certain higher layer.

For example, when the number of LoD layers is equal to 4, encoding device 1400 may start the processing from LoD 3 which is the lowest layer. Specifically, the above flow may be executed in the order of i = 3, 2, 1. Note that when i = 0, i.e., LoD[0] (corresponding to the base mesh), is set, there is no higher layer than that. Accordingly, in the case of LoD[0], resi[0] = LoD[0] may be set without generating a predicted value from a higher layer.

FIG. 72 is a flowchart illustrating an example of lifting transform by the decoding device.

Decoding device 1420 determines whether LoDLiftingSkipUpdateFlag=1 is set (S1431).

When LoDLiftingSkipUpdateFlag=0 is set, decoding device 1420 updates the value of LoD[i-1] using prediction residual resi[i] (S1432). For example, decoding device 1420 may update the value of LoD[i-1] by adding resi[i] multiplied by a weighting coefficient to LoD[i-1]. In this manner, the same process as encoding device 1400 that has improved coding efficiency in encoding LoD[i-1] can be applied by correcting the value of LoD[i-1], which is the basis of prediction, according to the value of the prediction residual when the prediction residual increases due to prediction.

When LoDLiftingSkipUpdateFlag=1 is set, decoding device 1420 skips the process of updating the value of LoD[i-1] using prediction residual resi[i]. Here, as with the case of encoding device 1400, by skipping the process of updating the value of LoD[i-1] using prediction residual resi[i], the LoD value of a higher layer no longer depends on the resi value of a lower layer, and the LoD value of a higher layer can be decoded without using the resi value of a lower layer. In other words, it is possible to perform the partial decoding up to a certain higher layer.

Next, decoding device 1420 generates a predicted value of LoD[i] from LoD[i-1] using the same process as the encoding device such as an average value, adds the generated prediction value to prediction residual resi[i] decoded from the bitstream to reconstruct the displacement vector value of LoD[i] (S1433), and moves to the process of the next layer.

As described above, by setting LoDLiftingSkipUpdateFlag to 0 in lifting transform, the value of LoD[i-1] that is the basis of prediction can be corrected according to the value of the prediction residual to improve coding efficiency, while by setting LoDLiftingSkipUpdateFlag to 1, the LoD value of a higher layer no longer depends on the resi value of a lower layer, and it is possible to perform the partial decoding up to a certain higher layer.

For example, when the number of LoD layers is equal to 4, decoding device 1420 may start the processing from LoD 1 which is a higher layer. Specifically, the above flow may be executed in the order of i = 1, 2, 3. Note that when i = 0, i.e., LoD[0] (corresponding to the base mesh), is set, there is no higher layer than that. Accordingly, in the case of LoD[0], LoD[0] = resi[0] may be set without generating a predicted value from a higher layer.

### (Configuration example)

FIG. 73 is a diagram illustrating one example of the configuration of the encoding device according to the embodiment. FIG. 74 is a flowchart illustrating one example of an encoding method performed by the encoding device.

Encoding device 1450 includes circuit 1451 and memory 1452 connected to circuit 1451. Encoding device 1450 is a device that implements encoding device 1400.

Circuit 1451 performs the following operations.

Circuit 1451 encodes a displacement vector as a sample of a rectangular region in a picture (S1451). The displacement vector corresponds to a vertex of a mesh. Circuit 1451 generates a bitstream including the sample encoded and a location information item indicating a location of the rectangular region in the picture (S1452). The location information item is associated with a layer (to which the vertex of the mesh is belonging) corresponding to the rectangular region.

With this, since a bitstream is generated that includes the sample obtained by encoding the displacement vector and the location information item indicating the location of the rectangular region in the picture, the decoding device can be informed of the location of the sample in the picture. Accordingly, a bitstream can be generated that allows the decoding device to correctly decode the displacement vector of a desired sample in the picture based on the location information item.

For example, the location information item indicates a location of a top left corner of the rectangular region. Accordingly, the decoding device can be informed of a specific location of the rectangular region.

For example, the bitstream further includes a size of the rectangular region. Accordingly, the decoding device can be informed of the rectangular region in which the sample is arranged in the picture.

For example, the size includes a width and a height of the rectangular region. Accordingly, the decoding device can be informed of the rectangular region in which the sample is arranged in the picture.

For example, the bitstream includes identification information for identifying the layer. Accordingly, the decoding device can be informed of the layer to which the sample corresponds.

Note that the identification information may be the identifier of the layer itself, or may be information capable of identifying the identifier of the layer or the layer (the number of subdivision iterations).

For example, the picture has a plurality of rectangular regions including the rectangular region. The plurality of rectangular regions correspond to a plurality of layers. The plurality of layers include the layer. Moreover, for example, the bitstream includes a plurality of location information items including the location information item. The plurality of location information items indicate locations of the plurality of rectangular regions. Accordingly, the decoding device can be informed of the layers to which the samples correspond and the locations of the rectangular regions.

For example, the bitstream includes a plurality of sizes including the size. The plurality of sizes correspond to the plurality of rectangular regions. Accordingly, the decoding device can be informed of the rectangular regions in which the samples are arranged in the picture.

For example, the rectangular region includes one or more coding tree units (CTUs) in the picture. Moreover, for example, the rectangular region includes one or more tiles in the picture. Moreover, for example, the rectangular region includes one or more slices in the picture. Moreover, for example, the rectangular region includes one or more sub-pictures in the picture.

FIG. 75 is a diagram illustrating one example of the configuration of the decoding device according to the embodiment. FIG. 76 is a flowchart illustrating one example of a decoding method performed by the decoding device.

Decoding device 1460 includes circuit 1461 and memory 1462 connected to circuit 1461. Decoding device 1460 is a device that implements decoding device 1420.

Circuit 1461 performs the following operations.

Circuit 1461 obtains a bitstream (S1461). Circuit 1461 obtains, from the bitstream, a location information item indicating a location of a rectangular region in a picture (S1462). Circuit 1461 decodes a displacement vector represented by a sample of the rectangular region located by the location information item in the picture (S1463). The displacement vector corresponds to a vertex of a mesh. The location information item is associated with a layer (to which the vertex of the mesh is belonging) corresponding to the rectangular region.

With this, since the location information item indicating the location of the rectangular region in the picture is obtained from the bitstream, the displacement vector of a desired sample in the picture can be correctly decoded based on the location information item.

For example, the location information item indicates a location of a top left corner of the rectangular region. Accordingly, decoding device 1460 can correctly decode the displacement vector of a desired sample based on the specific location of the rectangular region.

For example, the bitstream further includes a size of the rectangular region. Accordingly, decoding device 1460 can identify the rectangular region in which the sample is arranged in the picture, and can correctly decode the displacement vector of a desired sample.

For example, the size includes a width and a height of the rectangular region. Accordingly, decoding device 1460 can identify the rectangular region in which the sample is arranged in the picture, and can correctly decode the displacement vector of a desired sample.

For example, the bitstream includes identification information for identifying the layer. Accordingly, decoding device 1460 can identify the rectangular region corresponding to the layer to which the sample corresponds, and can correctly decode the displacement vector of a desired sample.

Note that the identification information may be the identifier of the layer itself, or may be information capable of identifying the identifier of the layer or the layer (the number of subdivision iterations).

For example, the picture has a plurality of rectangular regions including the rectangular region. The plurality of rectangular regions correspond to a plurality of layers. The plurality of layers include the layer. Moreover, for example, the bitstream includes a plurality of location information items including the location information item. The plurality of location information items indicate locations of the plurality of rectangular regions. Accordingly, decoding device 1460 can identify the layers to which the samples correspond and the locations of the rectangular regions.

For example, the bitstream includes a plurality of sizes including the size. The plurality of sizes correspond to the plurality of rectangular regions. Accordingly, decoding device 1460 can identify the rectangular regions in which the samples are arranged in the picture.

For example, the rectangular region includes one or more coding tree units (CTUs) in the picture. Moreover, for example, the rectangular region includes one or more tiles in the picture. Moreover, for example, the rectangular region includes one or more slices in the picture. Moreover, for example, the rectangular region includes one or more sub-pictures in the picture.

For example, circuit 1461 further determines whether the layer identified by the identification information is lower than or equal to a predetermined layer identified by predetermined identification information. The decoding by circuit 1461 is performed based on a result of determining that the layer identified by the identification information is lower than or equal to the predetermined layer.

Accordingly, decoding device 1460 can decode rectangular regions at or below the predetermined layer. Therefore, the processing load can be reduced.

With the encoding device and the decoding device according to the present disclosure, there is a possibility that the flexibility is provided in the decoding process of displacement data. The complexity of the decoding process may be reduced.

The encoding device and decoding device according to the present disclosure may be implemented by combining at least part of other aspects. Furthermore, the configuration or processing of the encoding device and decoding device according to the present disclosure may be implemented by combining, with other aspects, part of the processing illustrated in any of the flowcharts according to the present aspect, part of the configuration of any of the devices, part of the syntaxes, etc.

The processing by the decoding device according to the present disclosure may be performed similarly also in the encoding device.

In addition, not all the constituent elements described in the present aspect are always necessary, and only some of the constituent elements of the encoding device and the decoding device according to the present disclosure may be included.

### [Industrial Applicability]

The present disclosure is useful in, for example, an encoding device, a decoding device, a transmitting device, a receiving device, and the like related to a three-dimensional mesh and can be applied to a computer graphics system, a three-dimensional data display system, and the like.

### [Reference Signs List]

100 encoding device
101, 121, 144 vertex information encoder
102, 145 connection information encoder
103, 122 attribute information encoder
104, 204, 1103 preprocessor
105, 205, 2106 postprocessor
110 three-dimensional data encoding system
111, 211 controller
112, 212 input/output processor
113 three-dimensional data encoder
114 system multiplexer
115 three-dimensional data generator
123 metadata encoder
124 multiplexer
131 vertex image generator
132 attribute image generator
133 metadata generator
134 video encoder
141 two-dimensional data encoder
142 mesh data encoder
143 texture encoder
148 description encoder
151, 251 circuit
152, 252 memory
200 decoding device
201, 221, 244 vertex information decoder
202, 245 connection information decoder
203, 222 attribute information decoder
210 three-dimensional data decoding system
213 three-dimensional data decoder
214 system demultiplexer
215, 247 presenter
216 user interface
223 metadata decoder
224 demultiplexer
231 vertex information generator
232 attribute information generator
234 video decoder
241 two-dimensional data decoder
242 mesh data decoder
243 texture decoder
246 mesh reconstructor
248 description decoder
300 network
310 external connector
613 base mesh decoder
614 displacement decoder
615 attribute decoder
616 decoder of other type
617 three-dimensional reconstructor
631 frame header decoder
632 vertex geometry coordinate predictor
633 vertex geometry coordinate difference decoder
634 reconstructor
1231 demultiplexer
1232 switch
1233 static mesh decoder
1234 mesh buffer
1235 motion decoder
1236 base mesh reconstructor
1237 inverse quantizer
1238, 1243 video decoder
1239 image unpacker
1240 inverse quantizer
1241 inverse wavelet transformer
1242 reconstructor
1244 color converter
1251 decoded base mesh
1252 subdivider
1253 subdivided mesh
1254 decoded displacement data
1255 displacer
1256 decoded 3D mesh
1400 encoding device
1401 input mesh
1402 submesh
1403, 1426 attribute map
1404 pre-processor
1405, 1423 base mesh
1406, 1424 displacement data
1407, 1425 metadata
1408 compressor
1409, 1421, 1431 bitstream
1411 base mesh generator
1412 subdivider
1413 displacement generator
1420 decoding device
1422 decompressor
1427 post-processor
1428 merged submeshes
1429 output mesh
1432 decoder
1433 post-decoder
1434 pre-reconstructor
1435 reconstructor
1436 post-reconstructor
1437 adaptor
1438 final 3D mesh frame
1440 to 1442, 1447, 1447a picture
1445 predetermined LoD index
1450 encoding device
1451, 1461 circuit
1452, 1462 memory
1460 decoding device
4801, 5701, 11001 decimator
4802, 5702, 11002 subdivider
4803, 5703, 11003 displacement vector calculator
4804, 5704, 11004 wavelet transformer
4805 inter predictor
4806, 5706, 11006 quantizer
4807, 5708, 11008 image packer
4808, 5709, 11009 video encoder
4811, 5003, 5711, 5805, 11011i nverse quantizer
4812, 5004, 5006, 5712, 5806, 5808, 11012 reconstructor
4813, 5713, 11013, 5811 reference buffer
5001, 5801, 11021 video decoder
5002, 5802, 11022 image unpacker
5005, 5807 inverse wavelet transformer
5705, 11005 LoD-based inter predictor
5707, 5804, 11007, 11024 switch
5710, 11010 arithmetic encoder
5803, 11023 arithmetic decoder

## Claims

1. An encoding method that is performed by an encoding device, the encoding method comprising:
encoding a displacement vector as a sample of a rectangular region in a picture; and
generating a bitstream including the sample encoded and a location information item indicating a location of the rectangular region in the picture, wherein
the location information item is associated with a layer corresponding to the rectangular region.

2. The encoding method according to claim 1, wherein
the location information item indicates a location of a top left corner of the rectangular region.

3. The encoding method according to claim 1, wherein
the bitstream further includes a size of the rectangular region.

4. The encoding method according to claim 3, wherein
the size includes a width and a height of the rectangular region.

5. The encoding method according to any one of claims 1 to 4, wherein
the bitstream further includes identification information for identifying the layer.

6. The encoding method according to claim 3, wherein
the picture has a plurality of rectangular regions including the rectangular region,
the plurality of rectangular regions correspond to a plurality of layers, and
the plurality of layers include the layer.

7. The encoding method according to claim 6, wherein
the bitstream includes a plurality of location information items including the location information item, and
the plurality of location information items indicate locations of the plurality of rectangular regions.

8. The encoding method according to claim 6 or 7, wherein
the bitstream includes a plurality of sizes including the size, and
the plurality of sizes correspond to the plurality of rectangular regions.

9. The encoding method according to any one of claims 1 to 4, wherein
the rectangular region includes one or more coding tree units (CTUs) in the picture.

10. The encoding method according to any one of claims 1 to 4, wherein
the rectangular region includes one or more tiles in the picture.

11. The encoding method according to any one of claims 1 to 4, wherein
the rectangular region includes one or more slices in the picture.

12. The encoding method according to any one of claims 1 to 4, wherein
the rectangular region includes one or more sub-pictures in the picture.

13. A decoding method that is performed by a decoding device, the decoding method comprising:
obtaining a bitstream;
obtaining, from the bitstream, a location information item indicating a location of a rectangular region in a picture; and
decoding a displacement vector represented by a sample of the rectangular region located by the location information item in the picture, wherein
the location information item is associated with a layer corresponding to the rectangular region.

14. The decoding method according to claim 13, wherein
the location information item indicates a location of a top left corner of the rectangular region.

15. The decoding method according to claim 13, wherein
the bitstream further includes a size of the rectangular region.

16. The decoding method according to claim 15, wherein
the size includes a width and a height of the rectangular region.

17. The decoding method according to any one of claims 13 to 16, wherein
the bitstream further includes identification information for identifying the layer.

18. The decoding method according to claim 15, wherein
the picture has a plurality of rectangular regions including the rectangular region,
the plurality of rectangular regions correspond to a plurality of layers, and
the plurality of layers include the layer.

19. The decoding method according to claim 18, wherein
the bitstream includes a plurality of location information items including the location information item, and
the plurality of location information items indicate locations of the plurality of rectangular regions.

20. The decoding method according to claim 18 or 19, wherein
the bitstream includes a plurality of sizes including the size, and
the plurality of sizes correspond to the plurality of rectangular regions.

21. The decoding method according to any one of claims 13 to 16, wherein
the rectangular region includes one or more coding tree units (CTUs) in the picture.

22. The decoding method according to any one of claims 13 to 16, wherein
the rectangular region includes one or more tiles in the picture.

23. The decoding method according to any one of claims 13 to 16, wherein
the rectangular region includes one or more slices in the picture.

24. The decoding method according to any one of claims 13 to 16, wherein
the rectangular region includes one or more sub-pictures in the picture.

25. The decoding method according to claim 17, further comprising:
determining whether the layer identified by the identification information is lower than or equal to a predetermined layer identified by predetermined identification information, wherein
the decoding is performed based on a result of determining that the layer identified by the identification information is lower than or equal to the predetermined layer.

26. An encoding device comprising:
a circuit; and
memory connected to the circuit, wherein
in operation, the circuit:
encodes a displacement vector as a sample of a rectangular region in a picture; and
generates a bitstream including the sample encoded and a location information item indicating a location of the rectangular region in the picture, and
the location information item is associated with a layer corresponding to the rectangular region.

27. A decoding device comprising:
a circuit; and
memory connected to the circuit, wherein
in operation, the circuit:
obtains a bitstream;
obtains, from the bitstream, a location information item indicating a location of a rectangular region in a picture; and
decodes a displacement vector represented by a sample of the rectangular region located by the location information item in the picture, and
the location information item is associated with a layer corresponding to the rectangular region.
